(19) **Europäisches Patentamt**
**European Patent Office**
**Office européen des brevets**

(11) **EP 4 597 921 A1**

(12) **EUROPEAN PATENT APPLICATION**
published in accordance with Art. 153(4) EPC

(43) Date of publication:
**06.08.2025 Bulletin 2025/32**

(21) Application number: **23871655.9**

(22) Date of filing: **29.08.2023**

(51) International Patent Classification (IPC):
***H04L 9/14*** (2006.01)    ***G06F 21/60*** (2013.01)

(52) Cooperative Patent Classification (CPC):
**G06F 21/60; H04L 9/14**

(86) International application number:
**PCT/JP2023/031253**

(87) International publication number:
**WO 2024/070414 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 JP 2022156125**

(71) Applicant: **NTI, Inc.**
**Yokkaichi-shi**
**Mie 510-8021 (JP)**

(72) Inventor: **NAKAMURA, Takatoshi**
**Yokkaichi-shi, Mie 510-8021 (JP)**

(74) Representative: **Gill Jennings & Every LLP**
**The Broadgate Tower**
**20 Primrose Street**
**London EC2A 2ES (GB)**

(54) **COMMUNICATION SYSTEM, FIRST COMMUNICATION DEVICE, SECOND COMMUNICATION DEVICE, AND COMMUNICATION METHOD**

(57) To securely and easily share shared data between two communication devices which execute encrypted communication, a first communication device encrypts the shared data into first encrypted data (Step S503), and transmits the first encrypted data to a second communication device by using a first path on a network (Step S504). The second communication device receives the first encrypted data (Step S601), further encrypts the first encrypted data into second/first encrypted data (Step S602), and transmits the second/first encrypted data to the first communication device by using a second path (Step S603). The first communication device receives the second/first encrypted data (Step S505), executes an inverse transformation on the second/first encrypted data to obtain second encrypted data (Step S506), and transmits the second encrypted data to the second communication device by using a third path (Step S507). The second communication device receives the second encrypted data (Step S604), and executes an inverse transformation on the second encrypted data to turn the second encrypted data back into the shared data (Step S605). The first path and the second path do not overlap.

FIG. 5

## Description

## Technical Field

The present invention relates to a communication technology, and more particularly, to an encrypted communication technology.

## Background Art

There are cases in which it is desired to share certain information securely, that is, without fear of tapping by a third party, between two communication devices that can communicate to and from each other. Such information may be a text containing confidential content to be transmitted from one of the two communication devices to another one of the two communication devices. Further, an encrypted communication technology is commonly used even for communication between two communication devices that are not likely to be tapped by a third party. In the encrypted communication technology, for example, even when the algorithm used for encryption or decryption processing is the same for both communication devices, both communication devices are required to share the key used for the encryption or decryption processing, and hence there are cases in which the above-mentioned information that is to be shared securely between the two communication device is the key itself or is information for, for example, generating or selecting a key common to both communication devices.

When two communication devices located far apart execute encrypted communication, and in particular when the two communication devices execute common key type encrypted communication by using a common algorithm and a common key, the two communication devices are required to share the same key in advance, or the two communication devices are required to share the same information for individually generating the same key before executing the common key type encrypted communication.

That is, in order for two communication devices located far apart to execute common key type encrypted communication, in principle it is required that the two communication devices share some kind of information which is the same. However, it is extremely difficult for communication devices located at two distant locations to share a common key. For example, when the key can be transmitted from one of the communication devices to another one of the communication devices without the possibility of being tapped by a third party, encrypted communication has already been established at that point. This is a contradiction.

It is difficult to securely create, before encrypted communication is executed, a state in which two communication devices share a common key (or some information). This problem is sometimes referred to as the "key distribution problem," which hitherto has been widely known.

As a technology for solving the key distribution problem, there is known a public key type encrypted communication technology, in which encrypted communication is executed by using a pair of two keys, that is, a private key and a public key. In the public key type encrypted communication technology, a public key that may be known to a third party is transmitted from one communication device to another communication device, and encrypted communication is executed by the another communication device using the received public key and the one communication device using a private key, which is paired with the public key and is only known by the one communication device.

When the public key type encrypted communication technology was introduced, the general consensus around the world was that, in the public key type encrypted communication technology, the key distribution problem would not exist because there would not be a problem even when the public key was stolen by a malicious third party. However, vulnerabilities have since been discovered even in the public key type encrypted communication technology, and the current general consensus around the world is that even the public key type encrypted communication technology does not solve the key distribution problem.

However, in view of the point that the public key type encrypted communication technology is currently the most practical technology, the current mainstream encrypted communication technology is to share a common key between two communication devices by executing the public key type encrypted communication technology, and then use the same shared common key to execute common key type encrypted communication between the two communication devices. For example, the secure sockets layer (SSL) technology is an encrypted communication technology which adopts such a principle.

In view of such circumstances of recent years, the inventor of the present application made an invention that can solve the key distribution problem and filed a patent application for the invention in the past. The invention in the patent application relates to the following encryption technology.

This encryption technology executes encrypted communication between two communication devices. The transmission side communication device may be assumed to be a first communication device and the receiving side communication device may be assumed to be a second communication device.

First, the first communication device encrypts shared data, which is data to be shared with the second communication device, to thereby transform the shared data into first encrypted data, and transmits the first encrypted data to the second communication device.

The second communication device further encrypts the received first encrypted data without decrypting the first encrypted data, to thereby transform the first encrypted data into second/first encrypted data. Then, the second communication device transmits the second/first encrypted data to the first communication device.

The first communication device executes a reverse calculation on the received second/first encrypted data, to thereby transform the second/first encrypted data into second encrypted data. The second encrypted data is data that is obtained when only the second communication device has encrypted the shared data. In other words, the first communication device removes the encryption executed by the first communication device from the second/first encrypted data obtained by encrypting the shared data twice. The first communication device then transmits the second encrypted data to the second communication device.

The second communication device executes an inverse transformation on the received second encrypted data. As a result, the second encrypted data is turned back into the shared data. With this configuration, the first communication device and the second communication device share the shared data.

In this encrypted communication, in order to transmit the shared data from the first communication device to the second communication device, the data makes one and a half round trips between the two devices. During that time, the shared data is encrypted twice, and the twice-executed encryption is decrypted by two inverse transformations.

When the shared data in a plaintext state which will be encrypted by the first communication device is represented by P, the data after being transformed by the first communication device executing the calculation for encryption on P is expressed as "P×A." The first encrypted data "P×A" is further encrypted by the second communication device. That is, the first encrypted data "P×A" is further (doubly) encrypted by the second communication device. Second/first encrypted data, which is the data after being transformed by the calculation for encryption, is expressed as "(P×A)×B." The second/first encrypted data "(P×A)×B" is transmitted from the second communication device to the first communication device.

The first communication device executes an inverse transformation of the transformation previously executed by the first communication device, that is, the first communication device executes decryption processing. When the decryption processing executed by the first communication device is expressed as ×A⁻¹, then the calculation executed by the first communication device on the second/first encrypted data "(P×A)×B" can be expressed as "((P×A)×B)×A⁻¹." The data that is obtained as a result is second encrypted data, which as described above is data obtained by encrypting the shared data only by the second communication device. Thus, in line with the notation used above, this data can be expressed "P×B." That is, in order for the above-mentioned transformation to hold true, the relationship "((P×A)×B)×A⁻¹=P×B" is required to hold.

Here, it is assumed that the data obtained by the calculation P×A×A⁻¹ or P×B×B⁻¹ is the original data P itself without any calculations having been executed thereon. In other words, the calculation P×A×A⁻¹ or P×B×B⁻¹ means that the original data P is encrypted, and then decrypted and turned back into the original data P.

Under such assumptions, in order for ((P×A)×B)×A⁻¹=P×B to hold, ((P×A)×B)×A⁻¹ is required to be transformed as follows.

$$( (P×A)×B)×A^{-1}$$
$$→(P×(A×B))×A^{-1}$$
$$→(P×(B×A))×A^{-1}$$
$$→((P×B)×A)×A^{-1}$$
$$→(P×B)×(A×A^{-1})$$
$$→P×B$$

That is, it is required that the encryption and the decryption executed by the first communication device and the encryption and the decryption executed by the second communication device can, as described above, switch the order of the calculations ×A and ×B. Further, in the above-mentioned calculations, P×(B×A) and (P×B)×A are required to be equivalent. That is, it is required that in each of the encryption and the decryption (or calculations executed for such encryption and decryption) executed by the first communication device and the encryption and the decryption (or calculations executed for such encryption and decryption) executed by the second communication device, when the calculations are expressed as "×" and the target of the calculations are expressed as "F," "G," and "H," the commutative law in which "F×G=G×F," and the associative law in which "(F×G)×H=F×(G×H)," both hold.

Examples of calculations which satisfy the above-mentioned condition include barrel shift, the four arithmetic operations, certain elliptic cryptography operations, and exclusive OR operations. Therefore, it is required that the calculation for encryption and the reverse calculation thereof which are executed by the first communication device and the second communication device satisfy both of the commutative law and the associative law as described above. However, when this condition is satisfied, the calculations executed by the first communication device and the second communication device are the calculation "×A" for encryption and the calculation "×A⁻¹" being the inverse transformation thereof, and the calculation "×B" for encryption and the inverse transformation thereof "×B⁻¹," respectively, which are calculations that can be unrelated to each other. That is, it is not required to share a key or any other information in advance between the first communication device and the second communication device before the first communication device executes the calculations "$\times A$" and "$\times A^{-1}$" and the second communication device executes the calculations "$\times B$" and "$\times B^{-1}$."

The second encrypted data "$P \times B$" created by the first communication device is transmitted from the first communication device to the second communication device to be turned back into the shared data P by the second communication device. The second communication device can execute an inverse transformation of $(P \times B) \times B^{-1}$ on the second encrypted data "$P \times B$" to turn the second encrypted data "$P \times B$" back into P. As a result, the shared data P that existed only in the first communication device is shared between the first communication device and the second communication device.

The encrypted communication technology described above does not require the first communication device and the second communication device to share in advance a key or any other information before executing encrypted communication, and thus is unrelated to the key distribution problem. This encrypted communication technology can be applied, for example, to the sharing of a key (or some sort of information for generating a common key) between two communication devices before executing common key type encrypted communication, and can be a replacement for public key type encrypted communication.

As a matter of course, the encrypted communication technology described above can also be applied when information other than on a key (or some sort of information for generating a common key) is shared between the first communication device and the second communication device.

**Citation List**

**Patent Literature**

[PTL 1] JP 2018-174485 A

**Summary of Invention**

**Technical Problem**

However, as a result of further research by the inventor of the present application, a few vulnerabilities have been found in the encrypted communication technology described above, which was thought to be a potential replacement for public key type encrypted communication. Those vulnerabilities are as follows.

In the encrypted communication technology described above, first, the first encrypted data, which is represented by "$P \times A$" using the above-mentioned expression, is transmitted from the first communication device to the second communication device. Then, the second encrypted data "$(P \times A) \times B$" is transmitted from the second communication device to the first communication device. Both of those pieces of data are encrypted data, and hence even when those pieces of data are stolen by a third party, those pieces of data cannot be misused in nature.

However, problems may arise when both of those pieces of data are obtained by a third party. For example, in a case in which the calculation for encryption and the reverse calculation thereof which are executed by the first communication device and the second communication device are calculations executing an exclusive OR, a third party who has obtained both of the first encrypted data "$P \times A$" and the second/first encrypted data "$(P \times A) \times B$" can extract the data "B" by executing an exclusive OR operation on the second/first encrypted data "$(P \times A) \times B$" and the first encrypted data "$P \times A$." When this data is stolen by a malicious third party, this means that the encryption and decryption processing executed by the second communication device is leaked to the third party. This alone can cause problems.

In addition, in a case in which the contents of data B have become known to a malicious third party, and the malicious third party further obtains the second encrypted data "$P \times B$" transmitted from the first communication device to the second communication device, the malicious third party can extract the data P, that is, the shared data, by executing an exclusive OR operation by using the second encrypted data "$P \times B$" and the data B.

This means that the worst case scenario has occurred, namely, the shared data that is intended to be transmitted from the first communication device to the second communication device, or is intended to be secretly shared between both of the communication devices, has been stolen by a malicious third party.

That is, when all three pieces of data are stolen by a third party, namely, the first encrypted data transmitted from the first communication device to the second communication device, the second/first encrypted data transmitted from the second communication device to the first communication device, and the second encrypted data transmitted from the first communication device to the second communication device, even though all three pieces of data are encrypted data, the shared data, which is the original plaintext data that is not intended to be known to a third party, becomes known to the third party.

The present invention has an object to improve the above-mentioned encrypted communication technology, which can be a replacement for public key type encrypted communication, so as to eliminate the above-mentioned vulnerabilities.

**Solution to Problem**

As a result of further research by the inventor of the present application in order to eliminate the above-mentioned vulnerabilities in the above-mentioned encrypted communication technology that may become a replacement for public key type encrypted communication, the inventor of the present application has learned that the above-mentioned vulnerabilities become a problem only when all three pieces of encrypted data, namely, the first encrypted data transmitted from the first communication device to the second communication device, the second/first encrypted data transmitted from the second communication device to the first communication device, and the second encrypted data transmitted from first communication device to the second communication device, fall into the hands of a malicious third party. That is, the inventor of the present application has gained the knowledge that unless all of the first encrypted data, the second/first encrypted data, and the second encrypted data fall into the hands of the same malicious third party, the above-mentioned vulnerabilities in the above-mentioned encrypted communication technology are not manifested.

The present invention has been made based on such knowledge.

The above-mentioned encrypted communication technology without vulnerabilities can thoroughly become a replacement for public key type encrypted communication. Moreover, it is known that vulnerabilities exist in public key type encrypted communication, and hence the encrypted communication technology that is proposed by the inventor of the present application and overcomes the above-mentioned vulnerabilities can not only replace the public key type encrypted communication technology, but this encrypted communication technology can become an encrypted communication technology that solves the key distribution problem.

The present invention for solving the above-mentioned problem is described below. However, the present invention can be broadly divided into two technical ideas. For convenience, the invention focusing on one of those two technical ideas is referred to as "first invention," and the invention focusing on another one of those two technical ideas is referred to as "second invention."

First, description of the first invention is given.

The first invention is a communication system including a first communication device being one of two communication devices that communicate to and from each other, and a second communication device being another one of the two communication devices.

The first communication device and the second communication device may each be a computer device operated by a user (for example, a cell phone, a smartphone, a tablet computer, a laptop personal computer, a desktop personal computer, and the like). The first communication device and the second communication device may each be a chip, a card, or the like such as a subscriber identity module (SIM) or an IC card (for example, "Suica" (trademark) issued by East Japan Railway Company and others). Further, the first communication device and the second communication device may each be a communication device that is not directly operated by the user during normal communication, such as a router or a switch, or may further be a device having a communication function which constitutes an "Internet of Things" (IoT) (that is, may be a "Thing" in the Internet of Things).

The first communication device includes: a first encryptor which executes a transformation for encryption which satisfies the commutative law and the associative law; a first decryptor which executes an inverse transformation of the encryption executed by the first encryptor; and a first communicator which communicates to and from the second communication device via a predetermined network. Further, the second communication device includes: a second encryptor which executes a transformation for encryption which satisfies the commutative law and the associative law; a second decryptor which executes an inverse transformation of the encryption executed by the second encryptor; and a second communicator which communicates to and from the first communication device via the network.

The first communication device is configured to execute, by the first encryptor, a transformation for encryption of plaintext shared data which is data to be shared with the second communication device into first encrypted data, and to transmit, by the first communicator, the first encrypted data to the second communication device via the network. The second communication device is configured to execute, by the second encryptor, when the first encrypted data is received by the second communicator from the first communication device, a transformation for encryption of the first encrypted data into second/first encrypted data, and to transmit, by the second communicator, the second/first encrypted data to the first communication device via the network. The first communication device is configured to execute, by the first decryptor, when the second/first encrypted data is received by the first communicator from the second communication device, an inverse transformation of the transformation for encryption executed by the first encryptor on the second/first encrypted data to transform the second/first encrypted data into second encrypted data, and to transmit, by the first communicator, the second encrypted data to the second communication device via the network. The second communication device is configured to execute, by the second decryptor, when the second encrypted data is received by the second communicator from the first communication device, an inverse transformation of the transformation for encryption executed by the second encryptor on the second encrypted data to transform the second encrypted data into the shared data.

Further, the first communication device and the second communication device are configured to set a first path which is a path on the network when the first communication device transmits the first encrypted data to the second communication device, a second path which is a path on the network when the second communication device transmits the second/first encrypted data to the first communication device, and a third path which is a path on the network when the first communication device transmits the second encrypted data to the second communication device, so that the second path and at least one of the first path or the third path do not overlap except at a start point and an end point of two paths to be compared among the first path, the second path, and the third path.

First, description is given of definitions.

In the present application, encryption is executed on plaintext shared data, but the encrypted shared data may be subjected to further encryption processing. For example, in the case of the above-mentioned invention, as a result of the encryption processing executed on the shared data by the first encryptor of the first communication device, the plaintext shared data is transformed into first encrypted data. Further, as a result of the encryption processing executed on the first encrypted data by the second encryptor of the second communication device, the first encrypted data is transformed into second/first encrypted data. In the present application, in a case in which the word "first" or the word "second" is added before the term "encrypted data," when the word "first" is added before the term "encrypted data," this means shared data encrypted by the first communication device, and when the word "second" is added before the term "encrypted data," this means the shared data encrypted by the second communication device. In addition, in the present application, when both of the words "first" and "second" are added before the term "encrypted data," like in the case "second/first encrypted data," this means shared data encrypted by both of the first communication device and the second communication device, in which encryption by the communication device corresponding to the following word (that is, in the above-mentioned case, the first communication device) out of the words "first" and "second" is executed first, and then encryption by the communication device corresponding to the preceding word (that is, in the above-mentioned case, the second communication device) out of the words "first" and "second" is executed.

The above-mentioned communication system of the first invention includes the first communication device and the second communication device, which are communication devices that communicate to and from each other. The communication system may include more communication devices, but among those communication devices, the two communication devices which communicate to and from each other are referred to as "first communication device" and "second communication device" in the present invention. The communication between the first communication device and the second communication device may be executed by using a network, but the communication method is not limited to this. The network includes at least one of the Internet (including Internet VPN; hereinafter the same) or a line other than the Internet. Examples of a line other than the Internet include a communication carrier line, a global IP-assigned IP-VPN, a private network, a short message service (SMS), and a multimedia message services (MMS), and a plurality of lines out of such lines may be used.

The first communication device includes the first encryptor which executes encryption processing, and the first decryptor which can execute the processing that is the reverse of the encryption processing executed by the first encryptor, that is, decryption processing. Similarly, the second communication device includes the second encryptor which executes encryption processing, and the second decryptor which can perform processing that is the reverse of the encryption processing executed by the second encryptor, that is, decryption processing. Both of the encryption processing executed by the first encryptor and the second encryptor and the inverse transformation processing of the encryption processing executed by the first decryptor and the second decryptor satisfy both of the commutative law and the associative law. The commutative law and the associative law have already been discussed in the section "Background Art."

In the present invention, the data to be shared between those two communication devices, that is, the first communication device and the second communication device, is referred to as "shared data." The shared data is plaintext data. However, the shared data is not required to be meaningful data. For example, the shared data may be a suitable string of characters, numbers, and the like, such as a common key used when encrypted communication is executed between the first communication device and the second communication device. That is, the encrypted communication executed by the first communication device and the second communication device in the present invention may be used for key distribution. As a matter of course, the encrypted communication executed by the first communication device and the second communication device in the present invention may be used for another purpose.

In the communication system according to the present application, the method used to share the shared data to be executed is very simple. In the present invention, of two communication devices, the communication device which has shared data first, in other words, the communication device which provides shared data to another communication device, is referred to as "first communication device," and another one of the two communication devices is referred to as "second communication device." Therefore, the communication device which is the first communication device in a certain communication may become the second communication device in another communication, and vice versa.

In the present invention, when shared data is shared between the first communication device and the second communication device, the shared data is first encrypted by the first encryptor of the first communication device, and is transformed into first encrypted data. The first encrypted data is transmitted from the first communication device to the second communication device. Even when the first encrypted data is transmitted over a network such as the Internet, the first encrypted data is encrypted data, and hence as long as the encryption processing executed by the first encryptor is strong and secure, even when only the first encrypted data is acquired by a third party, the shared data is basically secure, and it is unlikely that a third party can discover the contents of the shared data.

The second communication device receives the first encrypted data. The second communication device uses the second encryptor included therein to execute further encryption processing on the first encrypted data, to thereby change the first encrypted data into second/first encrypted data. The second/first encrypted data is transmitted from the second communication device to the first communication device. Even when the second/first encrypted data is transmitted over a network such as the Internet, the second/first encrypted data is encrypted data, or even more so, is data that has been encrypted twice by the first encryptor and the second encryptor, and hence as long as the encryption processing executed by the first encryptor and the second encryptor is strong and secure, even when only the second/first encrypted data is acquired by a third party, the shared data is basically secure, and it is unlikely that a third party can discover the contents of the shared data.

The first communication device receives the second/first encrypted data. The first communication device uses the first encryptor included therein to execute decryption processing on the second/first encrypted data. This decryption processing is an inverse transformation of the transformation executed for encryption by the first encryptor. As a result, the second/first encrypted data is transformed into second encrypted data. The second encrypted data is the same data as the data encrypted by encrypting the shared data by using the second encryptor. This second encrypted data is transmitted from the first communication device to the second communication device. Even when the second encrypted data is transmitted over a network such as the Internet, the second encrypted data is encrypted data, and hence as long as the encryption processing executed by the second encryptor is strong and secure, even when only the second encrypted data is acquired by a third party, or even when only the first encrypted data and the second encrypted data are acquired by a third party, the shared data is basically secure, and it is unlikely that a third party can discover the contents of the shared data.

The second communication device receives the second encrypted data. The second communication device uses the second decryptor included therein to execute decryption processing on the second encrypted data. Such decryption processing is an inverse transformation of the transformation executed for encryption by the second encryptor. As a result, the second encrypted data is turned back into the plaintext shared data.

As a result of the above, the plaintext shared data is shared between the first communication device and the second communication device. Moreover, when the shared data is transmitted between the first communication device and the second communication device, the shared data is not in a plaintext state, but is in a state of any one of first encrypted data, second/first encrypted data, or second encrypted data, and thus in all cases the shared data is in an encrypted state. Therefore, in this communication system, shared data can be securely shared between a first communication device and a second communication device based on very simple processing, that is, the first communication device executes simple processing including encryption processing using a first encryptor and decryption processing using a first decryptor, the second communication device executes simple processing including encryption processing using a second encryptor and decryption processing using a second decryptor, and the shared data makes one and a half round trips in an encrypted state between the first communication device and the second communication device. Moreover, when such encrypted communication is executed, the encryption processing and the decryption processing executed by the first communication device and the second communication device can be performed independently of the communication device of the opposite party, and hence it is not required to transmit a key from one communication device to another communication device in advance of executing encrypted communication. Therefore, the encrypted communication executed by using the communication system of the present invention is free from the key distribution problem.

In addition, the first communication device and the second communication device are configured to set a first path which is a path on the network when the first communication device transmits the first encrypted data to the second communication device, a second path which is a path on the network when the second communication device transmits the second/first encrypted data to the first communication device, and a third path which is a path on the network when the first communication device transmits the second encrypted data to the second communication device, so that the second path and at least one of the first path or the third path do not overlap except at a start point and an end point of the two paths to be compared. As used herein, "two paths to be compared" means "the second path and the first path" or "the second path and the third path."

Further, examples of cases in which the second path and at least one of the first path or the third path do not overlap except at the start point and the end point include: (1) a case in which the first path and the second path overlap, but the third path does not overlap the second path; (2) a case in which the third path and the second path overlap, but the first path does not overlap the second path; (3) a case in which the second path does not overlap the first path and the third path, but the first path and the third path overlap; and (4) a case in which the second path does not overlap the first path and the third path, and the first path and the third path do not overlap.

Effects of setting so as not to overlap at least one of the path on the network through which the first encrypted data and the second/first encrypted data pass (that is, the first path and the second path) or the path on the network through which the second/first encrypted data and the second encrypted data pass (that is, the second path and the third path) except at the start point and end point of the two paths are as follows.

A malicious third party who is trying to illegitimately obtain data that is being transmitted typically tries to obtain data that is being transmitted over the network at a predetermined location on the network. In a case in which at least one of the first path and the second path, or the second path and the third path, does not overlap except at the start point and the end point of the two paths, when the first path and the second path do not overlap, the malicious third party who is waiting at the location on the network cannot obtain both of the first encrypted data and the second/first encrypted data, and when the second path and the third path do not overlap, the malicious third party who is waiting at the location on the network cannot obtain both of the second/first encrypted data and the second encrypted data. Therefore, in the present invention, an attempt by a malicious third party to commit fraud by obtaining all of the first encrypted data, the second/first encrypted data, and the second encrypted data does not work, and thus the encrypted communication in the communication system of the present invention practically eliminates the vulnerability that existed in the related art with respect to fraud performed by obtaining all of the first encrypted data, the second/first encrypted data, and the second encrypted data.

In addition, in the present application, the "start point of the two paths (to be compared)" means, in the case of transmission from the first communication device to the second communication device, a communication component that is accessed first by the first communication device among a large number of communication components in the path from the first communication device to the second communication device, and in the case of transmission from the second communication device to the first communication device, a communication component that is accessed first by the second communication device among the large number of communication components in the path from the second communication device to the first communication device. In addition, in the present application, the "end point of the two paths" means, in the case of transmission from the first communication device to the second communication device, a communication component that accesses the second communication device among the large number of communication components in the path from the first communication device to the second communication device, and in the case of transmission from the second communication device to the first communication device, a communication component that accesses the first communication device among the large number of communication components in the path from the second communication device to the first communication device.

In addition, in the case of making setting such that "at least one of the first path and the second path, or the second path and the third path, does not overlap anywhere over the entire length of the two paths," as a matter of course, the condition that "at least one of the first path and the second path, or the second path and the third path, does not overlap except at the start point and the end point of the two paths" is also satisfied.

As described above, the encryption and the decryption (inverse transformation) executed by the first encryptor and the first decryptor of the first communication device, and the encryption and the decryption (inverse transformation) executed by the second encryptor and the second decryptor of the second communication device, are required to satisfy the commutative law and the associative law.

Examples of such calculations include barrel shift, the four arithmetic operations, certain elliptic cryptography operations, and exclusive OR operations.

When an exclusive OR operation is used for the encryption and the decryption (inverse transformation) executed by the first encryptor and the first decryptor of the first communication device, and the encryption and the decryption (inverse transformation) executed by the second encryptor and the second decryptor of the second communication device, the following effects can be obtained as well.

Cryptographic technologies such as Vernam cipher and one-time pad cipher are known. Thought both of those technologies require several conditions to be satisfied, and it has been mathematically proven that the encryption cannot be deciphered when those conditions are satisfied. Specifically, when a ciphertext is obtained by executing an exclusive OR operation on the plaintext and a key that has the same amount as or more information than that of the plaintext to be encrypted, then when the key is a completely random number and the ciphertext is used only once, it has been mathematically proven that it is impossible to decipher the ciphertext.

Therefore, when an exclusive OR operation is used for the encryption and the decryption (inverse transformation) executed by the first encryptor and the first decryptor of the first communication device and the encryption and the decryption (inverse transformation) executed by the second encryptor and the second decryptor of the second communication device, and a completely random number that is similar to the above-mentioned key and that can only be used once is used as the data for executing the exclusive OR operation, it is mathematically impossible to decipher any of the first encrypted data, the second/first encrypted data, and the second encrypted data transmitted on the network just by obtaining those pieces of data alone. Therefore, the only way for a malicious third party to commit fraud by using those three pieces of data is, in practice, to obtain all of the first encrypted data, the second/first encrypted data, and the second encrypted data. Therefore, by making setting such that at least part of the transmission paths of the first encrypted data, the second/first encrypted data, and the second encrypted data do not overlap as already described so that it becomes impossible to obtain all of the first encrypted data, the second/first encrypted data, and the second encrypted data, the encrypted communication executed by the communication system of the present invention becomes, in practice, completely secure.

In the communication system of the first invention, the first communication device and the second communication device may be configured to set the first path, the second path, and the third path so that the first path and the second path do not overlap except at the start point and the end point of the two paths.

In another case, the first communication device and the second communication device may be configured to set the first path, the second path, and the third path so that the third path and the second path do not overlap except at the start point and the end point of the two paths.

When setting is made so that the first path and the second path do not overlap in the communication system of the first invention, the first communication device in the communication system of the present application may include a first path determinator which determines the first path, and the second communication device may include a second path determinator which determines the second path. The third path is determined in a suitable manner. The third path may overlap any one of the first path and the second path. The third path may be determined by the first path determinator.

In that case, the first path determinator may be set in advance so as to determine a predetermined path on the network as the first path, and the second path determinator may be set in advance so as to determine, as the second path, a path which does not overlap the first path on the network except at the start point and the end point of the two paths.

When the first communication device and the second communication device are set in advance so as to determine communication paths that do not overlap, the first path on which the first encrypted data is transmitted and the second path on which the second/first encrypted data is transmitted can be set as communication paths that do not overlap except at the start point and the end point of those two paths. For example, setting in such a manner is, as a matter of course, possible based on a function of a computer program installed in a first communication device and a second communication device, which are both general-purpose computers in terms of hardware, which causes the two computers to function as the first communication device and the second communication device in the communication system of the present application.

In this case, one of the first path and the second path may be a path on an Internet line, and another one of the first path and the second path may be a path on a line other than the Internet. By setting the paths in this way, the line on which the first path is set and the line on which the second path is set are different lines, and thus the first path and the second path are set so as not to overlap except at the start point and the end point of the two paths.

The path on a line other than the Internet may be, for example, any one of a communication carrier line, a global IP-assigned IP-VPN, a private network, a short message service (SMS), and a multimedia message service (MMS).

When setting is made so that the first path and the second path do not overlap in the communication system of the first invention, the first communication device in the communication system of the present invention may include a first path determinator which determines the first path, and the second communication device may include a second path determinator which determines the second path. The third path is determined in a suitable manner. The third path may overlap any one of the first path and the second path. The third path may be determined by the first path determinator.

In this case, the first path determinator may be configured to determine a predetermined path on the network as the first path, the second path determinator may be configured to specify, when the second communication device receives the first encrypted data by the second communicator from the first communication device, the first path and to determine the second path so that the second path does not overlap the specified first path except at the start point and the end point of the two paths, and the second communicator may be configured to transmit the second/first encrypted data to the first communication device via the second path determined by the second path determinator.

In this case, the second path determinator of the second communication device specifies, when the second communication device receives the first encrypted data from the first communication device, the first path on which the first encrypted data has been transmitted by using, for example, the data attached to the first encrypted data, and determines the second path as a path that does not overlap the first path. The second communicator transmits the second/first encrypted data to the first communication device by using the second path, to thereby enable the second/first encrypted data to be transmitted to the first communication device along the second path which does not overlap the first path.

In a case in which the second path determinator is configured to specify, when the second communication device receives the first encrypted data from the first communication device, the first path and determine a path different from the specified first path as the second path, the second path determinator may be configured to determine the second path as described in the following two examples.

First, the second path determinator may be configured to specify, when the first path is the Internet, from data attached to the first encrypted data received by the second communication device, the first path by detecting an IP address of each component through which the first encrypted data has passed from the first communication device to the second communication device, and to determine, as the second path, a path on the Internet from the second communication device to the first communication device which passes only through components which are not included in the first path. In general, when a receiving device receives certain data from a transmission device via the Internet, the receiving device can use data attached to the received data to specify what kind of path the data has traveled along for transmission from the transmission device to the receiving device. For example, by using a publicly-known or well-known technology such as multi-protocol label switching (MPLS), in which high-speed transfer processing is executed by adding short codes called labels to packets or the like within a specific network, it is possible for the device that receives the data to specify the transmission path of the data transmitted over a network from a certain device. With this technology, it is possible to stack labels, which are codes that identify each device through which the data has passed, in the transmitted data, and thus the receiving device can specify the transmission path of the transmitted data by verifying the plurality of labels stacked in the received data. Another technology that can be used to specify the communication path of data received by a receiving device from a transmission device is mobile ad-hoc network (MANET) (dynamic source routing (DSR) is known as a specific applied example of MANET). In addition, when the first path and the second path are formed on different types of communication lines, by grasping which communication line has been used to communicate using the first path, it becomes possible to set the paths so that the first path and the second path do not overlap. However, in some cases, the specification of the communication line used when communication is executed by the first path in such a case can be determined simply by grasping, for example, the type of software and hardware used when communication is executed by the first path.

Therefore, the second path determinator of the second communication device which has received the first encrypted data can specify the first path, which is the path on which the first encrypted data has been transmitted, by using a technology such as MPLS, for example. The second path determinator of the second communication device determines, as the second path, a path on the Internet which does not overlap the specified first path. Examples of known technologies for a transmission source communication device to specify a transmission path on the Internet to a transmission destination communication device are technologies of source routing and segment routing, which is an applied example of source routing, and mobile ad-hoc network (MANET). Through applying such a technology, the second path determinator of the second communication device can determine a second path which does not overlap the first path. As a result, the first encrypted data and the second/first encrypted data can each be transmitted back and forth between the first communication device and the second communication device by using non-overlapping paths on the Internet.

Secondly, the second path determinator may be configured to specify that a line on which the first encrypted data has been transmitted when the second communication device receives the first encrypted data is any one of the Internet, a communication carrier line, a global IP-assigned IP-VPN, a private network, a short message service, and a multimedia message service, and to determine, as the second path, a path on a line different from the line on which the first encrypted data has been transmitted.

In this case, the second path determinator specifies the type of the line used when the second communication device has received the first encrypted data. Further, the second path determinator determines the second path as a path which follows a type of line different from the specified type of line. As a result, when the type of line which the first path follows is different from the type of line which the second path follows, the first path and the second path are naturally paths that do not overlap.

When setting is made so that the first path and the second path do not overlap in the communication system of the first invention, the first communication device may include a first path determinator which determines the first path, and the second communication device may include a second path determinator which determines the second path. The third path is determined in a suitable manner. The third path may overlap any one of the first path and the second path. The third path may be determined by the first path determinator.

In this case, the first path determinator may be configured to determine a predetermined path on the network as the first path and to generate second path information which is data specifying the second path and is attached to the first encrypted data, the second path determinator may be configured to determine, when the second communication device receives the first encrypted data to which the second path information is attached by the second communicator from the first communication device, the second path as a path specified by the second path information attached to the received first encrypted data, and the second communicator may be configured to transmit the second/first encrypted data to the first communication device via the second path determined by the second path determinator.

In this example, the first path determinator of the first communication device determines both of the first path and the second path. The first path determinator determines the first path, and generates second path information, which is data for specifying the second path. The second path information is attached to the first encrypted data and transmitted from the first communication device to the second communication device. The second path determinator of the second communication device determines, based on the second path information, the path specified by the second path information as the second path. As a result, the first path on which the first encrypted data is transmitted and the second path on which the second/first encrypted data is transmitted become non-overlapping paths.

The first path determinator may be configured to specify both of the first path and the second path as paths on the Internet.

Further, the first path determinator may be configured to specify a path on any one of the Internet, a communication carrier line, a global IP-assigned IP-VPN, a private network, a short message service, and a multimedia message service as one of the first path and the second path, and to specify a path on another one of the Internet, a communication carrier line, a global IP-assigned IP-VPN, a private network, a short message service, and a multimedia message service as another one of the first path and the second path.

When setting is made so that the second path and the third path do not overlap in the communication system of the first invention, the first communication device in the communication system of the present application may include a first path determinator which determines the first path and the third path, and the second communication device may include a second path determinator which determines the second path. The first path determinator determines the first path in a suitable manner. The first path may overlap any one of the second path and the third path.

In that case, the first path determinator may be set in advance so as to determine a predetermined path on the network as the third path, and the second path determinator may be set in advance so as to determine, as the second path, a path which does not overlap the third path on the network except at the start point and the end point of the two paths.

When the first communication device and the second communication device are set in advance so as to determine communication paths that do not overlap, the third path on which the second encrypted data is transmitted and the second path on which the second/first encrypted data is transmitted can be set as communication paths that do not overlap except at the start point and the end point of those two paths. For example, even when the first communication device and the second communication device are both general-purpose computers in terms of hardware, as a matter of course, it is possible to cause the first communication device and the second communication device to function so as to set the paths in such a manner based on a function of a computer program installed in the two computers for causing those computers to function as the first communication device and the second communication device in the communication system of the present application.

In this case, one of the second path and the third path may be a path on an Internet line, and another one of the second path and the third path may be a path on a line other than the Internet. By setting the paths in this way, the line on which the second path is set and the line on which the third path is set are different lines, and thus the second path and the third path are set so as not to overlap except at the start point and end point of the two paths.

The path on a line other than the Internet may be, for example, any one of a communication carrier line, a global IP-assigned IP-VPN, a private network, a short message service (SMS), and a multimedia message service (MMS).

When setting is made so that the second path and the third path do not overlap in the communication system of the first invention, the first communication device in the communication system of the present application may include a first path determinator which determines the first path and the third path, and the second communication device may include a second path determinator which determines the second path. The first path determinator determines the first path in a suitable manner. The first path may overlap any one of the second path and the third path.

In this case, the second path determinator may be configured to determine a predetermined path on the network as the second path, the first path determinator may be configured to specify, when the first communication device receives the second/first encrypted data by the first communicator from the second communication device, the second path and to determine the third path so that the third path does not overlap the specified second path except at the start point and the end point of the two paths, and the first communicator may be configured to transmit the second encrypted data to the second communication device via the third path determined by the first path determinator.

In this case, the first path determinator of the first communication device specifies, when the first communication device receives the second/first encrypted data from the second communication device, the second path on which the second encrypted data has been transmitted by using, for example, the data attached to the second/first encrypted data, and determines the third path as a path that does not overlap the second path. The first communicator transmits the second encrypted data to the second communication device by using the third path, to thereby enable the second encrypted data to be transmitted to the second communication device along the third path which does not overlap the second path.

In a case in which the first path determinator is configured to specify, when the first communication device receives the second/first encrypted data from the second communication device, the second path and determine a path different from the specified second path as the third path, the first path determinator may be configured to determine the third path as described in the following two examples.

First, the first path determinator may be configured to specify, when the second path is the Internet, from data attached to the second/first encrypted data received by the first communication device, the second path by detecting an IP address of each component through which the second/first encrypted data has passed from the second communication device to the first communication device, and to determine, as the third path, a path on the Internet from the first communication device to the second communication device which passes only through components which are not included in the second path. In general, when a receiving device receives certain data from a transmission device via the Internet, the receiving device can use data attached to the received data to specify what kind of path the data has traveled along for transmission from the transmission device to the receiving device. Examples of technologies that enable such specification include MPLS and MANET.

Therefore, the first path determinator of the first communication device which has received the second/first encrypted data can specify the second path, which is the path on which the second/first encrypted data has been transmitted, by using MPLS or MANET. The first path determinator of the first communication device determines, as the third path, a path on the Internet which does not overlap the specified second path. Examples of known technologies for a transmission source communication device to specify a transmission path on the Internet to a transmission destination communication device are source routing, segment routing, which is an applied example of source routing, and MANET (or DSR, which is a specific applied example of MANET). Through applying such a technology, the first path determinator of the first communication device can determine a third path which does not overlap the second path. As a result, the second/first encrypted data and the second encrypted data can each be transmitted back and forth between the first communication device and the second communication device by using non-overlapping paths on the Internet.

Secondly, the first path determinator may be configured to specify that a line on which the second/first encrypted data has been transmitted when the first communication device receives the second/first encrypted data is any one of the Internet, a communication carrier line, a global IP-assigned IP-VPN, a private network, a short message service, and a multimedia message service, and to determine, as the third path, a path on a line different from the line on which the second/first encrypted data has been transmitted.

In this case, the first path determinator specifies the type of the line used when the first communication device has received the second/first encrypted data. Further, the first path determinator determines the third path as a path which follows a type of line different from the specified type of line. As a result, when the type of line which the second path follows is different from the type of line which the third path follows, the second path and the third path are naturally paths that do not overlap.

When setting is made so that the second path and the third path do not overlap in the communication system of the first invention, the first communication device may include a first path determinator which determines the first path and the third path, and the second communication device may include a second path determinator which determines the second path. The first path determinator determines the first path in a suitable manner. The first path may overlap any one of the second path and the third path.

In this case, the second path determinator may be configured to determine a predetermined path on the network as the second path and to generate third path information which is data specifying the third path and is attached to the second/first encrypted data, the first path determinator may be configured to determine, when the first communication device receives the second/first encrypted data to which the third path information is attached by the first communicator from the second communication device, the third path as a path specified by the third path information attached to the received second/first encrypted data, and the first communicator may be configured to transmit the second encrypted data to the second communication device via the third path determined by the first path determinator.

In this example, the second path determinator of the second communication device determines both of the second path and the third path. The second path determinator determines the second path, and generates third path information, which is data for specifying the third path. The third path information is attached to the second/first encrypted data and transmitted from the second communication device to the first communication device. The first path determinator of the first communication device determines, based on the third path information, the path specified by the third path information as the third path. As a result, the second path on which the second/first encrypted data is transmitted and the third path on which the second encrypted data is transmitted become non-overlapping paths.

The second path determinator may be configured to specify both of the second path and the third path as paths on the Internet.

Further, the second path determinator may be configured to specify a path on any one of the Internet, a communication carrier line, a global IP-assigned IP-VPN, a private network, a short message service, and a multimedia message service as one of the second path and the third path, and to specify a path on another one of the Internet, a communication carrier line, a global IP-assigned IP-VPN, a private network, a short message service, and a multimedia message service as another one of the second path and the third path.

The inventor of the present application also proposes, as one aspect of the first invention, a method which is executed in the communication system described above. Effects of this method are equivalent to the effects of the communication system.

One example of this method is a communication method which is executed by a communication system including a first communication device being one of two communication devices that communicate to and from each other, and a second communication device being another one of the two communication devices. The first communication device includes: a first encryptor which executes a transformation for encryption which satisfies the commutative law and the associative law; a first decryptor which executes an inverse transformation of the encryption executed by the first encryptor; and a first communicator which communicates to and from the second communication device via a predetermined network. The second communication device includes: a second encryptor which executes a transformation for encryption which satisfies the commutative law and the associative law; a second decryptor which executes an inverse transformation of the encryption executed by the second encryptor; and a second communicator which communicates to and from the first communication device via the network.

This communication method includes: a first step in which the first communication device executes, by the first encryptor, a transformation for encryption of plaintext shared data which is data to be shared with the second communication device into first encrypted data, and transmits, by the first communicator, the first encrypted data to the second communication device via the network; a second step in which the second communication device receives, by the second communicator, the first encrypted data from the first communication device, executes, by the second encryptor, a transformation for encryption of the first encrypted data into second/first encrypted data, and transmits, by the second communicator, the second/first encrypted data to the first communication device via the network; a third step in which the first communication device receives, by the first communicator, the second/first encrypted data from the second communication device, executes, by the first decryptor, an inverse transformation of the transformation for encryption executed by the first encryptor on the second/first encrypted data to transform the second/first encrypted data into second encrypted data, and transmits, by the first communicator, the second encrypted data to the second communication device via the network; and a fourth step in which the second communication device receives, by the second communicator, the second encrypted data from the first communication device, and executes, by the second decryptor, an inverse transformation of the transformation for encryption executed by the second encryptor on the second encrypted data to transform the second encrypted data into the shared data.

Further, in this communication method, the first communication device and the second communication device are configured to set a first path in the first step which is a path on the network when the first communication device transmits the first encrypted data to the second communication device, a second path in the second step which is a path on the network when the second communication device transmits the second/first encrypted data to the first communication device, and a third path in the third step which is a path on the network when the first communication device transmits the second encrypted data to the second communication device, so that the second path and at least one of the first path or the third path do not overlap except at a start point and an end point of two paths to be compared among the first path, the second path, and the third path.

In the communication method of the present invention, the first step to the fourth step may be continuously and automatically executed by the first communication device and the second communication device, but the present invention is not limited thereto.

According to this, the first communication device and the second communication device can securely share the shared data while reducing the time and effort of the user handling the first communication device and the user handling the second communication device.

In SSL communication, when one of two communication devices attempts to communicate to and from another one of the two communication devices, for example, when the user operating a client, which is the one of the two communication devices, designates the URL of a website provided by a server, which is the another one of the two communication devices, on the address bar of a browser installed on the client to try to view the website, before starting SSL communication, which is encrypted communication between the client and the server using a common key, the client and the server automatically execute communication for sharing the common key. Similarly, the first communication device may be configured to automatically execute, when the user performs an operation in order to indicate an intention to start communication to and from the second communication device on the first communication device, for example, all the steps after the processing of executing a transformation for encrypting the shared data into first encrypted data, that is, the first step to the fourth step. With this configuration, the method of the present invention can be replaced, at least in principle, with a technology for sharing a common key at the beginning of SSL communication.

Description of the second invention is now given.

First, an overview of the second invention is described.

In both of the first invention and the second invention, three types of encrypted data, namely, first encrypted data, second/first encrypted data, and second encrypted data, make one and a half round trips between a first communication device and a second communication device. This is intended to reduce a risk of a malicious third party deciphering the encryption, but as already described, when all of the first encrypted data, the second/first encrypted data, and the second encrypted data are obtained by a third party, despite the fact that all of those three types of data are encrypted, there is a fear that the encryption may be deciphered, and the original shared data becomes known to a malicious third party.

In the first invention, as the method for preventing a malicious third party from obtaining all three of the first encrypted data, the second/first encrypted data, and the second encrypted data, at least one of the first path, which is the transmission path of the first encrypted data, and the second path, which is the transmission path of the second/first encrypted data, or the second path, which is the transmission path of the second/first encrypted data, and the third path, which is the transmission path of the second encrypted data, do not overlap except at the start point and the end point of the two paths. When the first path and the second path do not overlap, a malicious third party who is waiting at a location on the network cannot obtain both of the first encrypted data and the second/first encrypted data, and when the second path and the third path do not overlap, the malicious third party who is waiting at a location on the network cannot obtain both of the second/first encrypted data and the second encrypted data.

Meanwhile, in the second invention, the first path, the second path, and the third path as referred to in the first invention are basically all a common path A. However, in the second invention, a predetermined reversible transformation is executed on any one of the first encrypted data, the second/first encrypted data, and the second encrypted data in the first invention to generate two pieces of data from one of those three pieces of data. One of the two pieces of generated data is transmitted by a path A, and another one of those two pieces of generated data is transmitted by a path B, which is a predetermined path on the network that does not overlap the path A except at the start point and the end point of the two paths. For example, when the two pieces of data are generated from the first encrypted data, one piece of data is transmitted by the path A and another one piece of data is transmitted by the path B from the first communication device to the second communication device. When the two pieces of data are generated from the second/first encrypted data, one piece of data is transmitted by the path A and another one piece of data is transmitted by the path B from the second communication device to the first communication device. When the two pieces of data are generated from the second encrypted data, one piece of data is transmitted by the path A and another one piece of data is transmitted by the path B from the first communication device to the second communication device. In each of those cases, all other communications relating to the present invention between the first communication device and the second communication device are transmitted by the path A. In addition, in the second invention, the meaning of "predetermined reversible transformation" executed on any one of the first encrypted data, the second/first encrypted data, and the second encrypted data is a transformation that can restore the original data (first encrypted data, second/first encrypted data, or second encrypted data in the first invention) based on the generated two pieces of data.

That is, in the case of the second invention, two transmission paths from among the transmission path of the first encrypted data, the transmission path of the second/first encrypted data, and the transmission path of the second encrypted data use the path A, and another one of the transmission paths is divided into two paths, that is, the path A and the path B. One of the divided path A and path B is used to transmit one of two pieces of data created by executing a predetermined reversible transformation on any one of the first encrypted data, the second/first encrypted data, and the second encrypted data, and another one of the divided path A and path B is used to transmit another one of the two pieces of created data. As a result, this means that a malicious third party cannot obtain both of the data passing along the path A (one of the two pieces of data created by executing a predetermined reversible transformation on any one of the first encrypted data, the second/first encrypted data, and the second encrypted data, and the two among the first encrypted data, the second/first encrypted data, and the second encrypted data not subjected to the above-mentioned transformation for obtaining the two pieces of data) and the data passing along the path B (another one of the two pieces of data created by executing a predetermined reversible transformation on any one of the first encrypted data, the second/first encrypted data, and the second encrypted data). The reason is that when the malicious third party waits at a location on the network to try to obtain all of the first encrypted data, the second/first encrypted data, and the second encrypted data, the malicious third party is required to monitor both of the path A and the path B in order to obtain all of those pieces of data (or to obtain all of the data required in order to obtain all of those pieces of data).

That is, even based on the above-mentioned approach adopted by the second invention which is different from the approach in the first invention, as in the case of the first invention, which adopts an approach in which at least one of the first path and the second path, or the second path and the third path, do not overlap except at the start point and the end point of the two paths, it becomes possible to prevent a malicious third party from obtaining the first encrypted data, the second/first encrypted data, and the second encrypted data, and consequently, becomes possible to prevent the shared data from being known by a malicious third party.

Specific description is now given of the second invention.

The second invention is a communication system including a first communication device being one of two communication devices that communicate to and from each other, and a second communication device being another one of the two communication devices.

The first communication device includes: a first encryptor which executes a transformation for encryption which satisfies the commutative law and the associative law; a first decryptor which executes an inverse transformation of the encryption executed by the first encryptor; and a first communicator which communicates to and from the second communication device via a predetermined network, and the second communication device includes: a second encryptor which executes a transformation for encryption which satisfies the commutative law and the associative law; a second decryptor which executes an inverse transformation of the encryption executed by the second encryptor; and a second communicator which communicates to and from the first communication device via the network.

Further, the first communication device is configured to execute, by the first encryptor, a transformation for encryption of plaintext shared data which is data to be shared with the second communication device into first encrypted data, and to transmit, by the first communicator, the first encrypted data to the second communication device via the network, the second communication device is configured to execute, by the second encryptor, when the first encrypted data is received by the second communicator from the first communication device, a transformation for encryption of the first encrypted data into second/first encrypted data, and to transmit, by the second communicator, the second/first encrypted data to the first communication device via the network, the first communication device is configured to execute, by the first decryptor, when the second/first encrypted data is received by the first communicator from the second communication device, an inverse transformation of the transformation for encryption executed by the first encryptor on the second/first encrypted data to transform the second/first encrypted data into second encrypted data, and to transmit, by the first communicator, the second encrypted data to the second communication device via the network, and the second communication device is configured to execute, by the second decryptor, when the second encrypted data is received by the second communicator from the first communication device, an inverse transformation of the transformation for encryption executed by the second encryptor on the second encrypted data to transform the second encrypted data into the shared data.

The configuration described up to here is the same as that of the communication system of the first invention.

For example, as in the case of the first invention, both of the first communication device and the second communication device may be computer devices operated by a user, or may be computer devices not operated by a user. Further, as in the case of the first invention, communication between the first communication device and the second communication device is executed over a network, and the network includes at least one of the Internet (including Internet VPN; hereinafter the same) or a line other than the Internet. Examples of a line other than the Internet are as described above. The first invention and the second invention are also common in terms of the definition of the shared data and the point that the purpose of using the communication system may or may not be key distribution. Further, the first invention and the second invention are also common in that the first encryptor, the first decryptor, the second encryptor, and the second decryptor may each be configured to execute an exclusive OR operation.

Further, in the communication system of a first aspect of the second embodiment, the first communication device and the second communication device are configured such that: the first communication device transmits, when transmitting the first encrypted data to the second communication device, one of two pieces of data obtained by executing a predetermined reversible transformation on the first encrypted data by a path A which is a path on the network and another one of the two pieces of data by a path B which is a path on the network, the second communication device transmits the second/first encrypted data to the first communication device by the path A, and the first communication device transmits the second encrypted data to the second communication device by the path A; and the first communication device and the second communication device set the path A and the path B so that the path A and the path B do not overlap except at a start point and an end point of two paths of the path A and the path B.

This divides the first path as referred to in the first invention into two paths, that is, a path A and a path B, and then one of two pieces of data obtained by executing a predetermined reversible transformation on the first encrypted data is transmitted by the path A and another one of the two pieces of data is transmitted by the path B from the first communication device to the second communication device.

In the communication system of a second aspect of the second embodiment, the first communication device and the second communication device are configured such that: the first communication device transmits the first encrypted data to the second communication device by a path A which is a path on the predetermined network, the second communication device transmits, when transmitting the second/first encrypted data to the first communication device, one of two pieces of data obtained by executing a predetermined reversible transformation on the second/first encrypted data by the path A and another one of the two pieces of data by a path B which is a path on the network, and the first communication device transmits the second encrypted data to the second communication device by the path A; and the first communication device and the second communication device set the path A and the path B so that the path A and the path B do not overlap except at a start point and an end point of two paths of the path A and the path B.

This divides the second path as referred to in the first invention into two paths, that is, a path A and a path B, and then one of two pieces of data obtained by executing a predetermined reversible transformation on the second/first encrypted data is transmitted by the path A and another one of the two pieces of data is transmitted by the path B from the second communication device to the first communication device.

In the communication system of a third aspect of the second embodiment, the first communication device and the second communication device are configured such that: the first communication device transmits the first encrypted data to the second communication device by a path A which is a path on the network, the second communication device transmits the second/first encrypted data to the first communication device by the path A, and the first communication device transmits, when transmitting the second encrypted data to the second communication device, one of two pieces of data obtained by executing a predetermined reversible transformation on the second encrypted data by the path A and another one of the two pieces of data by a path B which is a path on the network; and the first communication device and the second communication device set the path A and the path B so that the path A and the path B do not overlap except at a start point and an end point of two paths of the path A and the path B.

This divides the third path as referred to in the first invention into two paths, that is, a path A and a path B, and then one of two pieces of data obtained by executing a predetermined reversible transformation on the second encrypted data is transmitted by the path A and another one of the two pieces of data is transmitted by the path B from the first communication device to the second communication device.

In the communication system of the first aspect to the third aspect of the second invention, one of the path A and the path B may be a path on an Internet line, and another one of the path A and the path B may be a path on a line other than the Internet. The path on a line other than the Internet may be any one of a communication carrier line, a global IP-assigned IP-VPN, a private network, a short message service (SMS), and a multimedia message service (MMS). Further, in the communication system of the first aspect to the third aspect of the second invention, both of the path A and the path B may be paths on an Internet line.

As in the case of the communication system of the first invention, also in the communication system of the second invention, the encryption and the decryption (inverse transformation) executed by the first encryptor and the first decryptor of the first communication device, and the encryption and the decryption (inverse transformation) executed by the second encryptor and the second decryptor of the second communication device, are required to satisfy the commutative law and the associative law. Examples of such calculations are the same in the second invention and the first invention.

Further, through use of a Vernam cipher or a one-time pad cipher as the cryptographic technology satisfying the commutative law and the associative law, the communication system of the second invention can, like the communication system according to the first invention, achieve the effect of executing encrypted communication that in practice is completely secure.

As described above, in the communication system of the first aspect of the second invention, the first path as referred to in the first invention, that is, the path for transmitting the first encrypted data from the first communication device to the second communication device, is divided into two paths, that is, a path A and a path B, and then one of two pieces of data obtained by executing a predetermined reversible transformation on the first encrypted data is transmitted by the path A, and another one of the two pieces of data is transmitted by the path B from the first communication device to the second communication device.

The first communication device in the communication system of the first aspect of the second invention may include a first path determinator which determines the path A and the path B. In this case, both of the path A and the path B are determined by the first communication device. The path A determined by the first communication device is also used for subsequent data transmission, that is, is used when the second/first encrypted data is transmitted from the second communication device to the first communication device, and when the second encrypted data is transmitted from the first communication device to the second communication device. In this case, the timing at which the first path determinator determines both of the path A and the path B is before transmission of one of the above-mentioned two pieces of data by the path A and another one of the two pieces of data by the path B from the first communication device to the second communication device.

As described above, in the communication system of the third aspect of the second invention, the third path as referred to in the first invention, that is, the path for transmitting the second encrypted data from the first communication device to the second communication device, is divided into two paths, that is, a path A and a path B, and then one of two pieces of data obtained by executing a predetermined reversible transformation on the second encrypted data is transmitted by the path A, and another one of the two pieces of data is transmitted by the path B from the first communication device to the second communication device.

The first communication device in the communication system of the third aspect of the second invention may also include a first path determinator which determines the path A and the path B. Also in this case, both of the path A and path B are determined by the first communication device. The path A determined by the first communication device is also used for preceding data transmission, that is, is used when the first encrypted data is transmitted from the first communication device to the second communication device, and when the second/first encrypted data is transmitted from the second communication device to the first communication device. In this case, the timing at which the first path determinator determines the path A is before transmission of the first encrypted data from the first communication device to the second communication device. Meanwhile, it suffices that the timing at which the first path determinator determines the path B is before transmission of one of the above-mentioned two pieces of data by the path A and another one of the two pieces of data by the path B from the first communication device to the second communication device.

As described above, in the communication system of the second aspect of the second invention, the second path as referred to in the first invention, that is, the path for transmitting the second/first encrypted data from the second communication device to the first communication device, is divided into two paths, that is, a path A and a path B, and then one of two pieces of data obtained by executing a predetermined reversible transformation on the second/first encrypted data is transmitted by the path A, and another one of the two pieces of data is transmitted by the path B from the second communication device to the first communication device.

In this case, the transmission of data between the first communication device and the second communication device that is executed first is the transmission of the first encrypted data from the first communication device to the second communication device, and the path A is used as the communication path for the data. Therefore, it is reasonable for the path A to be determined by the first communication device. That is, the first communication device may include a first path determinator which determines the path A.

Meanwhile, in the second aspect of the second invention, the path B is first used when the second/first encrypted data is transmitted from the second communication device to the first communication device (or the two pieces of data required in order for the first communication device to restore the second/first encrypted data). Therefore, in this case, it is reasonable for the path B to be determined by the second communication device.

For example, the second communication device may include a second path determinator which determines the path B.

In this case, one of the path A and the path B may be a path on an Internet line, and another one of the path A and the path B is a path on a line other than the Internet. In other words, the second path determinator may be configured to determine one of the path A and the path B as a path on an Internet line, and another one of the path A and the path B as a path on a line other than the Internet. The path on a line other than the Internet may be, as described above, any one of a communication carrier line, a global IP-assigned IP-VPN, a private network, a short message service (SMS), and a multimedia message service (MMS).

The first communication device may include a first path determinator which determines the path A, and the second communication device may include a second path determinator which determines the path B, the first path determinator may be configured to determine a predetermined path on the network as the path A, the second path determinator may be configured to specify, when the second communication device receives the first encrypted data from the first communication device by the second communicator, the path A and to determine the path B so that the path B does not overlap the specified path A except at the start point and the end point of the two paths, and the second communicator may be configured to transmit the one and the another one of the two pieces of data obtained from the second/first encrypted data to the first communication device via the path A determined by the first path determinator and the path B determined by the second path determinator.

For example, the second path determinator may be configured to specify the path A determined by the first communication device as follows. For example, the second path determinator may be configured to specify, when the path A is the Internet, from data attached to the first encrypted data received by the second communication device, the path A by detecting an IP address of each component through which the first encrypted data has passed from the first communication device to the second communication device, and to determine, as the path B, a path on the Internet from the second communication device to the first communication device which passes only through components which are not included in the path A. Alternatively, the second path determinator may be configured to specify that a line on which the first encrypted data has been transmitted when the second communication device receives the first encrypted data is any one of the Internet, a communication carrier line, a global IP-assigned IP-VPN, a private network, a short message service, and a multimedia message service, and to determine, as the path B, a path on a line different from the line on which the first encrypted data has been transmitted.

Examples of the technology for the second communication device to grasp the path on which a certain piece of data transmitted from the first communication device passes between the first communication device and the second communication device include MPLS, MANET, or DSR as a specific applied example of MANET, which are the above-mentioned technologies. Further, when the path A and the path B are formed on different types of communication lines, as long as the second communication device grasps which communication line is used for the communication using the path A, the path A and the path B can be set so as not to overlap. In some cases, simply grasping the type of software or hardware used during communication is sufficient in order to grasp which communication line is used for the communication using the path A.

The communication system of the second aspect of the second invention may be as follows.

The first communication device may include a first path determinator which determines the path A, and the second communication device may include a second path determinator which determines the path B. In this case, the first path determinator may be configured to determine a predetermined path on the network as the path A, and to generate path B information to be attached to the first encrypted data, the path B information being data for specifying the path B, the second path determinator may be configured to determine, when the second communication device receives the first encrypted data to which the path B information is attached by the second communicator from the first communication device, the path B as a path specified by the path B information attached to the received first encrypted data, and the second communicator may be configured to transmit the one and the another one of the two pieces of data obtained from the second/first encrypted data to the first communication device via the path A determined by the first path determinator and the path B determined by the second path determinator.

In this case, the second path determinator of the second communication device determines the path B based on the path B information added by the first communication device to the first encrypted data and transmitted along the path A together with the first encrypted data. As a matter of course, it is possible for the first communication device or the first path determinator which also determines the path A to determine the path B, which is a communication path that does not overlap with the path A except at the start point and the end point, and it is also possible, as a matter of course, for the second path determinator of the second communication device to determine the path B by using the path B information generated by the first communication device which has specified the path B.

Even in a case in which the path B is determined based on the path B information as described above, the first path determinator may be configured to specify both of the path A and the path B as paths on the Internet, and the first path determinator may further be configured to specify a path on any one of the Internet, a communication carrier line, a global IP-assigned IP-VPN, a private network, a short message service, and a multimedia message service as one of the path A and the path B, and to specify a path on another one of the Internet, a communication carrier line, a global IP-assigned IP-VPN, a private network, a short message service, and a multimedia message service as another one of the path A and the path B.

In the second invention, two paths, that is, the path A and the path B, are used in all of the communication systems of the first to third aspects.

In this configuration, in the second invention, in order to share the shared data between the first communication device and the second communication device, most of the communication between the first communication device and the second communication device is executed by using the path A, and only a part of the communication is executed by using the path B. The second invention only uses two types of paths, and thus the communication stability is high.

Further, the path A may have a higher communication quality than that of the path B. As used herein, "high communication quality" means at least one of a fast communication speed, a high communication stability, or no restrictions on the total amount of data that can be transmitted or the restricted total amount is large.

Through selecting, as the path A, a path having a higher communication quality than that of the path B, it becomes possible to execute most of the communication between the first communication device and the second communication device for sharing the shared data between the first communication device and the second communication device by the path A having a higher communication quality, and communication by the path B having a relatively lower communication quality than that of the path A is only performed once. Moreover, the data transmitted in that one-time communication is only one of two pieces of data obtained by executing a reversible transformation on any one of the first encrypted data, the second/first encrypted data, and the second encrypted data in the first invention. Therefore, even when the quality of the communication using the path B is not very good, a problem is less likely to occur in the communication executed by using the path B.

Further, as described above, the data passing along the path A is one of two pieces of data created by executing a predetermined reversible transformation on any one of the first encrypted data, the second/first encrypted data, and the second encrypted data, and the data passing along the path B is another one of the two pieces of data created by executing a predetermined reversible transformation on any one of the first encrypted data, the second/first encrypted data, and the second encrypted data. The another one of the two pieces of data transmitted by using the path B may have a smaller amount of data than that of the one of the two pieces of data transmitted by using the path A. When the another one of the two pieces of data has a smaller amount of data than that of the one of the two pieces of data, the data passing along the path B becomes smaller, which also reduces the possibility of a problem occurring in the communication executed by using the path B.

The reversible transformation executed on the first encrypted data may be executed as processing of dividing the first encrypted data into the one of the two pieces of data and the another one of the two pieces of data in accordance with a predetermined rule. The reversible transformation executed on the second/first encrypted data may be executed as processing of dividing the second/first encrypted data into the one of the two pieces of data and the another one of the two pieces of data in accordance with a predetermined rule. Further, the reversible transformation executed on the second encrypted data may be executed as processing of dividing the second encrypted data into the one of the two pieces of data and the another one of the two pieces of data in accordance with a predetermined rule.

Dividing those pieces of data is an example of the above-mentioned reversible transformation. Moreover, the processing is simple.

The inventor of the present application also proposes, as one aspect of the present invention, a method which is executed in the communication system according to the second invention described above. Effects of this method are equivalent to the effects of the communication system. Examples of the invention of the method are described below.

The method according to the second invention is a communication method which is executed by a communication system including a first communication device being one of two communication devices that communicate to and from each other, and a second communication device being another one of the two communication devices. The first communication device includes: a first encryptor which executes a transformation for encryption which satisfies the commutative law and the associative law; a first decryptor which executes an inverse transformation of the encryption executed by the first encryptor; and a first communicator which communicates to and from the second communication device via a predetermined network. The second communication device includes: a second encryptor which executes a transformation for encryption which satisfies the commutative law and the associative law; a second decryptor which executes an inverse transformation of the encryption executed by the second encryptor; and a second communicator which communicates to and from the first communication device via the network.

This method includes: a first step in which the first communication device executes, by the first encryptor, a transformation for encryption of plaintext shared data which is data to be shared with the second communication device into first encrypted data, and transmits, by the first communicator, the first encrypted data to the second communication device via the network; a second step in which the second communication device receives, by the second communicator, the first encrypted data from the first communication device, executes, by the second encryptor, a transformation for encryption of the first encrypted data into second/first encrypted data, and transmits, by the second communicator, the second/first encrypted data to the first communication device via the network; a third step in which the first communication device receives, by the first communicator, the second/first encrypted data from the second communication device, executes, by the first decryptor, an inverse transformation of the transformation for encryption executed by the first encryptor on the second/first encrypted data to transform the second/first encrypted data into second encrypted data, and transmits, by the first communicator, the second encrypted data to the second communication device via the network; and a fourth step in which the second communication device receives, by the second communicator, the second encrypted data from the first communication device, and executes, by the second decryptor, an inverse transformation of the transformation for encryption executed by the second encryptor on the second encrypted data to transform the second encrypted data into the plaintext shared data.

The description up to this point is common in the method of the first aspect to the third aspect of the second invention.

Further, in the method of the first aspect of the second invention, in the first step, the first communication device transmits, when transmitting the first encrypted data to the second communication device, one of two pieces of data obtained by executing a predetermined reversible transformation on the first encrypted data by a path A which is a path on the network and another one of the two pieces of data by a path B which is a path on the network, in the second step, the second communication device executes processing of obtaining the second/first encrypted data by executing the transformation on the first encrypted data obtained by executing an inverse transformation on the one of the two pieces of data received via the path A and the another one of the two pieces of data received via the path B, and transmits the second/first encrypted data to the first communication device by the path A, and in the third step, the first communication device transmits the second encrypted data to the second communication device by the path A. Further, the first communication device and the second communication device set, in the first step to the third step, the path A and the path B so that the path A and the path B do not overlap except at a start point and an end point of two paths of the path A and the path B.

In the method of the second mode aspect of the second invention, in the first step, the first communication device transmits the first encrypted data to the second communication device by a path A which is a path on the network, in the second step, the second communication device transmits, when transmitting the second/first encrypted data to the first communication device, one of two pieces of data obtained by executing a predetermined reversible transformation on the second/first encrypted data by the path A and another one of the two pieces of data by a path B which is a path on the network, and in the third step, the first communication device executes processing of obtaining the second encrypted data by executing the transformation on the second/first encrypted data obtained by executing an inverse transformation on the one of the two pieces of data received via the path A and the another one of the two pieces of data received via the path B, and transmits the second encrypted data to the second communication device by the path A. Further, the first communication device and the second communication device set, in the first step to the third step, the path A and the path B so that the path A and the path B do not overlap except at a start point and an end point of two paths of the path A and the path B.

In the method of the third aspect of the second invention, in the first step, the first communication device transmits the first encrypted data to the second communication device by a path A which is a path on the network, in the second step, the second communication device transmits the second/first encrypted data to the first communication device by the path A, in the third step, the first communication device transmits, when transmitting the second encrypted data to the second communication device, one of two pieces of data obtained by executing a predetermined reversible transformation on the second encrypted data by the path A and another one of the two pieces of data by a path B which is a path on the network, and in the fourth step, the second communication device executes processing of obtaining the shared data by executing the transformation on the second encrypted data obtained by executing an inverse transformation on the one of the two pieces of data received via the path A and the another one of the two pieces of data received via the path B. Further, the first communication device and the second communication device set, in the first step to the third step, the path A and the path B so that the path A and the path B do not overlap except at a start point and an end point of two paths of the path A and the path B.

Even in the method of the second invention, as in the first invention, the first step to the fourth step may be continuously and automatically executed by the first communication device and the second communication device.

With this configuration, even in the second invention, the same effects as obtained when the first step to the fourth step described in the first invention are automatically executed can be obtained.

**Brief Description of Drawings**

FIG. 1 is a diagram for illustrating an overall configuration of a communication system of a first embodiment of the present invention;
FIG. 2 is a view for illustrating an exterior of a communication device included in the communication system of FIG. 1;
FIG. 3 is a diagram for illustrating a hardware configuration of the communication device included in the communication system of FIG. 1;
FIG. 4 is a block diagram for illustrating function blocks generated inside the communication device included in the communication system of FIG. 1;
FIG. 5 is a diagram for illustrating a flow of processing executed when communication is executed in the communication system of FIG. 1;
FIG. 6(A) is a diagram for conceptually illustrating an example of a first path, a second path, and a third path created in a network when encrypted communication in a first case of <1-1> is executed in the communication system of FIG. 1;
FIG. 6(B) is a diagram for conceptually illustrating an example of a first path, a second path, and a third path created in a network when encrypted communication in a second case of <1-1> is executed in the communication system of FIG. 1;
FIG. 6(C) is a diagram for conceptually illustrating an example of a first path, a second path, and a third path created in a network when encrypted communication in a third case of <1-1> is executed in the communication system of FIG. 1;
FIG. 7(A) is a diagram for conceptually illustrating an example of a first path, a second path, and a third path created in a network when encrypted communication in a first case of <2-2> is executed in the communication system of FIG. 1;
FIG. 7(B) is a diagram for conceptually illustrating an example of a first path, a second path, and a third path created in a network when encrypted communication in a second case of <2-2> is executed in the communication system of FIG. 1;
FIG. 8 is a block diagram for illustrating function blocks generated inside a communication device included in a communication system of a second embodiment of the present invention;
FIG. 9(A) is a diagram for illustrating a flow of processing executed when encrypted communication is executed in "3. When first path includes path A and path B" in the communication system of FIG. 1;
FIG. 9(B) is a diagram for illustrating a flow of processing executed when encrypted communication is executed in "4. When second path includes path A and path B" in the communication system of FIG. 1; and
FIG. 9(C) is a diagram for illustrating a flow of processing executed when encrypted communication is executed in "5. When third path includes path A and path B" in the communication system of FIG. 1.

**Description of Embodiments**

Now, with reference to the accompanying drawings, preferred first and second embodiments of the present invention are described.

Parts which are common between the first embodiment and the second embodiment are denoted by common reference symbols, and descriptions of common content are omitted depending on the case.

<<First Embodiment>>

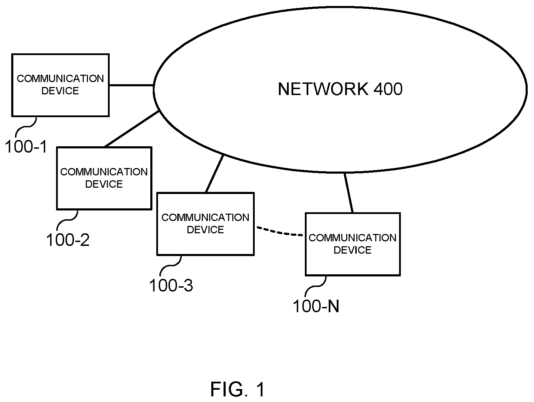

FIG. 1 is a diagram for schematically illustrating an overall configuration of a communication system of the first embodiment.

The communication system of the first embodiment includes a large number of communication devices 100-1 to 100-N (hereinafter sometimes simply referred to as "communication device 100"). Any two devices among the large number of communication devices 100 can communicate to and from each other. In this embodiment, all of the large number of communication devices 100 can connect to a network 400. That is, the above-mentioned communication executed by the any two devices among the large number of communication devices 100 is, in this embodiment, communication via the network 400. The network 400 includes, for example, at least the Internet (including Internet VPN; hereinafter the same), and in this embodiment, the network 400 includes a plurality of types of lines including the Internet. In addition to the Internet, the network 400 in this embodiment also may include, as a line other than the Internet, a communication carrier line, a global IP-assigned IP-VPN, a private network, a short message services (SMS), and a multimedia message service (MMS). However, the communication devices 100 are not required to be capable of communication over all of the above-mentioned types of lines. The types of lines that can be used for communication may, as a matter of course, differ for each communication device 100, and in reality, this is usually the case.

It suffices that the large number of communication devices 100 can connect to the network 400 when executing encrypted communication described later, and the large number of communication devices 100 are not required to be constantly connected to the network 400.

As described above, it is assumed that any two of the communication devices 100-1 to 100-N communicate to and from each other. In this embodiment, each of the communication devices 100-1 to 100-N may function as a first communication device of the present invention or as a second communication device of the present invention, but the communication devices 100-1 to 100-N are not limited to this.

A configuration of the communication device 100 is now described. The configuration of each of the communication devices 100-1 to 100-N is the same in terms of a relation with the present invention. The communication devices 100-1 to 100-N each include a computer. More specifically, the communication device 100 in this embodiment is built from a general-purpose computer. The communication devices 100-1 to 100-N may be general-purpose servers.

The following description is based on the assumption that each of the communication devices 100-1 to 100-N is a computer personally possessed by a user, but the communication devices 100-1 to 100-N are not limited to this. The communication device 100 is a cell phone, a smartphone, a tablet computer, a laptop personal computer, a desktop personal computer, or the like. All of those devices are required to be capable of communicating via the network 400, and are also required to be capable of generating function blocks described later by installing a computer program described later inside thereof, and to be capable of then executing processing described later. As long as those requirements are satisfied, other specifications are not specifically limited.

For example, when the communication device 100 is a smartphone or a tablet computer, the communication device 100 as the smartphone may be an iPhone manufactured and sold by Apple Japan, Inc., and the communication device 100 as the tablet computer may be an iPad manufactured and sold by Apple Japan, Inc.

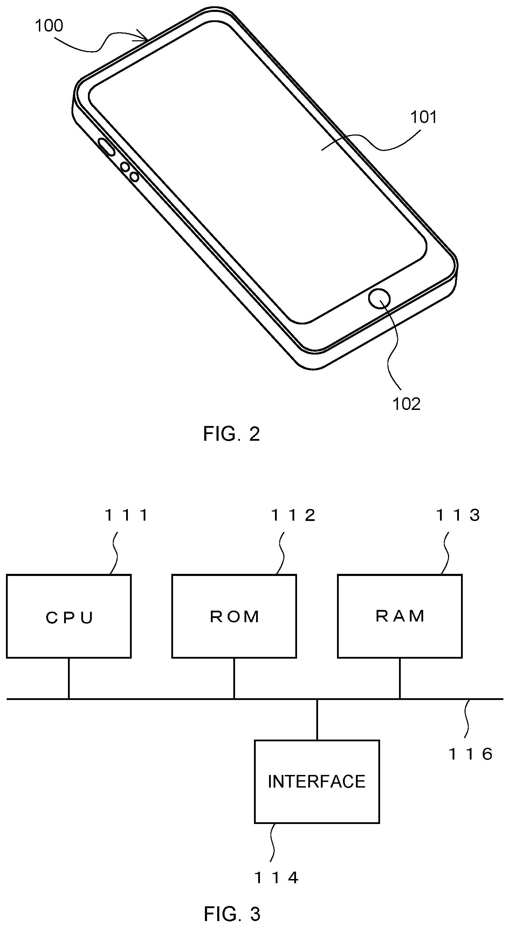

Each of the communication devices 100-1 to 100-N may be a chip, a card, or the like such as a subscriber identity module (SIM) or an IC card (for example, "Suica" (trademark) issued by East Japan Railway Company and others). Further, each of the communication devices 100-1 to 100-N may be a communication device that is not directly operated by the user during normal communication, such as a router or a switch, or may be a device having a communication function which constitutes an "Internet of Things" (IoT) (that is, may be a "Thing" in the Internet of Things). Even when the communication devices 100-1 to 100-N are such devices or components, except for the user interface, the communication devices 100-1 to 100-N include at least the same hardware as that illustrated FIG. 3 described later. Therefore, when a computer program described later for causing a computer to function as the first communication device or the second communication device of the present invention is installed, such devices or components can function as the first communication device or the second communication device of the present application.

When the communication devices 100-1 to 100-N are such devices or components, each communication described later executed by using a first path, a second path, or a third path is usually executed automatically.

An example of an exterior of the communication device 100 is illustrated in FIG. 2. The exterior illustrated in FIG. 2 is the exterior when the communication device 100 is a smartphone, but the communication device 100 may have a different exterior.

The communication device 100 includes a display 101. The display 101 is a component for displaying an image that is a still image or a moving image. A publicly-known or well-known display can be used as the display 101. The display 101 is, for example, a liquid crystal display. The communication device 100 also includes an input device 102. The input device 102 is a component for the user to perform a desired input to the communication device 100. A publicly-known or well-known input device can be used as the input device 102. In this embodiment, the input device 102 of the communication device 100 is a button type input device, but the input device 102 is not limited to this, and a numeric keypad, a keyboard, a trackball, or a mouse, for example, can also be used. In particular, when the communication device 100 is a laptop personal computer or a desktop personal computer, the input device 102 may be a keyboard or a mouse, for example. Further, when the display 101 is a touch panel, the display 101 also has the function of the input device 102, which is the case in this embodiment.

The hardware configuration of the communication device 100 is illustrated in FIG. 3.

The hardware includes a central processing unit (CPU) 111, a read-only memory (ROM) 112, a random-access memory (RAM) 113, and an interface 114, which are connected to one another by a bus 116.

The CPU 111 is a calculation device for performing arithmetic operations. The CPU 111 executes processing described later by, for example, executing a computer program recorded in the ROM 112 or the RAM 113. It suffices that the CPU 111 is a calculation device, and as long as the capabilities are similar, the CPU 111 may be a graphics processing unit (GPU) or a general-purpose computing on GPU (GPGPU). The hardware of the communication device 100 may include a hard disk drive (HDD), a solid state drive (SSD), or another large-capacity recording device which is connected to the bus 116, which is not shown, and the computer program may be recorded on the large-capacity recording device.

As used herein, the computer program includes at least a computer program for causing the communication device 100 to function as both of the first communication device and the second communication device of the present invention. The computer program may be pre-installed in the communication device 100 or may be post-installed therein. The computer program may be installed in the communication device 100 via a predetermined recording medium such as a memory card, or may be installed via a network such as a local area network (LAN) or the Internet.

The ROM 112 has recorded therein computer programs and data required for the CPU 111 to execute the processing described later. The computer programs recorded in the ROM 112 are not limited to this, and when the communication device 100 is a smartphone, the ROM 112 may have recorded therein computer programs and data required for the communication device 100 to function as the smartphone, for example, to execute calling or electronic mail. The communication device 100 is also capable of allowing websites to be browsed based on the data received via the network 400, and implements a publicly-known web browser in order to allow such browsing.

The RAM 113 provides a work area required for the CPU 111 to perform processing. In some cases, for example, a part of the above-mentioned computer program and data may be recorded in the RAM 113.

The interface 114 is used to exchange data between the CPU 111 and the RAM 113, for example, which are connected by the bus 116, and the outside. The above-mentioned display 101 and the input device 102 are connected to the interface 114. The operation content input from the input device 102 is input to the bus 116 from the interface 114. Further, as is well known, image data for displaying an image on the display 101 is output from the interface 114 to the display 101.

The interface 114 is also connected to a transmission and reception mechanism (not shown) being a publicly-known component for communicating to and from the outside via the network 400 being the Internet, and hence the communication device 100 can transmit data via the network 400, and can receive data via the network 400. The transmission and reception mechanism may include a component required in order to implement communication over various types of lines such as the Internet, a communication carrier line, a global IP-assigned IP-VPN, a private network, a short message service (SMS), and a multimedia message service (MMS). This transmission and reception of the data via the network 400 may be executed in a wireless manner or a wired manner. For example, when the communication device 100 is a smartphone, this communication may usually be executed in the wireless manner. A configuration of the transmission and reception mechanism may be a publicly-known or well-known configuration as long as such a configuration is possible. Data received by the transmission and reception mechanism from the network 400 is received by the interface 114, and data passed from the interface 114 to the transmission and reception mechanism is transmitted by the transmission and reception mechanism to the outside, for example, another communication device 100, via the network 400. Examples of the data which each communication device 100 transmits and receives via the network 400 by using the transmission and reception mechanism include first encrypted data, second/first encrypted data, and second encrypted data, which are each described in detail later.

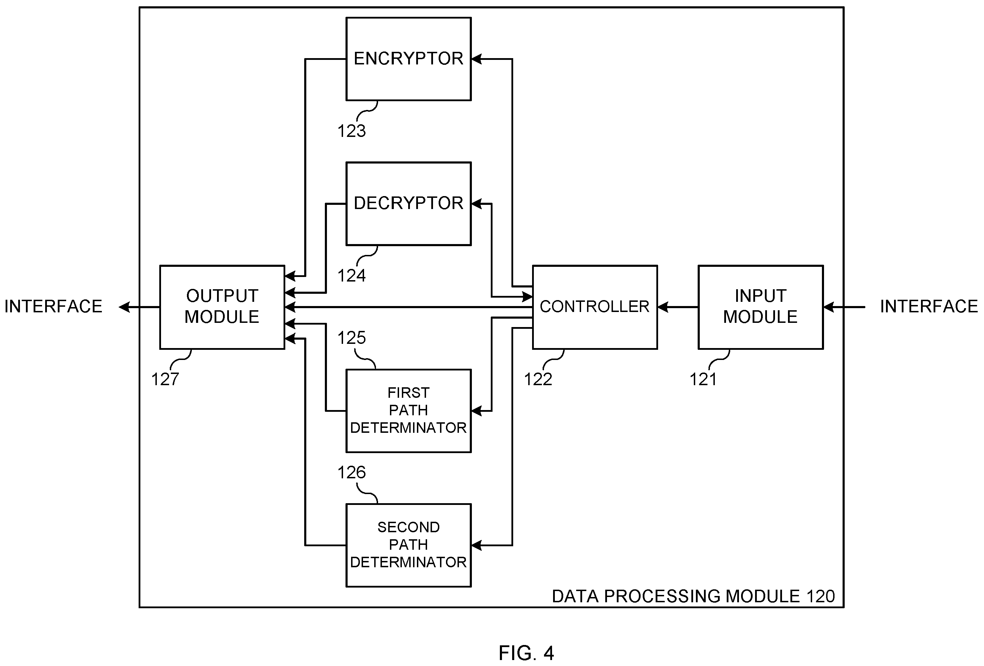

Function blocks like those illustrated in FIG. 4 are generated in the communication device 100 by the CPU 111 executing a computer program. The function blocks described below may be generated by the function of the above-mentioned computer program which by itself causes the communication device 100 to function as the communication device of the present invention, or may be generated based on collaboration between the above-mentioned computer program and an OS or another computer program installed in the communication device 100. Examples of the another computer program may include a computer program for implementing communication over various types of lines such as the Internet, a communication carrier line, a global IP-assigned IP-VPN, a private network, a short message service (SMS), and a multimedia message service (MMS).

In terms of a relation with the functions of the present invention, a data processing module 120 is generated in the communication device 100. As illustrated in FIG. 4, at least an input module 121, a controller 122, an encryptor 123, a decryptor 124, a first path determinator 125, a second path determinator 126, and an output module 127 are generated in the data processing module 120.

Of those, the input module 121 and the output module 127 correspond to the interface 114 when viewed as hardware, or are each implemented by a function of the interface 114. More specifically, the input module 121 and the output module 127 conceptually correspond to a connecting portion between the interface 114 and the bus 116.

Further, the controller 122, the encryptor 123, the decryptor 124, the first path determinator 125, and the second path determinator 126 correspond to, when viewed as hardware, the CPU 111 which is a calculation device, or are each implemented by a function between the CPU 111 and, when the CPU 111 requires some sort of data to perform a certain type of processing, and the storage device (ROM 112, RAM 113, or large-capacity recording device) in which the data is recorded.

The input module 121 receives inputs from the interface 114.

Examples of inputs from the interface 114 include the specification information input by the input device 102. The specification information is information for specifying, from among the large number of communication devices 100-1 to 100-N, two communication devices 100 which are attempting to execute encrypted communication (hereinafter sometimes referred to as "specific communication devices"). When a certain communication device 100 attempts to execute encrypted communication, it is obvious that when a communication device 100 of the opposite party is specified, the communication device 100 which is attempting to execute encrypted communication is also specified, and thus it is only required and sufficient for the specification information to include information which specifies the communication device 100 of the opposite party. As a matter of course, the two communication devices 100 executing communication may both be specified by the specification information.

In order to make it possible to specify the communication devices 100 executing communication, identification information, which is information unique to each communication device 100, is given to each communication device 100. The identification information is, for example, an IP address, an electronic mail address (electronic mail address of a cell phone carrier), a telephone number, a URL, an ID for a social networking service (SNS), and the like of the communication device 100.

For example, the specification information may be generated by the user inputting the identification information on both of the two communication devices 100 executing encrypted communication to the input device 102. Meanwhile, as already described, the information input as the specification information may be only the identification information on the communication device 100 of the opposite party. In that case, for example, the controller 122 or the transmission and reception mechanism can automatically attach the identification information on the transmission source to the data (for example, first encrypted data described later) transmitted to the communication device 100 of the opposite party. As a result, the communication device 100 which is the communication destination can grasp the communication device 100 which is the communication source, and thus both specific communication devices can grasp both of the two specific communication devices.

In this embodiment, when the user operates the input device 102 to input information for specifying the communication device 100 of the opposite party to and from which the encrypted communication is to be executed, the specification information for specifying both of the identification information on this communication device 100 and the identification information on the communication device 100 of the opposite party is automatically generated by the controller 122, but this embodiment is not limited thereto.

Further, the user can generate (or select) shared data by operating the input device 102. The shared data is plaintext data. The shared data may be automatically determined by the communication device 100 without an intention by the user (when the shared data is a common key described later, it is more common for the shared data to be automatically determined by the communication device 100). Such shared data is data that is intended to be shared by the specific communication devices. That is, the shared data is data that is to be transmitted and received by encrypted communication between the communication devices 100. For example, when this transmission and reception are transmission and reception of an electronic mail, that data is data of the electronic mail. Further, when one communication device 100 provides a website for a virtual shop on the Internet, and another communication device 100 is a customer who wants to buy articles in this virtual shop, data transmitted from the communication device 100 of the virtual shop to the communication device 100 of the customer is, for example, data for providing, to the communication device 100 of the customer, a selection screen for the articles and a format for the customer to input customer information, delivery destination information, and the like. Moreover, data transmitted from the communication device 100 of the customer to the communication device 100 of the virtual shop is information for specifying articles selected as articles to be purchased by the customer and quantities thereof and the customer information and the delivery destination information input by the customer into the above-mentioned format. In addition, the shared data may be a common key that is used in common key type encrypted communication executed by the specific communication devices later, that is held only by the communication device 100 which is the transmission source, and that is required to be shared before common key type encrypted communication by the two communication devices 100, that is, the transmission source and the transmission destination.

The shared data can be in any format, such as text data, image data, or sound data. The shared data is not required to be the data itself that the user inputs by operating the input device 102, and may be data created by the communication device 100 executing predetermined information processing on the input data. Moreover, the shared data may be data which existed in the transmission source communication device 100 from before the encrypted communication between the specific communication devices started (for example, data recorded in the data processing module 120 or external to the data processing module 120 (recorded in the RAM 113 or the large-capacity recording device)). The shared data is input from, for example, the large-capacity recording device or the input device 102 to the input module 121 via the interface 114.

Other examples of inputs to the input module 121 from the interface 114 include the first encrypted data, the second/first encrypted data, and the second encrypted data. Those pieces of data may be sent from the communication device 100 of the opposite party for the communication via the network 400. When any one of those pieces of data is sent, the transmitted piece of data is received by the transmission and reception mechanism, and is transmitted from the transmission and reception mechanism to the interface 114.

As described above, the specification information is input to the input module 121 as an input from the input device 102, the first encrypted data, the second/first encrypted data, and the second encrypted data are input to the input module 121 as inputs from the transmission and reception mechanism, and the shared data is input to the input module 121 as an input from the input device 102 and the like.

When the input module 121 receives those inputs, the input module 121 transmits all of those inputs to the controller 122.

The controller 122 performs overall control of each of the function blocks generated in the data processing module 120 in the communication device 100.

The controller 122 may receive the specification information and the shared data from the input module 121. When the controller 122 receives the specification information and the shared data, the controller 122 generates data for causing the display 101 to execute a display based on the specification information and the shared data, and transmits the generated data to the output module 127.

When the controller 122 receives the specification information and the shared data, the controller 122 transmits the shared data to the encryptor 123 in order to start encrypted communication between the communication device 100 to which the specification information has been input and the communication device 100 of the opposite party specified by the specification information. Meanwhile, the controller 122 transmits the specification information to the first path determinator 125 or the second path determinator 126.

Further, the controller 122 may receive, from the input module 121, first encrypted data sent from another communication device 100 via the network 400. When the controller 122 receives the first encrypted data, the controller 122 transmits the received first encrypted data to the encryptor 123.

In addition, the controller 122 may receive, from the input module 121, second/first encrypted data sent from another communication device 100 via the network 400. When the controller 122 receives the second/first encrypted data, the controller 122 transmits the received second/first encrypted data to the decryptor 124.

Moreover, the controller 122 may receive, from the input module 121, second encrypted data sent from another communication device 100 via the network 400. When the controller 122 receives the second encrypted data, the controller 122 transmits the received second encrypted data to the decryptor 124.

The controller 122 also transmits an instruction to determine a first path to the first path determinator 125, and transmits an instruction to determine a second path to the second path determinator 126. The timing at which the controller 122 transmits those instructions is described later.

The encryptor 123 may receive shared data from the controller 122. When the encryptor 123 receives the shared data, the encryptor 123 executes processing of encrypting the shared data. As a result of the processing, the shared data is transformed into first encrypted data. The encryptor 123 transmits the first encrypted data to the output module 127. The encryption calculation executed by the encryptor 123 satisfies the commutative law and the associative law. This point is described later.

The encryptor 123 may receive first encrypted data from the controller 122. When the encryptor 123 receives the first encrypted data, the encryptor 123 executes processing of further encrypting the first encrypted data. As a result of the processing, the first encrypted data is transformed into second/first encrypted data. The encryptor 123 transmits the second/first encrypted data to the output module 127.

The decryptor 124 executes a reverse calculation of the calculation executed by the encryptor 123 in the same communication device 100. That is, the decryptor 124 can transform encrypted data generated by the encryptor 123 in the same communication device 100 encrypting plaintext data back into plaintext.

The decryptor 124 may receive second/first encrypted data from the controller 122. When the decryptor 124 receives the second/first encrypted data, the decryptor 124 executes decryption processing on the second/first encrypted data, or in other words, executes an inverse transformation of the transformation for encryption executed by the encryptor 123 of the communication device 100 on the second/first encrypted data. As a result, the second/first encrypted data is transformed into second encrypted data. The decryptor 124 transmits the second encrypted data to the output module 127.

The decryptor 124 may receive second encrypted data from the controller 122. When the decryptor 124 receives the second encrypted data, the decryptor 124 executes decryption processing on the second encrypted data, or in other words, executes an inverse transformation of the transformation for encryption executed by the encryptor 123 of the communication device 100 on the second encrypted data. As a result, the second encrypted data is transformed into the shared data which is plaintext data. The decryptor 124 transmits the shared data to the output module 127.

The encryptor 123 and the decryptor 124 are each configured as described above, but of the communication devices 100, the encryptor 123 and the decryptor 124 of the communication device 100 that initially has the shared data correspond to the first encryptor and the first decryptor, respectively, in the present application. Further, of the communication devices 100, the encryptor 123 and the decryptor 124 on the side receiving the shared data from another communication device 100 through encrypted communication correspond to the second encryptor and the second decryptor, respectively, in the present application.

The first path determinator 125 may receive an instruction to determine a first path from the controller 122. When the first path determinator 125 receives the instruction, the first path determinator 125 determines the first path. Further, the first path determinator 125 may determine a third path. The timing at which and the method by which the first path determinator 125 determines the third path are described later.

The second path determinator 126 may receive an instruction to determine a second path from the controller 122. When the second path determinator 126 receives the instruction, the second path determinator 126 determines the second path. Further, the second path determinator 126 may determine a third path. The timing at which and the method by which the second path determinator 126 determines the third path are described later.

The first path, the second path, and the third path are as follows.

In this embodiment, when encrypted communication is executed between two communication devices 100 that are specific communication devices, the data makes one and a half round trips between the two communication devices 100. When, among the two communication devices 100, the communication device 100 that initially held the shared data is referred to as "transmission-side communication device 100," and the communication device 100 that ultimately receives the shared data from the transmission-side communication device 100 is referred to as "reception-side communication device 100" (hereinafter sometimes referred to in the same way), the data is first transmitted from the transmission-side communication device 100 to the reception-side communication device 100, then transmitted from the reception-side communication device 100 to the transmission-side communication device 100, and finally transmitted from the transmission-side communication device 100 to the reception-side communication device 100. In this way, transmission and reception are executed between the transmission-side communication device 100 and the reception-side communication device 100 in a set of three transmissions and receptions for one encrypted communication.

Among those three transmissions and receptions, the path on the network 400 from the transmission-side communication device 100 to the reception-side communication device 100 when the first transmission and reception are executed is the first path, the path on the network 400 from the reception-side communication device 100 to the transmission-side communication device 100 when the second transmission and reception are executed is the second path, and the path on the network 400 from the transmission-side communication device 100 to the reception-side communication device 100 when the third transmission and reception are executed is the third path.

The first path, the second path, and the third path are required to be set so that the second path and at least one of the first path or the third path do not overlap except at a start point and an end point of the two paths to be compared.

This condition satisfies any one of the following cases (1) to (4). In the following cases (1) to (4), "overlap" also includes cases in which only a part of two paths overlap.

> (1) Case in which the first path and the second path overlap, but the third path does not overlap the second path
> (2) Case in which the third path and the second path overlap, but the first path does not overlap the second path
> (3) Case in which the second path does not overlap the first path and the third path, but the first path and the third path overlap
> (4) Case in which the second path does not overlap the first path and the third path, and the first path and the third path do not overlap

The first path determinator 125 and the second path determinator 126 set or determine each of the first path, the second path, and the third path so as to satisfy any one of the above-mentioned cases (1) to (4). The condition(s) that the first path, the second path, and the third path are required to satisfy when the first path determinator 125 and the second path determinator 126 execute encrypted communication may be continuously any one of the above-mentioned cases (1) to (4), or may be a plurality cases among the above-mentioned cases (1) to (4). For example, the condition(s) that the first path, the second path, and the third path are required to satisfy when the first path determinator 125 and the second path determinator 126 execute encrypted communication may be randomly selected from the above-mentioned (1) to (4) each time encrypted communication is executed.

When the first path determinator 125 has determined the first path, the first path determinator 125 generates first path information which is information for specifying (at least a part of) the first path, and transmits the generated first path information to the output module 127. When the first path determinator 125 has determined the third path, the first path determinator 125 may generate third path information which is information for specifying (at least a part of) the third path, and transmit the generated third path information to the output module 127. The second path determinator 126 generates second path information which is information for specifying (at least a part of) the second path, and transmits the generated second path information to the output module 127. The second path determinator 126 may generate third path information which is information for specifying (at least a part of) the third path, and transmit the generated third path information to the output module 127.

The first path information, the second path information, and the third path information are all transmitted from the output module 127 to the transmission and reception mechanism via the interface 114.

The output module 127 may receive the first encrypted data, the second/first encrypted data, and the second encrypted data from the encryptor 123 or the decryptor 124. When the output module 127 receives those pieces of data, the output module 127 transmits the received data to the transmission and reception mechanism via the interface 114.

The output module 127 may receive the first path information from the first path determinator 125, the second path information from the second path determinator 126, and the third path information from the first path determinator 125 or the second path determinator 126. When the output module 127 receives those pieces of information, the output module 127 transmits the received data to the transmission and reception mechanism via the interface 114.

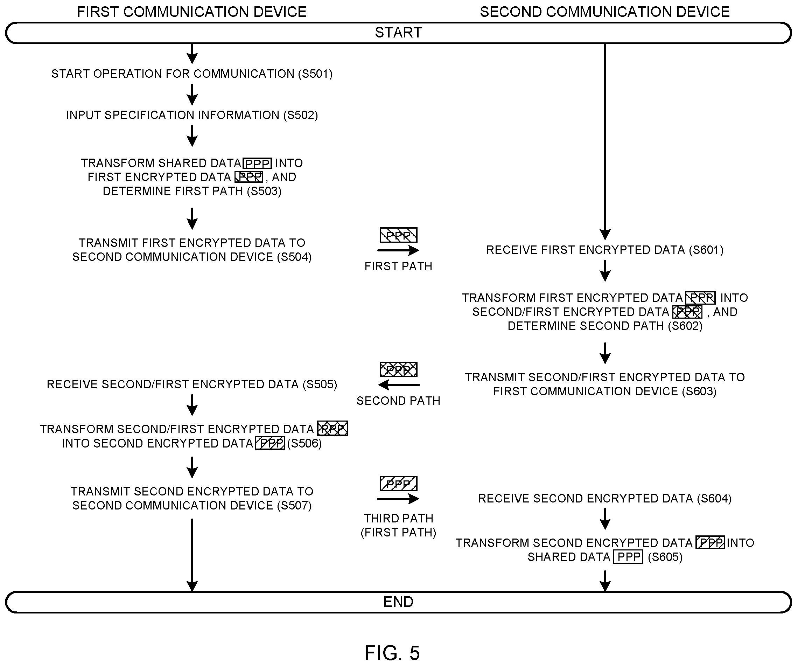

With reference to mainly FIG. 5, a method of using this communication system and operation of this communication system are now described.

As already described, in the communication system of the first embodiment, any two communication devices 100 among the communication devices 100 forming the communication system communicate to and from each other. As a matter of course, the two communication devices 100 may execute other communication, but in this embodiment, communication for sharing shared data between the two communication devices 100 is described.

First, the user of a certain communication device 100 starts operating the communication device 100 that the user has so that the relevant two communication devices 100 communicate to and from each other (Step S501). The communication device 100 that the user has started operating becomes the "first communication device" of the present invention. This operation is performed by operating the input device 102. In order to execute communication, the user performs a required operation such as, for example, launching a publicly-known or well-known email client which is an application for transmitting and receiving electronic mail, or launching a publicly-known or well-known browser which is an application for viewing a website. The content of this operation is input to the input module 121 via the interface 114, and transmitted from the input module 121 to the controller 122. The controller 122 receives image data generated by an application (not shown) based on the input content for displaying an image on the display 101, and transmits the generated image data to the output module 127. The image data is transmitted from the output module 127 to the display 101. An image based on the image data is displayed on the display 101. The image may be, for example, an image of the email client or an image of the browser.

The user operates the input device 102 while looking at the display 101, to thereby input specification information (Step S502). In this embodiment, the content input by the user by using the input device 102 is only information for specifying the communication device 100 of the opposite party for communication, but the input content is not limited to this. The input specification information is the identification information assigned to the communication device 100 of the opposite party in order to specify the communication device 100 of the opposite party, and differs depending on the communication line used for transmitting first encrypted data which is described later. However, the specification information is, for example, the IP address, the electronic mail address (electronic mail address of the cell phone carrier), the telephone number, the URL, or the ID for a social networking service (SNS) of the communication device 100.

While the input is being performed, the operation content for inputting the specification information is input to the controller 122 via the interface 114 and the input module 121. When the controller 122 receives the operation content, the controller 122 generates image data, which is the data of an image to be displayed on the display 101, and transmits the generated image data to the display 101 via the output module 127 and the interface 114. The specification information that the user is inputting by using the input device 102 is displayed in real time on the display 101. The user can input the specification information while viewing the display.

For example, in a case in which the identification information is the IP address of the communication device 100 of the opposite party, when the user inputs the IP address by using the input device 102, the input content is transmitted to the controller 122 via the interface 114 and the input module 121. When the controller 122 receives the data, the controller 122 automatically generates specification information including the IP address of the communication device 100 and the IP address of the communication device 100 of the opposite party for communication.

When input of the specification information is complete, the controller 122 transmits, to the encryptor 123, the shared data and an instruction to encrypt the shared data. It is noted that the processing in this communication device 100, which is the first communication device of the present application, after the input of specification information is complete does not require an operation of the input device 102 by the user, and is automatically executed at least until transmission of second encrypted data as described later to the communication device 100 of the opposite party is complete. However, the present invention is not limited to this. The encryptor 123 executes, based on the above-mentioned instruction, a transformation for encrypting the shared data (Step S503). In this embodiment, it is assumed that data having a character string "PPP" is the shared data, but the shared data is not limited to this. Details of the encryption method are described later. The data that is generated as a result of the encryption of the shared data by the encryptor 123 is first encrypted data. As described later, the first encrypted data indicates that the character string PPP has been transformed into first encrypted data as a result of encryption by the encryptor 123 by hatching the PPP with diagonal lines downward to the right.

The encryptor 123 transmits the first encrypted data to the output module 127. The first encrypted data is transmitted from the output module 127 to the transmission and reception mechanism via the interface 114.

Around the same time that the controller 122 transmits the shared data to the encryptor 123, the controller 122 transmits the specification information and an instruction to determine the first path to the first path determinator 125.

When the first path determinator 125 receives this instruction, the first path determinator 125 determines the first path which is the transmission path of the first encrypted data to the communication device 100 of the opposite party specified by the specification information, and generates first path information (Step S503). The first path information is transmitted from the first path determinator 125 to the output module 127, and transmitted to the transmission and reception mechanism via the interface 114.

The transmission and reception mechanism transmits the first encrypted data to the communication device 100 specified by the specification information (for example, the IP address of the communication device 100 of the opposite party included in the specification information) via the network 400 (Step S504). The transmitted PPP character string has been encrypted by the encryptor 123, and thus the transmitted PPP character string is hatched with diagonal lines downward to the right. Further, the specification information is transmitted to the communication device 100 of the opposite party together with the first encrypted data.

At this time, the first encrypted data is transmitted to the communication device 100 of the opposite party along the first path on the network 400.

When this communication is executed, in most cases, the computer program for causing this communication device 100 to function as both of the first communication device and the second communication device of the present invention implements communication using the first path in cooperation with another computer program (for example, a computer program for implementing communication using an Internet line, a communication carrier line, an SMS line, or the like (or, in addition to the computer program, data and hardware accompanying the computer program)) installed in the computer as the communication device 100 in order to implement communication using the first path. The same also applies when two communication devices 100 communicate by using the second path or the third path.

The communication device 100 of the opposite party for communication, which corresponds to the second communication device of the present invention, receives the first encrypted data by using the transmission and reception mechanism which this communication device 100 has (Step S601). The first encrypted data is transmitted from the transmission and reception mechanism to the input module 121 in the data processing module 120 via the interface 114. The first encrypted data is transmitted from the input module 121 to the controller 122. In this embodiment, the processing step of each of Step S601, Step S602, Step S603, Step S604, and Step S605 (all described later) which start from the processing step of Step S601 is executed automatically, but the present invention is not limited to this.

When the controller 122 receives the first encrypted data, the controller 122 transmits, to the encryptor 123, the first encrypted data and an instruction to execute encryption processing on the first encrypted data. The encryptor 123 executes, based on this instruction, a transformation for encrypting the first encrypted data (Step S602). Details of the encryption method are described later. The data that is generated as a result of the further encryption, without decryption, of the first encrypted data by the encryptor 123 is second/first encrypted data. As described later, this second/first encrypted data indicates that, by hatching the character string PPP with diagonal lines downward to the left in addition to diagonal lines downward to the right, the character string PPP has been encrypted by the encryptor 123 of the communication device 100 corresponding to the first communication device of the present application and has been further encrypted by the encryptor 123 of the communication device 100 corresponding to the second communication device of the present application as well.

The generated second/first encrypted data is transmitted from the encryptor 123 to the output module 127. The second/first encrypted data is transmitted from the output module 127 to the transmission and reception mechanism via the interface 114.

When the controller 122 receives the first encrypted data, around the same time that the controller 122 transmits the first encrypted data to the encryptor 123, the controller 122 transmits an instruction to determine a second path to the second path determinator 126.

When the second path determinator 126 receives this instruction, the second path determinator 126 determines the second path, and generates second path information (Step S602). The second path information is transmitted from the second path determinator 126 to the output module 127, and transmitted to the transmission and reception mechanism via the interface 114.

The transmission and reception mechanism transmits (returns) the second/first encrypted data to the communication device 100 corresponding to the first communication device via the network 400 in accordance with the second path information included in the specification information (Step S603).

At this time, the second/first encrypted data is transmitted to the communication device 100 of the opposite party along the second path on the network 400. As described above, the second path is a path on the network 400 which does not overlap the first path except at the start point and the end point of the two paths.

The communication device 100 corresponding to the first communication device of the present invention receives the second/first encrypted data by using the transmission and reception mechanism which this communication device 100 has (Step S505). The second/first encrypted data is transmitted from the transmission and reception mechanism to the input module 121 in the data processing module 120 via the interface 114. The second/first encrypted data is transmitted from the input module 121 to the controller 122.

When the controller 122 receives the second/first encrypted data, the controller 122 transmits, to the decryptor 124, the second/first encrypted data and an instruction to execute an inverse transformation of the transformation executed by the encryptor 123 on the second/first encrypted data. The decryptor 124 executes, on the second/first encrypted data, based on this instruction, a transformation that is the inverse of the transformation executed when the encryptor 123 in the relevant communication device 100 transformed the shared data into the first encrypted data (Step S506). Details of the decryption method are described later. The data that is generated as a result of the decryption processing executed on the second/first encrypted data by the decryptor 124 is second encrypted data. As described above, this data is the same as the data obtained when the plaintext shared data is encrypted by the encryptor 123 in the communication device 100 corresponding to the second communication device of the present invention. In FIG. 5, the second encrypted data is obtained by hatching the character string PPP with only diagonal lines downward to the left. This indicates that the data is in a state in which the plaintext character string PPP has been encrypted by the encryptor 123 of the communication device 100 as the second communication device of the present application.

The generated second encrypted data is transmitted from the decryptor 124 to the output module 127. The second encrypted data is transmitted from the output module 127 to the transmission and reception mechanism via the interface 114.

The transmission and reception mechanism, for example, refers to the specification information indicating the end point in the first path information, and transmits the second encrypted data to the communication device 100 specified by the specification information via the network 400 (Step S507). The transmission and reception mechanism of the communication device 100 corresponding to the first communication device of the present application may include types of identification information which are different from the above-mentioned identification information used by the communication device 100 corresponding to the first communication device of the present application when required for the transmission. For example, the transmission is performed by using the SNS account, the cell phone number, the electronic mail address of the carrier mail, or the like. As a matter of course, like in a publicly-known or well-known technology, when two communication devices 100 communicate by using a certain communication line, the identification information on the communication device 100 of the opposite party which is required for the communication using that communication line is grasped in advance, and is in a state of being recorded in advance in the RAM 113 or the large-capacity recording device.

At this time, the second encrypted data is transmitted to the communication device 100 of the opposite party along the third path on the network 400. In this embodiment, the third path is the same as the first path, but the third path is not limited to this. The transmission and reception mechanism can transmit the second encrypted data to the communication device 100 of the opposite party by using the previously received first path information to follow the same third path as the first path on the network 400.

It is noted that the third path information may be transmitted from the first path determinator 125 to the transmission and reception mechanism via the output module 127 and the interface 114 before the second encrypted data is transmitted from the communication device 100 corresponding to the first communication device of the present application to the communication device 100 corresponding to the second communication device of the present application by using the third path.

The communication device 100 of the opposite party for communication, which corresponds to the second communication device of the present invention, receives the second encrypted data by using the transmission and reception mechanism which this communication device 100 has (Step S604). The second encrypted data is transmitted from the transmission and reception mechanism to the input module 121 in the data processing module 120 via the interface 114. The second encrypted data is transmitted from the input module 121 to the controller 122.

When the controller 122 receives the second encrypted data, the controller 122 transmits, to the decryptor 124, the second encrypted data and an instruction to execute an inverse transformation of the transformation executed by the encryptor 123 on the second encrypted data. The decryptor 124 executes, on the second encrypted data, based on this instruction, an inverse transformation to that executed by the encryptor 123 (Step S605). Details of the decryption method are described later. The data that is generated as a result of the decryption of the second encrypted data by the decryptor 124 is plaintext shared data. As a result, the communication device 100 which is the second communication device of the present invention now holds, in an unencrypted plaintext state, the shared data that the communication device 100 which is the first communication device of the present invention originally held. The communication device 100 corresponding to the second communication device cannot grasp the content of the original shared data from any one of the first encrypted data, the second/first encrypted data, or the second encrypted data until the sharing of the shared data is complete. However, when the transformation for decryption by the decryptor 124 is complete, the plaintext shared data can be obtained.

In the manner described above, the two communication devices 100 corresponding to the first communication device and the second communication device of the present invention share the shared data.

Until the sharing between the two communication devices 100, the data transmitted and received between the two communication devices 100 does not contain shared data in a plaintext state. When the shared data is transmitted and received between the two communication devices 100, the shared data is in an encrypted state such as the first encrypted data, the second/first encrypted data, or the second encrypted data. As a result, the encrypted communication described above, in which encrypted data is transmitted and received in one and a half round trips between the two communication devices 100, enables the two communication devices 100 to securely share the shared data.

Moreover, when executing the encrypted communication from Step S501 to Step S605, the two communication devices 100 which are the specific communication devices are not required to share any information, which is required when executing common key type encrypted communication, for example. Therefore, the encrypted communication described above solves the key distribution problem.

Further, the first path on the network 400 along which the first encrypted data follows between the two communication devices 100 and the second path on the network 400 along which the second/first encrypted data follows are different except at the start point and the end point of the two paths. Therefore, a malicious third party cannot obtain both of the first encrypted data and the second/first encrypted data. This means that it is possible to eliminate almost the only vulnerability that existed in the encrypted communication described above, in which encrypted data is transmitted and received in one and a half round trips between two communication devices 100.

The data transformation executed by the encryptor 123 and the decryptor 124 in the two communication devices 100 is now described in detail.

As described above, in this embodiment, shared data is encrypted (transformed) by the encryptor 123 of the communication device 100 which is the first communication device of the present application, to thereby become first encrypted data. The first encrypted data is then encrypted (transformed) by the encryptor 123 of the communication device 100 which is the second communication device of the present application, to thereby become second/first encrypted data. The second/first encrypted data is then decrypted (transformed) by the decryptor 124 of the communication device 100 which is the first communication device of the present application, to thereby become second encrypted data. Finally, the second encrypted data is decrypted (transformed) by the decryptor 124 of the communication device 100 which is the second communication device of the present application, to thereby turn back into the original shared data.

To enable this to happen, it is required that the encryption and the decryption (inverse transformation) executed by the encryptor 123 and the decryptor 124 in the communication device 100 corresponding to the first communication device of the present application and the encryption and the decryption (inverse transformation) executed by the encryptor 123 and the decryptor 124 in the communication device 100 corresponding to the second communication device of the present application satisfy both of the commutative law and the associative law. This point is now described in detail.

The shared data in the plaintext state is represented by P, and P is a predetermined data string. The calculation for encryption executed on the shared data P by the encryptor 123 is represented by "$\times A$," the calculation for the encryption executed on the first encrypted data by the encryptor 123 is represented by "$\times B$," the reverse calculation of the calculation executed by the encryptor 123 which is to be executed on the second/first encrypted data by the decryptor 124 is represented by "$\times A^{-1}$," and the reverse calculation of the calculation executed by the encryptor 123 which is to be executed on the second encrypted data by the decryptor 124 is represented by "$\times B^{-1}$." Here, the symbol "$\times$" naturally does not mean a simple product calculation.

As a result, the first encrypted data can be expressed as "$P \times A$."

The second/first encrypted data can be expressed as "$(P \times A) \times B$."

The second encrypted data can be expressed as "$P \times B$."

Here, the issue resides in the calculation executed by the decryptor 124 by executing the calculation "$\times A^{-1}$" on "$(P \times A) \times B$," which is the second/first encrypted data, to thereby obtain "$P \times B$." The calculation "$(P \times B) \times B^{-1}$" that is executed by the decryptor 124 to turn the second encrypted data back into the shared data P is a general decryption calculation, and hence this calculation does not involve any particular difficulty above that which exists for normal encryption and decryption. In order for the above-mentioned calculations executed by the decryptor 124 to hold true, it is required that "$((P \times A) \times B) \times A^{-1} = P \times B$" hold true based on the assumption that the calculation of $A \times A^{-1}$ or $B \times B^{-1}$ is processing for transforming encrypted data into a state in which no calculations have been executed on the original data P (or, processing for turning encrypted data back into an original state by decrypting the encrypted data) (that is, very normal encryption and decryption processing). The transformations in that case are, for example, as follows.

$$( (P \times A) \times B) \times A^{-1}$$
$$\rightarrow (P \times (A \times B)) \times A^{-1}$$
$$\rightarrow (P \times (B \times A)) \times A^{-1}$$
$$\rightarrow ( (P \times B) \times A) \times A^{-1}$$
$$\rightarrow (P \times B) \times (A \times A^{-1})$$
$$\rightarrow P \times B$$

That is, it is required that the encryption and the decryption executed by the encryptor 123 and the decryptor 124 in the communication device 100 corresponding to the first communication device of the present application, and the encryption and the decryption executed by the encryptor 123 and the decryptor 124 in the communication device 100 corresponding to the second communication device of the present application can, as described above, switch the order of the calculations $\times A$ and $\times B$. Further, in the above-mentioned calculations, $P \times (B \times A)$ and $(P \times B) \times A$ are required to be equivalent. That is, it is required that, in each of the encryption and the decryption executed by the encryptor 123 and the decryptor 124 in the communication device 100 corresponding to the first communication device of the present application and the encryption and the decryption executed by the encryptor 123 and the decryptor 124 in the communication device 100 corresponding to the second communication device of the present application, when the calculations are expressed as "$\times$" and the target of the calculations are expressed as "F," "G," and "H," the commutative law in which "$F \times G = G \times F$," and the associative law in which "$(F \times G) \times H = F \times (G \times H)$," both hold.

Some examples of calculations for satisfying the above-mentioned condition in order to allow the transformation of the expression "$((P \times A) \times B) \times A^{-1} = P \times B$" are now given.

One example of this is an exclusive OR operation. When a certain data string P is encrypted by using exclusive OR, the calculation is executed by taking the exclusive OR of the data string P and different data (key). The same applies below, but when the data length of P is long, it is common to divide P into a large number of pieces of data and execute the above-mentioned calculation on each piece of data. The key used for the encryption and the decryption by the encryptor 123 and the decryptor 124 of the communication device 100 corresponding to the first communication device of the present application and the key used for the encryption and the decryption by the encryptor 123 and the decryptor 124 of the communication device 100 corresponding to the second communication device of the present application may be the same or different. In other words, even when two communication devices 100 intending to share the shared data do not have the same key, the two communication devices 100 can execute an exclusive OR operation by using the key that each communication device 100 itself has, and even in such a case, the above-mentioned transformation of the expression "$((P \times A) \times B) \times A^{-1} = P \times B$" can be implemented. The calculations for encryption executed by the two communication devices 100 are not required to be the same as long as the commutative law and the associative law hold.

An exclusive OR operation has the property that by repeating the same calculation twice, the data is turned back into the original data string. That is, $(P \times A) \times A P \times (A \times A) \rightarrow P$. In this case, the calculation "$\times A$" executed by the encryptor 123 and the calculation "$\times A^{-1}$" executed by the decryptor 124 become the same. In such a case, there is no benefit in making the encryptor 123 and the decryptor 124 different, and thus, for example, the decryptor 124 may be omitted and the encryptor 123 may execute the calculations for both encryption and decryption.

The key used in the exclusive OR operations executed by the encryptor 123 and the decryptor 124 has an amount of data (amount of information) equal to or larger than the amount of data to be encrypted (in this embodiment, the shared data or the first encrypted data), is used only once, and when the key is a completely random number, it has already been mathematically proven that the original data (in this embodiment, the shared data or the first encrypted data) cannot be derived from the encrypted data (in this embodiment, the first encrypted data or the second/first encrypted data) by any method whatsoever.

Therefore, using an exclusive OR operation as the calculation used by the encryptor 123 and the decryptor 124 is effective because not only does the use of an exclusive OR operation satisfy the condition that both of the commutative law and the associative law are satisfied, but the security of the encrypted communication in this embodiment is increased.

In order to use this kind of calculation in a practical manner, it is required to successively generate keys which are random numbers as described above. This can be implemented when both of the two communication devices 100 include a random number generator (not required to be hardware based). When the keys generated by the random number generators can be supplied to the encryptor 123 and the decryptor 124, it becomes possible for the encryptor 123 and the decryptor 124 to execute encryption processing and decryption processing by the methods described above, which are mathematically completely undecipherable. For example, the random number generator can be implemented by a function of the above-mentioned computer program for causing a communication device 100 to function as the first communication device or the second communication device of the present application, for example, by the RAM 113 and the CPU 111.

Another example of a calculation which satisfies the above-mentioned condition for allowing the transformation of the expression "$((P \times A) \times B) \times A^{-1} = P \times B$" is a circular shift (barrel shift).

A circular shift is a shift in which, when there is a data string of a certain length, the right and left ends of the data string are considered to be connected, and the entire data string is shifted to the right or the left by a predetermined number of characters. For example, when the entire data string is shifted to the right by three characters, three characters are deleted from the right end of the data string, and the deleted three characters are added to the left end of the data string while maintaining the order of those characters to shift the rest of the data string to the right by three characters. In this case, "to the right by three characters" becomes the key used when this encryption is executed.

For example, when a transformation of the shared data is executed by using the key "to the right by N characters" by the encryptor 123 of the communication device 100 corresponding to the first communication device of the present application (the data generated as a result is first encrypted data), and a transformation of the first encrypted data is executed by using the key "to the right by M characters" by the encryptor 123 of the communication device 100 corresponding to the second communication device of the present application (the data generated as a result is second/first encrypted data), by executing a transformation of the second/first encrypted data by using the key "to the left by N characters" by the decryptor 124 of the communication device 100 corresponding to the first communication device of the present application (inverse transformation of the transformation executed on the shared data), the generated data is in a state the characters in the original shared data have been shifted "to the right by M characters." This is equivalent to the data string obtained when the encryptor 123 of the communication device 100 corresponding to the second communication device of the present application has executed a transformation for encryption on the shared data, which thus means that the above-mentioned transformation of the expression "$((P \times A) \times B) \times A^{-1} = P \times B$" is implemented.

In this case, when the decryptor 124 executes a transformation by using the key "to the left by M characters," the second encrypted data is turned back into the original shared data.

Another example of a calculation which satisfies the above-mentioned condition for allowing the transformation of the expression "$((PxA) \times B) \times A^{-1} = P \times B$" is a calculation using the four arithmetic operations.

For example, when the encryptor 123 of the communication device 100 corresponding to the first communication device of the present application executes a data transformation of adding a numerical value "N" to a certain data string, in this case the numerical value "N" becomes the key for the communication device 100 corresponding to the first communication device of the present invention. Next, when the encryptor 123 of the communication device 100 corresponding to the second communication device of the present application executes a data transformation of adding the numerical value "M" to the data string that has been transformed by the encryptor 123 of the communication device 100 corresponding to the first communication device of the present application, and then the decryptor 124 of the communication device 100 corresponding to the first communication device of the present application executes a transformation of subtracting the numerical value **"N"** from the data string transformed by the encryptor 123, as a result, the data string after this transformation is data in which the numerical value "M" has been added to the original data string (shared data) before the transformation by the encryptor 123 of the communication device 100 corresponding to the first communication device of the present application. This is equivalent to the data string obtained when the encryptor 123 of the communication device 100 corresponding to the second communication device of the present application has executed a transformation for encryption on the shared data.

Therefore, even when the encryptor 123 and the decryptor 124 of both of the communication devices 100 execute calculations as described above, the above-mentioned transformation of the expression "$((P \times A) \times B) \times A^{-1} = P \times B$" is implemented.

In this case, the decryptor 124 executes a transformation of subtracting the numerical value "M," to thereby turn the second encrypted data back into the original shared data.

Even when other operations of the four arithmetic operations are used, the transformation of the expression "$((P \times A) \times B) \times A^{-1} = P \times B$" can be similarly implemented.

In any case, in this embodiment, the shared data is shared between the two communication devices 100, which respectively correspond to the first communication device and the second communication device of the present invention. For example, the shared data is transmitted to and stored in the controller 122 in the communication device 100 corresponding to the second communication device of the present application, and in some cases is transmitted outside the data processing module 120 and used as appropriate. The shared data may be transmitted to and stored in the RAM 113 or the large-capacity recording device of the communication device 100 via the output module 127 and the interface 114.

The shared data may be a common key used when the two communication devices 100 execute publicly-known or well-known common key type encrypted communication after the shared data is shared, or may be secret information used by each of the two communication devices 100 to individually generate or select the same common key. In such a case, the two communication devices can use the same common key which is the shared data or the same common key generated from the shared data which has been shared, for example, to subsequently execute common key type encrypted communication.

Moreover, it is also possible to not execute common key type encrypted communication, and to transmit and receive data between the two communication devices 100 by using the above-mentioned method from the beginning. The process of sharing the shared data in the present application can be regarded as a process of transmitting shared data from a certain communication device 100 to another communication device 100. Therefore, for example, when all of the data transmitted and received between the two communication devices 100 is considered to be shared data, and communication between the two communication devices 100 is considered to be based on the above-mentioned first encrypted data, second/first encrypted data, and second encrypted data, this means that the transmission and reception of data between the two communication devices 100 are executed by using a new type of encrypted communication which is not common key type encrypted communication.

In addition, in the embodiment described above, all of the communication devices 100 are capable of fulfilling the roles of both of the first communication device and the second communication device of the present invention.

However, among the communication devices 100, it suffices that the communication devices that are clearly required to function only as the first communication device of the present application, or the communication devices that are clearly required to function only as the second communication device of the present application, only include the functions required to function as one of the two communication devices.

For example, when one of the communication devices 100 is a server that allows the communication device 100 possessed by a user to view a website, it is often the case that even though this server is accessed from the communication device 100 possessed by the user, the communication device 100 possessed by the user is not accessed from the server. In this case, the communication device 100, which is a server, is required to have only the characteristics of the second communication device of the present invention. Meanwhile, in such a case, it is also possible for, for example, several of the communication devices 100 possessed by users to have only the characteristics of the first communication device of the present invention.

The encrypted communication by the communication system of this embodiment is as described above, and a relationship among the first path, the second path, and the third path is such that the second path does not overlap at least one of the first path or the third path except at the start point and the end point of the two paths. Description is now given of how the first path determinator 125 in the communication device 100 corresponding to the first communication device of the present application and the second path determinator 126 in the communication device 100 corresponding to the second communication device of the present application determine such a first path, second path, and third path.

Description is given below of each of the following situations: "1. When first path and second path do not overlap except at start point and end point" and "2. When second path and third path do not overlap except at start point and end point."

Regarding the above-mentioned situation 1, description is given of three situations, namely, "1-1. When (at least part of) first path and second path are determined in advance," "1-2. When communication device 100 corresponding to second communication device of present application determines second path," and "1-3. When communication device 100 corresponding to first communication device of present application determines second path."

Regarding the above-mentioned situation 2, description is given of two situations, namely, "2-2. When communication device 100 corresponding to first communication device of present application determines third path," and "2-3. When communication device 100 corresponding to second communication device of present application determines third path."

Each of those situations is now described in order.

<1-1. When (at least part of) first path and second path are determined in advance>

Description is given of the situation in which the first path and the second path are determined in advance. Several cases can be considered even in this situation.

A first case is as follows.

In the first case, of the two communication devices 100 which are specific communication devices, the communication device 100 which is the first communication device of the present application and the communication device 100 which is the second communication device are each capable of executing at least two common types of communication among an Internet line, a communication carrier line, a global IP-assigned IP-VPN, a private network, a short message service (SMS), and a multimedia message service (MMS).

For example, when the two communication devices 100 are both capable of executing communication by using two different communication lines, that is, an Internet line and an SMS, in such a case, it is assumed that both communication devices 100 grasp that communication can be executed to and from each other by using two common communication lines. For example, owners of the two communication devices 100 may contact each other in advance by electronic mail or SNS, and register in each of their own communication device 100 two communication lines that can be used for communication to and from the two communication devices 100. Information for specifying the two communication lines that can be used for communication to and from the two communication devices 100 can be recorded in the own communication device 100 by operating the input device 102, for example. The above-mentioned information for specifying the two communication lines input from the input device 102 in the two communication devices 100 is recorded in, for example, each of the first path determinator 125 and the second path determinator 126 via the interface 114, the input module 121, and the controller 122. From a hardware perspective, a device which records the above-mentioned information for specifying the two communication lines in the first path determinator 125 and the second path determinator 126 is a recording medium included in the communication device 100, such as the RAM 113 or the large-capacity recording device.

When the two communication devices 100 which are specific communication devices are both aware of the two or more communication lines that can be used for communication between the two communication devices 100, information indicating that one of the two communication lines is to be used as a first path when that communication device 100 functions as the first communication device of the present application, and another one of the two communication lines is to be used as a second path when that communication device 100 functions as the second communication device of the present application can be recorded in each of those two communication devices 100. For example, in the case of the example described above, information indicating that an Internet line is to be used as the first path can be recorded in the first path determinator 125 of both communication devices 100 and information indicating that an SMS line is to be used as the second path can be recorded in the second path determinator 126 of both communication devices 100. Those pieces of information can be determined after being shared by the users of the two communication devices 100 in the same way as when the information for specifying the two communication lines is recorded in the first path determinator 125 and the second path determinator 126, or, those pieces of information can be determined, for example, automatically (without an intention by the users) by using a publicly-known or well-known technology based on the function of the computer program for causing the communication devices 100 to function as the communication device of the present application. Further, from a hardware perspective, a device which records those pieces of information in the first path determinator 125 and the second path determinator 126 may be a recording medium included in the communication device 100, such as the RAM 113 or the large-capacity recording device.

When encrypted communication is executed under a state in which such advance preparation is complete, and the first encrypted data is to be transmitted from the communication device 100 corresponding to the first communication device of the present application to the communication device 100 corresponding to the second communication device of the present application, the first path determinator 125 in the communication device 100 corresponding to the first communication device determines the first path to be a path which used the Internet line determined in advance, and generates first path information, which is data that determines at least a part of the path. The first path information is transmitted from the first path determinator 125 to the transmission and reception mechanism via the output module 127 and the interface 114. The transmission and reception mechanism transmits, in accordance with the first path information, the first encrypted data to the communication device 100 corresponding to the second communication device of the present application via the Internet line, which is a part of the network 400.

Further, when the second/first encrypted data is transmitted from the communication device 100 corresponding to the second communication device of the present application to the communication device 100 corresponding to the first communication device of the present application, the second path determinator 126 in the communication device 100 corresponding to the second communication device determines the second path to be a path which used the SMS line determined in advance, and generates second path information, which is data that determines at least a part of the path. The second path information is transmitted from the second path determinator 126 to the transmission and reception mechanism via the output module 127 and the interface 114. The transmission and reception mechanism transmits, in accordance with the second path information, the second/first encrypted data to the communication device 100 corresponding to the first communication device of the present application via the SMS line, which is a part of the network 400.

At this stage, the first path and the second path have become different, and thus the condition the first path, the second path, and the third path are required to satisfy in the present invention (the condition that the second path does not overlap at least one of the first path or the third path except at the start point and the end point of the two paths; hereinafter referred to as "path condition") is satisfied.

Here, the path condition is already satisfied, and thus it does not matter what the third path is.

In addition, when the second encrypted data is transmitted from the communication device 100 corresponding to the first communication device of the present application to the communication device 100 corresponding to the second communication device of the present application, the transmission and reception mechanism of the communication device 100 corresponding to the first communication device of the present application transmits, for example, in accordance with the first path information received earlier (this information effectively corresponds to third path information), the second encrypted data to the communication device 100 corresponding to the second communication device of the present application via the Internet line, which is a part of the network 400. In this case, it is possible for the first path to be the same as the third path from the start point to the end point, but this is permissible. This example is an example in which the second path and the first path are set in advance so as not to overlap except at the start point and the end point, and is also an example in which the second path and the third path are set in advance so as not to overlap except at the start point and the end point.

However, the third path may be set in advance as a path different from the first path. For example, when information for specifying a third path (for example, information indicating that a communication carrier line is to be used as the third path) different from the first path is recorded in the first path determinator 125 of the communication device 100 corresponding to the first communication device of the present application, the first path determinator 125 transmits the third path information to the transmission and reception mechanism via the output module 127 and the interface 114 before the second encrypted data is transmitted by using the third path. The transmission and reception mechanism of the communication device 100 corresponding to the first communication device of the present application transmits, in accordance with the third path information, the second encrypted data to the communication device 100 corresponding to the second communication device of the present application so as to follow the third path.

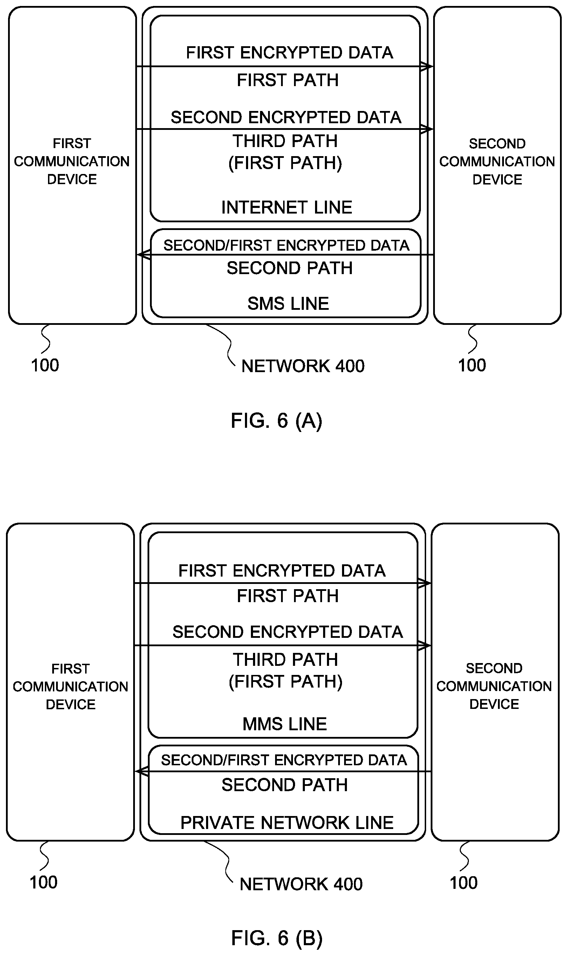

The paths in the above-mentioned three communications (the third path is the same as the first path) are conceptually illustrated in FIG. 6(A).

In this case, the first path is a path on an Internet line, and the second path is a path on an SMS line. Therefore, both paths are inevitably different paths except at the start point and the end point of the two paths.

In this case, the first path information for specifying the first path generated by the first path determinator 125 is not necessarily required to be information for specifying the entire length of the first path, and it suffices that the first path information is information for specifying that "the first path is a path on an Internet line." Similarly, the second path information for specifying the second path generated by the second path determinator 126 is not necessarily required to be information for specifying the entire length of the second path, and it suffices that the second path information is information for specifying that "the second path is a path on an SMS line." The same applies to the third path information regardless of whether the third path information is the same as the first path information.

Next, a second case is described.

The first case when the first path and the second path are determined in advance is a case in which, as described above, one of the first path and the second path is a path on an Internet line, and another one of the first path and the second path is a path on another line that is not the Internet line.

Meanwhile, in the second case, neither of the first path and the second path is set as a line on an Internet line, but rather the first path and the second path are set as paths on two different types of lines.

In the second case described below, the first path is a path on a multimedia message service (MMS) line, and the second path is a path on a private network line. As a matter of course, those two lines are illustrative.

When encrypted communication is executed under a state in which advance preparation similar to that described in the first case is complete, and the first encrypted data is to be transmitted from the communication device 100 corresponding to the first communication device of the present application to the communication device 100 corresponding to the second communication device of the present application, the first path determinator 125 in the communication device 100 corresponding to the first communication device determines the first path to be a path which used the MMS line determined in advance, and generates first path information, which is data that determines at least a part of the path. The transmission and reception mechanism transmits, in accordance with the first path information, the first encrypted data to the communication device 100 corresponding to the second communication device of the present application via the MMS line, which is a part of the network 400.

Further, when the second/first encrypted data is transmitted from the communication device 100 corresponding to the second communication device of the present application to the communication device 100 corresponding to the first communication device of the present application, the second path determinator 126 in the communication device 100 corresponding to the second communication device determines the second path to be a path which used the private network line determined in advance, and generates second path information, which is data that determines at least a part of the path. The transmission and reception mechanism transmits, in accordance with the second path information, the second/first encrypted data to the communication device 100 corresponding to the first communication device of the present application via the private network line, which is a part of the network 400.

At this stage, the first path and the second path have become different. Thus, the path condition is already satisfied, and thus it does not matter what the third path is.

In addition, when the second encrypted data is transmitted from the communication device 100 corresponding to the first communication device of the present application to the communication device 100 corresponding to the second communication device of the present application, the transmission and reception mechanism of the communication device 100 corresponding to the first communication device of the present application transmits, for example, in accordance with the first path information received earlier, the second encrypted data to the communication device 100 corresponding to the second communication device of the present application via the MMS line, which is a part of the network 400. In this case, it is possible for the first path to be the same as the third path from the start point to the end point, but the first path and the third path are not necessarily limited thereto. This example is an example in which the second path and the first path are set in advance so as not to overlap except at the start point and the end point, and is also an example in which the second path and the third path are set in advance so as not to overlap except at the start point and the end point.

The paths in the above-mentioned three communications are conceptually illustrated in FIG. 6(B).

In this case, the first path is a path on an MMS line, and the second path is a path on a private network line. Therefore, both paths are inevitably different paths except at the start point and the end point of the two paths.

Thus, the first path information for specifying the first path generated by the first path determinator 125 is not necessarily required to be information for specifying the entire length of the first path, and it suffices that the first path information is information for specifying that "the first path is a path on an MMS line." Similarly, the second path information for specifying the second path generated by the second path determinator 126 is not necessarily required to be information for specifying the entire length of the second path, and it suffices that the second path information is information for specifying that "the second path is a path on a private network line." The same applies to the third path information regardless of whether the third path information is the same as the first path information.

Next, a third case is described.

The first case and the second case when the first path and the second path are determined in advance are, as described above, cases in which one of the first path and the second path and another one thereof are paths on lines different from each other.

Meanwhile, in the third case, the first path and the second path are both set as a path on an Internet line.

In the third case, naturally, the communication device 100 corresponding to the first communication device of the present application and the communication device 100 corresponding to the second communication device of the present application are both required to be capable of executing communication by an Internet line. After both communication devices 100 are confirmed in advance to be capable of such communication, the data required to generate each of first path information and second path information as described below is recorded in the first path determinator 125 and the second path determinator 126 of both communication devices 100.

When encrypted communication is executed under a state in which such advance preparation is complete, and the first encrypted data is to be transmitted from the communication device 100 corresponding to the first communication device of the present application to the communication device 100 corresponding to the second communication device of the present application, the first path determinator 125 in the communication device 100 corresponding to the first communication device determines the first path to be a path which used the Internet line determined in advance, and generates first path information, which is data that determines at least a part of the path. The transmission and reception mechanism transmits, in accordance with the first path information, the first encrypted data to the communication device 100 corresponding to the second communication device of the present application via the Internet line, which is a part of the network 400.

Further, when the second/first encrypted data is transmitted from the communication device 100 corresponding to the second communication device of the present application to the communication device 100 corresponding to the first communication device of the present application, the second path determinator 126 in the communication device 100 corresponding to the second communication device determines the second path to be a path which used the Internet line determined in advance, and generates second path information, which is data that determines at least a part of the path. The transmission and reception mechanism transmits, in accordance with the second path information, the second/first encrypted data to the communication device 100 corresponding to the first communication device of the present application via the Internet line, which is a part of the network 400.

At this stage, the first path and the second path have become different. As a result, the path condition is already satisfied, and thus it does not matter what the third path is.

In addition, when the second encrypted data is transmitted from the communication device 100 corresponding to the first communication device of the present application to the communication device 100 corresponding to the second communication device of the present application, the transmission and reception mechanism of the communication device 100 corresponding to the first communication device of the present application transmits, for example, in accordance with the first path information received earlier, the second encrypted data to the communication device 100 corresponding to the second communication device of the present application via the Internet line, which is a part of the network 400. In this case, it is possible for the third path to be the same as the first path from the start point to the end point, but this is permissible. This example is an example in which the second path and the first path are set in advance so as not to overlap except at the start point and the end point, and is also an example in which the second path and the third path are set in advance so as not to overlap except at the start point and the end point.

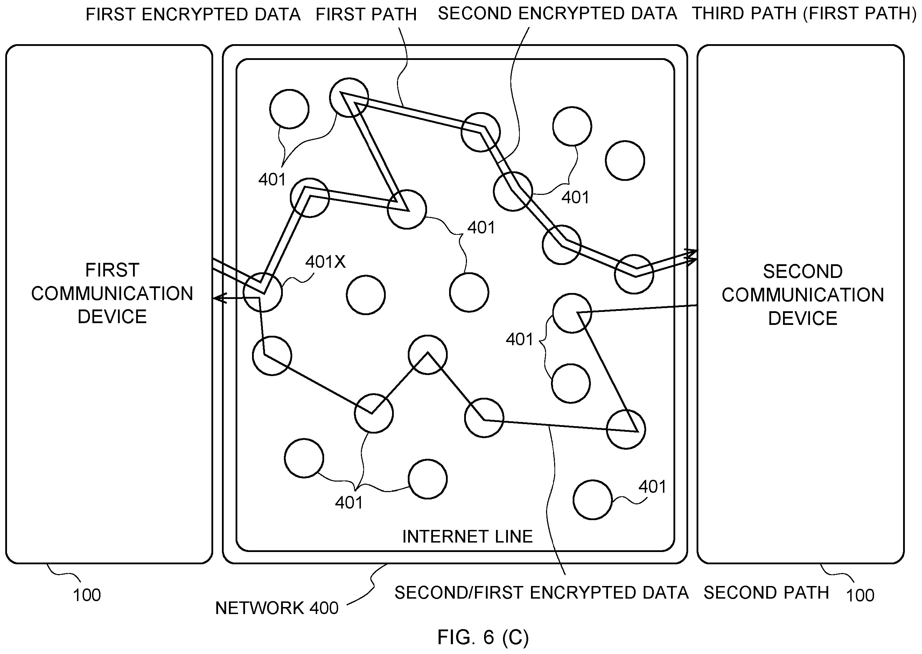

The paths in the above-mentioned three communications are conceptually illustrated in FIG. 6(C). Each circle denoted by reference symbol 401 included in the Internet line in FIG. 6(C) is a communication component which is a component for implementing an Internet communication. The communication components 401 may be publicly-known or well-known components, such as a server, a router, a switch, or a core router, a core switch, or a software switch possessed by a communication carrier or the like.

In this case, the first path and the second path are both paths on the Internet, and thus an approach which uses different lines cannot be used as an approach to be used to prevent the two paths from overlapping except at the start point and the end point of the two paths.

In this embodiment, the first path for transmitting the first encrypted data from the communication device 100 as the first communication device to the communication device 100 as the second communication device and the second path for transmitting the second/first encrypted data from the communication device 100 as the second communication device to the communication device 100 as the first communication device are set so that the first path and the second path are paths which do not include the same communication components 401.

Currently, virtual path and virtual circuit technologies are widely used to virtually separate paths even for the same communication components. When such technology is used, the communication components (switches and the like) are also virtualized as software switches. For example, software switch services such as UNO (trademark) provided by NTT Communications Corporation and WVS2 (trademark) provided by KDDI Corporation fall under this category. Even in a case in which the two communication paths include the same communication components 401, when using the technology as described in this paragraph consequently prevents data from passing through a switch in which the two paths overlap, in the present application it is considered that the two paths "do not include the same communication components 401." The same applies to the examples described later mentioning the communication components 401.

However, a communication component 401X on the first path which is positioned first after the data leaves the communication device 100 as the first communication device is also a point through which the second path passes. For example, a communication device 100 which is a smartphone serving as the first communication device may be connected to the Internet line via a router connected to the communication device 100 via Wi-Fi (trademark). In such a case, it is inevitable that the router (communication component 401X) correspond to the start point of the first path and the end point of the second path when viewed from the communication device 100 as the first communication device. In such a case, it is difficult to set the first path and the second path so that the two paths do not overlap at all. Taking such a point into consideration, in the example illustrated in FIG. 6(C), the two paths are set so that the paths do not overlap except at the start point and the end point in order to minimize the range that the two paths overlap. As a matter of course, it is better that there is no overlap at all between the first path and the second path along the entire lengths of the paths, and it is preferred when such paths can be used.

In order to implement such a first path and a second path, not only is it required that the two communication devices 100 can communicate by using an Internet line, but it is also required that the two communication devices 100 can set both of the first path and the second path so that the first path and the second path do not overlap except at the start point and the end point. Further, it is required that the first path determinator 125 and the second path determinator 126 in the two communication devices 100 can generate each of first path information and second path information which enable this configuration.

In order to generate the first path information and the second path information, the device on the transmission side can use a technology for determining the communication paths, for example, source routing, segment routing, which is an applied example of source routing, or MANET (or DSR, which is a specific applied example of MANET).

For example, the first path determinator 125 of the two communication devices 100 in this embodiment generates, as the first path information, information for specifying all the communication components 401 positioned on the first path from the relevant communication device 100 to the communication device 100 of the opposite party (for example, data including, as one set, the IP address of each communication component 401, which is information for specifying the communication components 401 which are to be arranged on the first path in order). Meanwhile, the second path determinator 126 of the two communication devices 100 generates, as the second path information, information for specifying all the communication components 401 positioned on the second path from the relevant communication device 100 to the communication device 100 of the opposite party (for example, data including, as one set, the IP address of each communication component 401, which is information for specifying the communication components 401 which are to be arranged on the second path in order). For example, when the above-mentioned first path information and second path information are recorded in advance in the first path determinator 125 and the second path determinator 126 of both communication devices 100, and the first path determinator 125 and the second path determinator 126 transmit those recorded pieces of information from the output module 127 to the transmission and reception mechanism as the first path information and the second path information, the first path and the second path when those two communication devices 100 execute encrypted communication are always the same. From a hardware perspective, a device which records the above-mentioned information for specifying the two communication lines in the first path determinator 125 and the second path determinator 126 is a recording medium included in the communication device 100, such as the RAM 113 or the large-capacity recording device.

For example, by configuring in the manner described above, the first path and the second path become paths that do not overlap except at the start point and the end point of the two paths, as illustrated in FIG. 6(C).

<1-2. When communication device 100 corresponding to second communication device of present application determines second path>

Even when the communication device 100 corresponding to the second communication device determines the second path, several cases can be considered.
A first case is as follows.
In the first case, of the two communication devices 100 which are specific communication devices, the communication device 100 which is the first communication device of the present application and the communication device 100 which is the second communication device are each capable of executing at least two common types of communication among an Internet line, a communication carrier line, a global IP-assigned IP-VPN, a private network, a short message service (SMS), and a multimedia message service (MMS).
For example, when the two communication devices 100 are both capable of executing communication by using two different communication lines, that is, an Internet line and an SMS, in such a case, it is assumed that both communication devices 100 also grasp that communication can be executed to and from each other by using two common communication lines. For example, the owners of the two communication devices 100 may contact each other in advance by electronic mail or SNS, and register in each of their own communication device 100 two communication lines that can be used for communication to and from the two communication devices 100. Information for specifying the two communication lines that can be used for communication to and from the two communication devices 100 can be recorded in the own communication device 100 by operating the input device 102, for example. The above-mentioned information for specifying the two communication lines input from the input device 102 in the two communication devices 100 is recorded in, for example, each of the first path determinator 125 and the second path determinator 126 via the interface 114, the input module 121, and the controller 122. From a hardware perspective, the device which records the above-mentioned information for specifying the two communication lines in the first path determinator 125 and the second path determinator 126 is a recording medium included in the communication device 100, such as the RAM 113 or the large-capacity recording device.

When encrypted communication is executed under a state in which such advance preparation is complete, and the first encrypted data is to be transmitted from the communication device 100 corresponding to the first communication device of the present application to the communication device 100 corresponding to the second communication device of the present application, the first path determinator 125 in the communication device 100 corresponding to the first communication device randomly determines, for example, one of, for example, two communication lines (for example, an Internet line and an SMS line) which can be used by both of the two communication devices 100 as the communication line on which the first path is to be created (however, this communication line is not required to be determined randomly, and may be determined by using a weighting technology or a load balancer technology, for example; hereinafter the same applies in all cases in which the term "randomly" is used), and generates first path information for enabling the first path to be generated on the determined communication line. The first path information is transmitted from the first path determinator 125 to the transmission and reception mechanism via the output module 127 and the interface 114. The transmission and reception mechanism transmits, in accordance with the first path information, the first encrypted data to the communication device 100 corresponding to the second communication device of the present application via the Internet line, which is a part of the network 400.
Further, when the second/first encrypted data is transmitted from the communication device 100 corresponding to the second communication device of the present application to the communication device 100 corresponding to the first communication device of the present application, the second path determinator 126 in the communication device 100 corresponding to the second communication device determines the second path as described below. In the communication device 100 corresponding to the second communication device of the present application that has received the first encrypted data, as described above, the first encrypted data is transmitted from the transmission and reception mechanism to the controller 122 in the data processing module 120 via the interface 114 and the input module 121. At that time, the controller 122 extracts the data attached to the first encrypted data and indicating which communication line has been used for the communication executed by using the first path, and transmits the extracted data to the second path determinator 126. The second path determinator 126 uses the data to specify which communication line has been used for the communication executed by using the first path. Further, the second path determinator 126 determines a communication line of a type different from the above-specified communication line as the communication line on which a second path is to be created. In this embodiment, the first path is a path on an Internet line, and hence an SMS line, which is another one of the two communication lines that can be used by the two communication devices 100, is determined as the line on which the second path is to be created. When there are three or more types of lines that the two communication devices 100 can use for communication, the second path determinator 126 randomly, for example, determines one of the remaining two or more lines other than the Internet line as the line on which the second path is to be created. The second path determinator 126 generates second path information, which is data that determines at least a part of the determined second path. The second path information is transmitted from the second path determinator 126 to the transmission and reception mechanism via the output module 127 and the interface 114. The transmission and reception mechanism transmits, in accordance with the second path information, the second/first encrypted data to the communication device 100 corresponding to the first communication device of the present application via the SMS line, which is a part of the network 400.

At this stage, the first path and the second path have become different. As a result, the path condition is already satisfied, and thus it does not matter what the third path is.

In addition, when the second encrypted data is transmitted from the communication device 100 corresponding to the first communication device of the present application to the communication device 100 corresponding to the second communication device of the present application, the transmission and reception mechanism of the communication device 100 corresponding to the first communication device of the present application transmits, for example, in accordance with the first path information received earlier, the second encrypted data to the communication device 100 corresponding to the second communication device of the present application via the Internet line, which is a part of the network 400. In this case, it is possible for the first path to be the same as the third path from the start point to the end point, but this is permissible. This example is also an example in which the second path is determined by the second path determinator 126 of the communication device 100 which is the second communication device of the present application so that the second path and the first path do not overlap except at the start point and the end point, and is also an example in which the second path is determined by the second path determinator 126 of the communication device 100 which is the second communication device of the present application so that the second path and the third path do not overlap except at the start point and the end point.

The paths in the above-mentioned three communications are the same as those illustrated in FIG. 6(A) described above.

In this case, the first path is a path on an Internet line, and the second path is a path on an SMS line. Therefore, both paths are inevitably different paths except at the start point and the end point of the two paths.

In the case of this example, the first path information for specifying the first path generated by the first path determinator 125 is not necessarily required to be information for specifying the entire length of the first path, and it suffices that the first path information is information for specifying that "the first path is a path on an Internet line." Similarly, the second path information for specifying the second path generated by the second path determinator 126 is not necessarily required to be information for specifying the entire length of the second path, and it suffices that the second path information is information for specifying that "the second path is a path on an SMS line." The same applies to the third path information regardless of whether the third path information is the same as the first path information.

Next, a second case is described.

The first case when the second path is determined by the communication device 100 corresponding to the second communication device of the present application is, as described above, a case in which one of the first path and the second path is a path on an Internet line, and another one of the first path and the second path is a path on another line that is not the Internet line.

Meanwhile, in the second case, neither of the first path and the second path is set as a line on an Internet line, but rather the first path and the second path are set as paths on two different types of lines.

In the second case, the first path is a path on a multimedia message service (MMS) line, and the second path is a path on a private network line, which is merely an example as a matter of course.

The method for setting the lines on which the first path and the second path are to be formed to be different lines may be the same as in the first case. Whether or not the third path is set so as to be different from the first path may be freely selected, and the method for setting the lines to be the same and the method for setting the lines to be different from each other are as described above.

The first to third paths in the encrypted communication in this case are the same as those illustrated in FIG. 6(B).

Next, a third case is described.

In the third case, the first path and the second path are both set as a path on an Internet line.

In the third case, naturally, the communication device 100 corresponding to the first communication device of the present application and the communication device 100 corresponding to the second communication device of the present application are both required to be capable of executing communication by an Internet line. After both communication devices 100 are confirmed in advance to be capable of such communication, the data required to generate each of first path information and second path information as described below is recorded in the first path determinator 125 and the second path determinator 126 of both communication devices 100.

When encrypted communication is executed under a state in which such advance preparation is complete, and the first encrypted data is to be transmitted from the communication device 100 corresponding to the first communication device of the present application to the communication device 100 corresponding to the second communication device of the present application, the first path determinator 125 in the communication device 100 corresponding to the first communication device determines the first path to be a path which used the Internet line, and generates first path information, which is data that determines at least a part of the path. The transmission and reception mechanism transmits, in accordance with the first path information, the first encrypted data to the communication device 100 corresponding to the second communication device of the present application via the Internet line, which is a part of the network 400. The first path information in this case may be information which specifies the entire length of the first path, or may be information which specifies only that "the first path is created on an Internet line."

Further, when the second/first encrypted data is transmitted from the communication device 100 corresponding to the second communication device of the present application to the communication device 100 corresponding to the first communication device of the present application, the second path determinator 126 in the communication device 100 corresponding to the second communication device determines the second path to be a path which used the Internet line, and generates second path information, which is data that determines at least a part of the path. The transmission and reception mechanism transmits, in accordance with the second path information, the second/first encrypted data to the communication device 100 corresponding to the first communication device of the present application via the Internet line, which is a part of the network 400.

In this case, the second path determinator 126 in the communication device 100 corresponding to the second communication device determines the second path as described below and generates the second path information as follows. The communication device 100 corresponding to the second communication device receives the first encrypted data sent from the communication device 100 corresponding to the first communication device of the present application along the first path. As illustrated in FIG. 6(C), the first encrypted data is transmitted along the created first path via a large number of communication components 401.

The second path determinator 126 first specifies the first path. MPLS or MANET can be used for this purpose. As the MANET, dynamic source routing (DSR), which is a lower-level technology of MANET, can be used.

The same applies to all the cases described later that use MANET.

For example, in this example, to the first encrypted data, information for specifying the large number of communication components 401 through which the first encrypted data has passed (for example, data including, as one set, the IP address of each communication component 401, which is information for specifying the communication components 401 which are arranged on the first path in order) is attached. For example, in the case of DSR, information relating to all of the path from the transmission node to the receiving node is included in the header of the packets constituting the transmitted data. The first encrypted data received by the communication device 100 corresponding to the second communication device of the present application is transmitted to the controller 122 via the transmission and reception mechanism, the interface 114, and the input module 121. The above-mentioned data is also attached to the first encrypted data received by the controller 122. The controller 122 transmits the data attached to the first encrypted data to the second path determinator 126. The second path determinator 126 specifies, based on the above-mentioned data received from the controller 122, all the communication components 401 included in the first path and the order in which those communication components 401 are arranged, to thereby specify the entire length of the first path as a result.

Next, the second path determinator 126 determines the second path as a path which does not overlap the first path except at the start point and the end point of the two paths. This determination of the paths can be executed by using, for example, source routing, segment routing, which is an applied example of source routing, or MANET (or DSR, which is a specific applied example of MANET).

For example, the second path determinator 126 selects the communication components 401 arranged on the second path which do not overlap the communication components 401 arranged on the first path except at the start point and the end point of the two paths. For example, the second path information is one set of data in which information for specifying all the communication components 401 arranged on the second path or through which the second path passes (for example, the IP addresses of all the communication components 401 through which the second path passes) is arranged in the order in which the communication components 401 are arranged. The second path determinator 126 transmits the generated second path information to the transmission and reception mechanism via the output module 127. The transmission and reception mechanism transmits the second/first encrypted data to the communication device 100 corresponding to the first communication device of the present application along the second path specified by the second path information.

At this stage, the first path and the second path have become different. Both of the first path and the second path are paths on an Internet line, but because so-called multi-homing is executed, the two paths do not overlap each other. As a result, the path condition is already satisfied, and thus it does not matter what the third path is.

In addition, when the second encrypted data is transmitted from the communication device 100 corresponding to the first communication device of the present application to the communication device 100 corresponding to the second communication device of the present application, the transmission and reception mechanism of the communication device 100 corresponding to the first communication device of the present application transmits, for example, in accordance with the first path information received earlier, the second encrypted data to the communication device 100 corresponding to the second communication device of the present application via the Internet line, which is a part of the network 400. In this case, it is possible for the third path to be the same as the first path from the start point to the end point, but this is permissible. This example is an example in which the second path determinator 126 of the communication device 100 corresponding to the second communication device of the present application determines the second path so that the second path and the first path do not overlap except at the start point and the end point, and is also an example in which the second path determinator 126 of the communication device 100 corresponding to the second communication device of the present application determines the second path so that the second path and the third path do not overlap except at the start point and the end point.

The first path, the second path, and the third path used in the encrypted communication in the third case are as illustrated in FIG. 6(C).

<1-3. When communication device 100 corresponding to first communication device of present application determines second path>

Even when the communication device 100 corresponding to the first communication device determines the second path, several cases can be considered.

A first case is as follows.

In the first case, of the two communication devices 100 which are specific communication devices, the communication device 100 which is the first communication device of the present application and the communication device 100 which is the second communication device are each capable of executing at least two common types of communication among an Internet line, a communication carrier line, a global IP-assigned IP-VPN, a private network, a short message service (SMS), and a multimedia message service (MMS).

For example, when the two communication devices 100 are both capable of executing communication by using two different communication lines, that is, an Internet line and an SMS, in such a case, it is assumed that both communication devices 100 also grasp that communication can be executed to and from each other by using two common communication lines. For example, the owners of the two communication devices 100 may contact each other in advance by electronic mail or SNS, and register in each of their own communication device 100 two communication lines that can be used for communication to and from the two communication devices 100. Information for specifying the two communication lines that can be used for communication to and from the two communication devices 100 can be recorded in the own communication device 100 by operating the input device 102, for example. The above-mentioned information for specifying the two communication lines input from the input device 102 in the two communication devices 100 is recorded in, for example, each of the first path determinator 125 and the second path determinator 126 via the interface 114, the input module 121, and the controller 122. From a hardware perspective, the device which records the above-mentioned information for specifying the two communication lines in the first path determinator 125 and the second path determinator 126 is a recording medium included in the communication device 100, such as the RAM 113 or the large-capacity recording device.

When encrypted communication is executed under a state in which such advance preparation is complete, and the first encrypted data is to be transmitted from the communication device 100 corresponding to the first communication device of the present application to the communication device 100 corresponding to the second communication device of the present application, the first path determinator 125 in the communication device 100 corresponding to the first communication device randomly determines, for example, one of, for example, two communication lines (for example, an Internet line and an SMS line) which can be used by both of the two communication devices 100 as the communication line on which the first path is to be created, and generates first path information for enabling the first path to be generated on the determined communication line. Meanwhile, the first path determinator 125 determines, for example, of the two communication lines (for example, the Internet line and the SMS line) which can be used by both of the two communication devices 100, another one communication line other than the determined communication line in order to generate the first path on the another one communication line as the communication line on which the second path is to be created, and generates second path information for enabling the second path to be generated on the determined another one communication line. That is, in this example, the second path, which is a path for returning the second/first encrypted data from the communication device 100 as the second communication device of the present application to the communication device 100 as the first communication device of the present application via the network 400, is also determined by the communication device 100 which is the first communication device.

The first path information and the second path information are transmitted from the first path determinator 125 to the transmission and reception mechanism via the output module 127 and the interface 114. The transmission and reception mechanism transmits, in accordance with the first path information, the first encrypted data to the communication device 100 corresponding to the second communication device of the present application via the Internet line, which is a part of the network 400. The second path information is transmitted together with the first encrypted data to the communication device 100 corresponding to the second communication device of the present application.

Further, when the second/first encrypted data is transmitted from the communication device 100 corresponding to the second communication device of the present application to the communication device 100 corresponding to the first communication device of the present application, the second path determinator 126 in the communication device 100 corresponding to the second communication device determines the second path as described below. In the communication device 100 corresponding to the second communication device of the present application that has received the first encrypted data, as described above, the first encrypted data is transmitted from the transmission and reception mechanism to the controller 122 in the data processing module 120 via the interface 114 and the input module 121. At that time, the controller 122 extracts the second path information attached to the first encrypted data, and transmits the second path information to the second path determinator 126. The second path determinator 126 determines the path indicated by the second path information as the second path. When the second path information is, for example, "use an SMS line as the second path," the second path determinator 126 determines the second path to be a path on an SMS.

The second path determinator 126 generates second path information, which is data that determines at least a part of the determined second path, and which indicates, for example, "use an SMS line as the second path." The second path information is transmitted from the second path determinator 126 to the transmission and reception mechanism via the output module 127 and the interface 114. The transmission and reception mechanism transmits, in accordance with the second path information, the second/first encrypted data to the communication device 100 corresponding to the first communication device of the present application via the SMS line, which is a part of the network 400.

At this stage, the first path and the second path have become different. As a result, the path condition is already satisfied, and thus it does not matter what the third path is.

In addition, when the second encrypted data is transmitted from the communication device 100 corresponding to the first communication device of the present application to the communication device 100 corresponding to the second communication device of the present application, the transmission and reception mechanism of the communication device 100 corresponding to the first communication device of the present application transmits, for example, in accordance with the first path information received earlier, the second encrypted data to the communication device 100 corresponding to the second communication device of the present application via the Internet line, which is a part of the network 400. In this case, it is possible for the third path to be the same as the first path from the start point to the end point, but this is permissible. This example is an example in which the first path determinator 125 in the communication device 100 corresponding to the first communication device of the present application determines the second path and the first path so that the second path and the first path do not overlap except at the start point and the end point, and is also an example in which the first path determinator 125 in the communication device 100 corresponding to the first communication device of the present application determines the second path and the third path so that the second path and the third path do not overlap except at the start point and the end point.

The paths in the above-mentioned three communications are the same as those illustrated in FIG. 6(A) described above.

In this case, the first path is a path on an Internet line, and the second path is a path on an SMS line. Therefore, both paths are inevitably different paths except at the start point and the end point of the two paths.

In the case of this example, the first path information for specifying the first path generated by the first path determinator 125 is not necessarily required to be information for specifying the entire length of the first path, and it suffices that the first path information is information for specifying that "the first path is a path on an Internet line." Similarly, the second path information for specifying the second path generated by the second path determinator 126 is not necessarily required to be information for specifying the entire length of the second path, and it suffices that the second path information is information for specifying that "the second path is a path on an SMS line." The same applies to the third path information regardless of whether the third path information is the same as the first path information.

Next, a second case is described.

The first case when the second path is determined by the communication device 100 corresponding to the first communication device of the present application is, as described above, a case in which one of the first path and the second path is a path on an Internet line, and another one of the first path and the second path is a path on another line that is not the Internet line.

Meanwhile, in the second case, neither of the first path and the second path is set as a line on an Internet line, but rather the first path and the second path are set as paths on two different types of lines.

In the second case, the first path is a path on a multimedia message service (MMS) line, and the second path is a path on a private network line, which is merely an example as a matter of course.

The method for setting the lines on which the first path and the second path are to be formed to be different lines may be the same as in the first case. Whether or not the third path is set so as to be different from the first path may be freely selected, and the method for setting the lines to be the same and the method for setting the lines to be different from each other are as described above.

The first to third paths in the encrypted communication in this case are the same as those illustrated in FIG. 6(B).

Next, a third case is described.

In the third case, the first path and the second path are both set as a path on an Internet line.

In the third case, naturally, the communication device 100 corresponding to the first communication device of the present application and the communication device 100 corresponding to the second communication device of the present application are both required to be capable of executing communication by an Internet line. After both communication devices 100 are confirmed in advance to be capable of such communication, the data required to generate each of first path information and second path information as described below is recorded in the first path determinator 125 and the second path determinator 126 of both communication devices 100.

When encrypted communication is executed under a state in which such advance preparation is complete, and the first encrypted data is to be transmitted from the communication device 100 corresponding to the first communication device of the present application to the communication device 100 corresponding to the second communication device of the present application, the first path determinator 125 in the communication device 100 corresponding to the first communication device determines the first path to be a path which used the Internet line, and generates first path information, which is data that determines at least a part of the path.

Meanwhile, the first path determinator 125 determines a path which uses an Internet line and does not overlap the first path except at the start point and the end point of the two paths, and generates second path information, which is data that determines at least a part of the path.

The first path information and the second path information both can be generated by using a technology in which a device on the transmission side determines the communication paths. Examples of such a technology include source routing, segment routing, which is an applied example of source routing, and MANET (or DSR, which is a specific applied example of MANET).

The first path information in this example is one set of data in which information (for example, IP addresses) for specifying all the communication components 401 through which the first encrypted data transmitted from the communication device 100 corresponding to the first communication device of the present application to the communication device 100 corresponding to the second communication device of the present application passes is arranged in the order in which the first encrypted data passes. However, the first path information is not limited to this. Further, the second path information in this example is one set of data in which information (for example, IP addresses) for specifying all the communication components 401 through which the second/first encrypted data transmitted from the communication device 100 corresponding to the second communication device of the present application to the communication device 100 corresponding to the first communication device of the present application passes is arranged in the order in which the second/first encrypted data passes. However, the second path information is not limited to this. As a matter of course, it is possible to determine the first path information and the second path information by designating the communication components 401 constituting the first path and the second path so that the condition that the first path and the second path do not overlap except at the start point and the end point of the two paths is satisfied by the communication device 100 as the first communication device alone.

The first path information and the second path information are transmitted from the first path determinator 125 to the transmission and reception mechanism via the output module 127 and the interface 114. The transmission and reception mechanism transmits, in accordance with the first path information, the first encrypted data to the communication device 100 corresponding to the second communication device of the present application via an Internet line, which is a part of the network 400. The second path information is transmitted together with the first encrypted data to the communication device 100 corresponding to the second communication device of the present application.

Further, when the second/first encrypted data is transmitted from the communication device 100 corresponding to the second communication device of the present application to the communication device 100 corresponding to the first communication device of the present application, the second path determinator 126 in the communication device 100 corresponding to the second communication device determines the second path as follows. In the communication device 100 corresponding to the second communication device of the present application that has received the second/first encrypted data, as described above, the second/first encrypted data is transmitted from the transmission and reception mechanism to the controller 122 in the data processing module 120 via the interface 114 and the input module 121. At that time, the controller 122 extracts the second path information attached to the second/first encrypted data, and transmits the extracted second path information to the second path determinator 126. The second path determinator 126 determines the path indicated by the second path information as the second path. The second path connects the plurality of communication components 401 specified by the second path information.

The second path determinator 126 generates the second path information, which is data that determines at least a part of the determined second path. This second path information can be, and in this example is, the same as the second path information itself sent from the communication device 100 as the first communication device of the present application, but the second path information is not limited to this.

The second path information is transmitted from the second path determinator 126 to the transmission and reception mechanism via the output module 127 and the interface 114. The transmission and reception mechanism transmits, in accordance with the second path information, the second/first encrypted data to the communication device 100 corresponding to the first communication device of the present application via the Internet line, which is a part of the network 400.

At this stage, the first path and the second path have become different. As a result, the path condition is already satisfied, and thus it does not matter what the third path is.

In addition, when the second encrypted data is transmitted from the communication device 100 corresponding to the first communication device of the present application to the communication device 100 corresponding to the second communication device of the present application, the transmission and reception mechanism of the communication device 100 corresponding to the first communication device of the present application transmits, for example, in accordance with the first path information received earlier, the second encrypted data to the communication device 100 corresponding to the second communication device of the present application via the Internet line, which is a part of the network 400. In this case, it is possible for the third path to be the same as the first path from the start point to the end point, but this is permissible. This example is an example in which the first path determinator 125 in the communication device 100 corresponding to the first communication device of the present application determines the second path and the first path so that the second path and the first path do not overlap except at the start point and the end point, and is also an example in which the first path determinator 125 in the communication device 100 corresponding to the first communication device of the present application determines the second path and the third path so that the second path and the first path do not overlap except at the start point and the end point.

The paths in the above-mentioned three communications are as illustrated in FIG. 6(C) described above.

In this case, the first path and the second path are both paths on an Internet line, but the first path and the second path do not pass through the same communication components 401 except at the start point and the end point.

<2-2. When communication device 100 corresponding to first communication device of present application determines third path>

Several cases can be considered even when the communication device 100 corresponding to the first communication device determines the third path.
A first case is as follows.
In the first case, first, the advance preparation described in the first case of <1-2> is performed. In this example, it is assumed that the two communication devices 100 which perform encrypted communication can communicate to and from each other by using three lines (for example, an Internet line, an SMS line, and an MMS line).
When encrypted communication is executed under a state in which such advance preparation is complete, and the first encrypted data is to be transmitted from the communication device 100 corresponding to the first communication device of the present application to the communication device 100 corresponding to the second communication device of the present application, the first path determinator 125 in the communication device 100 corresponding to the first communication device of the present application randomly determines, for example, one of, for example, three communication lines (for example, an Internet line, an SMS line, and an MMS line) which can be used by both of the two communication devices 100 as the communication line on which the first path is to be created, and generates first path information for enabling the first path to be generated on the determined communication line. The first path information is transmitted from the first path determinator 125 to the transmission and reception mechanism via the output module 127 and the interface 114. The transmission and reception mechanism transmits, in accordance with the first path information, the first encrypted data to the communication device 100 corresponding to the second communication device of the present application via the Internet line, which is a part of the network 400. Here, it is assumed that an Internet line is selected as the network 400 on which the first path is to be formed, but the selected line is not limited to this.
Further, when the second/first encrypted data is to be transmitted from the communication device 100 corresponding to the second communication device of the present application to the communication device 100 corresponding to the first communication device of the present application, the second path determinator 126 in the communication device 100 corresponding to the second communication device randomly determines, for example, one of, for example, three communication lines (for example, an Internet line, an SMS line, and an MMS line) which can be used by both of the two communication devices 100 as the communication line on which the second path is to be created, and generates second path information for enabling the second path to be generated on the determined communication line. The second path may overlap the first path, or may not overlap the first path except at the start point and the end point of the two paths. For example, it is assumed that an SMS line is selected as the communication line on which the second path is to be created, and second path information for specifying at least a part of the second path is generated. The second path information is transmitted from the second path determinator 126 to the transmission and reception mechanism via the output module 127 and the interface 114. The transmission and reception mechanism transmits, in accordance with the second path information, the second/first encrypted data to the communication device 100 corresponding to the first communication device of the present application via the SMS line, which is a part of the network 400.

When the second encrypted data is transmitted from the communication device 100 corresponding to the first communication device of the present application to the communication device 100 corresponding to the second communication device of the present application, the transmission and reception mechanism of the communication device 100 corresponding to the first communication device of the present application determines the third path as described below. In the communication device 100 corresponding to the first communication device of the present application that has received the second/first encrypted data, as described above, the second/first encrypted data is transmitted from the transmission and reception mechanism to the controller 122 in the data processing module 120 via the interface 114 and the input module 121. At that time, the controller 122 extracts the data attached to the second/first encrypted data and indicating which communication line has been used for the communication executed by using the second path, and transmits the extracted data to the first path determinator 125. The first path determinator 125 uses the data to specify which communication line has been used for the communication executed by using the second path. Further, the first path determinator 125 determines a communication line of a type different from the above-specified communication line as the communication line on which a third path is to be created. In this embodiment, the second path is a path on an SMS line, and hence an Internet line or an MMS line, which is a line other than an SMS line among the three communication lines that can be used by the two communication devices 100 is determined as the line on which the third path is to be created. This determination may or may not be random. In this example, it is assumed that an MMS line is selected as the line on which the third path is to be created, but the selected line is not limited to this. The first path determinator 125 generates third path information, which is data that determines at least a part of the determined third path. The third path information is transmitted from the first path determinator 125 to the transmission and reception mechanism via the output module 127 and the interface 114. The transmission and reception mechanism transmits, in accordance with the third path information, the second encrypted data to the communication device 100 corresponding to the second communication device of the present application via the MMS line, which is a part of the network 400.

In this case, the second path and the third path are paths on different types of lines. Therefore, both paths are inevitably different paths except at the start point and the end point of the two paths. This is the same regardless of whether one of the paths includes an Internet line or does not include an Internet line. Thus, the second path and the third path are different paths which do not overlap. In this example, the first path and the second path also do not overlap, and the first path and the third path do not overlap as well.

In the case of this example, the first path information for specifying the first path generated by the first path determinator 125 is not necessarily required to be information for specifying the entire length of the first path, and it suffices that the first path information is information for specifying that "the first path is a path on an Internet line." The same applies to the second path information and the third path information.

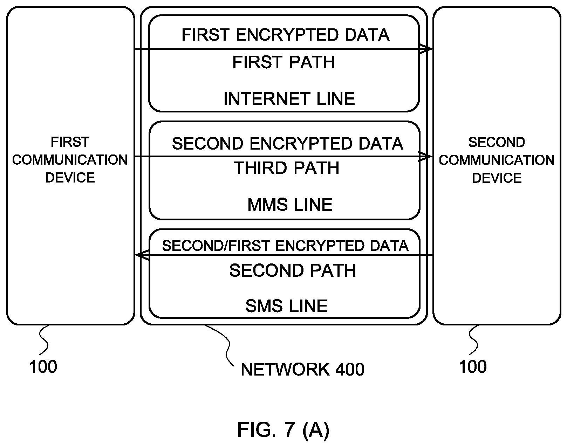

The first path, the second path, and the third path in this first case are conceptually illustrated in FIG. 7(A).

Next, a second case is described.

In the second case, the second path and the third path are both set as a path on an Internet line.

In the second case, naturally, the communication device 100 corresponding to the first communication device of the present application and the communication device 100 corresponding to the second communication device of the present application are both required to be capable of executing communication by an Internet line. After both communication devices 100 are confirmed in advance to be capable of such communication, the data required to generate each of first path information and second path information as described below is recorded in the first path determinator 125 and the second path determinator 126 of both communication devices 100.

When encrypted communication is executed under a state in which such advance preparation is complete, and the first encrypted data is to be transmitted from the communication device 100 corresponding to the first communication device of the present application to the communication device 100 corresponding to the second communication device of the present application, the first path determinator 125 in the communication device 100 corresponding to the first communication device randomly determines, for example, one of, for example, three communication lines (for example, an Internet line, an SMS line, and an MMS line) which can be used by both of the two communication devices 100 as the communication line on which the first path is to be created, and generates first path information for enabling the first path to be generated on the determined communication line. The first path information is transmitted from the first path determinator 125 to the transmission and reception mechanism via the output module 127 and the interface 114. The transmission and reception mechanism transmits, in accordance with the first path information, the first encrypted data to the communication device 100 corresponding to the second communication device of the present application via the Internet line, which is a part of the network 400. Here, it is assumed that an Internet line is selected as the network 400 on which the first path is to be formed, but the selected line is not limited to this.

Further, when the second/first encrypted data is transmitted from the communication device 100 corresponding to the second communication device of the present application to the communication device 100 corresponding to the first communication device of the present application, the second path determinator 126 in the communication device 100 corresponding to the second communication device determines the second path to be a path which used the Internet line, and generates second path information, which is data that determines at least a part of the path. The second path may overlap the first path, or may not overlap the first path except at the start point and the end point of the two paths. The transmission and reception mechanism transmits, in accordance with the second path information, the second/first encrypted data to the communication device 100 corresponding to the first communication device of the present application via the Internet line, which is a part of the network 400.

When the second encrypted data is transmitted from the communication device 100 corresponding to the first communication device of the present application to the communication device 100 corresponding to the second communication device of the present application, the transmission and reception mechanism of the communication device 100 corresponding to the first communication device of the present application determines the third path as follows. The first path determinator 125 in the communication device 100 corresponding to the first communication device of the present application determines the third path to be a path which used the Internet line, and generates third path information, which is data that determines at least a part of the path. The transmission and reception mechanism transmits, in accordance with the third path information, the second encrypted data to the communication device 100 corresponding to the second communication device of the present application via the Internet line, which is a part of the network 400. In this case, usually the third path information specifies the entire length of the third path.

In this case, the first path determinator 125 in the communication device 100 corresponding to the first communication device of the present application determines the third path as follows.

The communication device 100 corresponding to the first communication device receives the second/first encrypted data sent from the communication device 100 corresponding to the second communication device of the present application along the second path.

When the first path determinator 125 receives the data, the first path determinator 125 specifies the entire length of the second path. As already described above, examples of the technology that can be adopted for this purpose include MPLS and MANET.

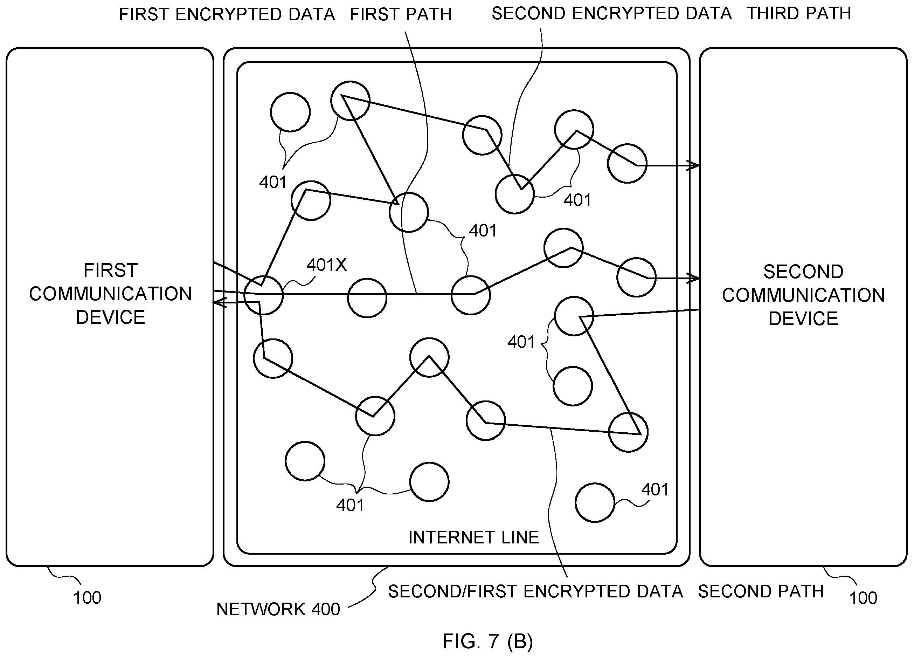

As illustrated in FIG. 7(B), the second/first encrypted data is transmitted along the created second path via a large number of communication components 401. Further, to the second/first encrypted data of this example, information for specifying the large number of communication components 401 through which the second/first encrypted data has passed (for example, data including, as one set, the IP address of each communication component 401, which is information for specifying the communication components 401 which are arranged on the second path in order) is attached. The second/first encrypted data received by the communication device 100 corresponding to the first communication device of the present application is transmitted to the controller 122 via the transmission and reception mechanism, the interface 114, and the input module 121. The above-mentioned data is also attached to the second/first encrypted data received by the controller 122. The controller 122 transmits the data attached to the second/first encrypted data to the first path determinator 125. The first path determinator 125 specifies, based on the received data, all the communication components 401 included in the second path and the order in which those communication components 401 are arranged, to thereby specify the entire length of the second path as a result.

Next, the first path determinator 125 determines the third path as a path which does not overlap the second path except at the start point and the end point of the two paths. This determination of the path can be executed by using, for example, source routing, segment routing, which is an applied example of source routing, or MANET (or DSR, which is a specific applied example of MANET).

The first path determinator 125 generates data specifying, for example, all the communication components 401 arranged on the third path and the order in which those communication components 401 are arranged as third path information. The first path determinator 125 selects the communication components 401 arranged on the third path which do not overlap the communication components 401 arranged on the second path except at the start point and the end point of the two paths. For example, the third path information is one set of data in which the IP addresses of all the communication components 401 arranged on the third path or through which the third path passes are arranged in the order in which the communication components 401 are arranged. The first path determinator 125 transmits the generated third path information to the transmission and reception mechanism via the output module 127. The transmission and reception mechanism transmits the second encrypted data to the communication device 100 corresponding to the second communication device of the present application along the third path specified by the third path information.

As a result, the third path does not overlap the second path except at the start point and the end point of the two paths. In this example, the first path and the second path, as well as the first path and the third path, do not overlap except at the start point and the end point of the two paths.

<2-3. When communication device 100 corresponding to second communication device of present application determines third path>

Even when the communication device 100 corresponding to the second communication device determines the third path, several cases can be considered.

A first case is as follows.

In the first case, first, the advance preparation described in the first case of <1-2> is performed. In this example, it is assumed that the two communication devices 100 which perform encrypted communication can communicate to and from each other by using three lines (for example, an Internet line, an SMS line, and an MMS line).

When encrypted communication is executed under a state in which such advance preparation is complete, and the first encrypted data is to be transmitted from the communication device 100 corresponding to the first communication device of the present application to the communication device 100 corresponding to the second communication device of the present application, the first path determinator 125 in the communication device 100 corresponding to the first communication device randomly determines, for example, one of, for example, three communication lines (for example, an Internet line, an SMS line, and an MMS line) which can be used by both of the two communication devices 100 as the communication line on which the first path is to be created, and generates first path information for enabling the first path to be generated on the determined communication line. The first path information is transmitted from the first path determinator 125 to the transmission and reception mechanism via the output module 127 and the interface 114. The transmission and reception mechanism transmits, in accordance with the first path information, the first encrypted data to the communication device 100 corresponding to the second communication device of the present application via the Internet line, which is a part of the network 400. Here, it is assumed that an Internet line is selected as the network 400 on which the first path is to be formed, but the selected line is not limited to this.

Further, when the second/first encrypted data is transmitted from the communication device 100 corresponding to the second communication device of the present application to the communication device 100 corresponding to the first communication device of the present application, the second path determinator 126 in the communication device 100 corresponding to the second communication device determines the second path to be a path which used the Internet line, and generates second path information, which is data that determines at least a part of the path. The second path may overlap the first path, or may not overlap the first path except at the start point and the end point of the two paths. Meanwhile, the second path determinator 126 determines, of the three communication lines (for example, the Internet line, the SMS line, and the MMS line) which can be used by both of the two communication devices 100, another one communication line other than the determined communication line in order to generate the second path on the another one communication line as the communication line on which the third path is to be created, and generates third path information for enabling the third path to be generated on the determined another one communication line. That is, in this example, the third path, which is a path for returning the second encrypted data from the communication device 100 as the first communication device of the present application to the communication device 100 as the second communication device of the present application via the network 400, is also determined by the communication device 100 which is the second communication device. Here, it is assumed that the second path determinator 126 determines that the second path is created on the SMS line and the third path is created on the MMS line. The second path determinator 126 generates second path information and third path information which are pieces of information for specifying at least a part of the second path and at least a part of the third path, respectively. The second path information and the third path information are transmitted from the second path determinator 126 to the transmission and reception mechanism via the output module 127 and the interface 114. The transmission and reception mechanism transmits, in accordance with the second path information, the second/first encrypted data to the communication device 100 corresponding to the first communication device of the present application via the Internet line, which is a part of the network 400. The third path information is transmitted together with the second/first encrypted data to the communication device 100 corresponding to the first communication device of the present application.

When the second encrypted data is transmitted from the communication device 100 corresponding to the first communication device of the present application to the communication device 100 corresponding to the second communication device of the present application, the third path is used. In this case, the first path determinator 125 in the communication device 100 corresponding to the first communication device determines the third path as described below.

In the communication device 100 corresponding to the first communication device of the present application that has received the second/first encrypted data, as described above, the second/first encrypted data is transmitted from the transmission and reception mechanism to the controller 122 in the data processing module 120 via the interface 114 and the input module 121. At that time, the controller 122 extracts the third path information attached to the second/first encrypted data, and transmits the third path information to the first path determinator 125. The first path determinator 125 determines the path indicated by the third path information as the third path. When the third path information is, for example, "use an MMS line as the third path," the first path determinator 125 determines the third path to be a path on an MMS. The third path information is transmitted from the first path determinator 125 to the transmission and reception mechanism via the output module 127 and the interface 114. The transmission and reception mechanism transmits the second encrypted data to the communication device 100 corresponding to the second communication device of the present application along the third path.

In this case, the second path and the third path are paths on different types of lines. Therefore, both paths are inevitably different paths except at the start point and the end point of the two paths. This is the same regardless of whether one of the paths includes an Internet line or does not include an Internet line. Thus, the second path and the third path are different paths which do not overlap. In this example, the first path and the second path also do not overlap, and the first path and the third path do not overlap as well.

In the case of this example, the first path information for specifying the first path generated by the first path determinator 125 is not necessarily required to be information for specifying the entire length of the first path, and it suffices that the first path information is information for specifying that "the first path is a path on an Internet line." The same applies to the second path information and the third path information.

The first path, the second path, and the third path in this first case are conceptually the same as the paths illustrated in FIG. 7(A).

Next, a second case is described.

In the second case, the first path and the second path are both set as a path on an Internet line.

In the second case, naturally, the communication device 100 corresponding to the first communication device of the present application and the communication device 100 corresponding to the second communication device of the present application are both required to be capable of executing communication by an Internet line. After both communication devices 100 are confirmed in advance to be capable of such communication, the data required to generate each of first path information and second path information as described below is recorded in the first path determinator 125 and the second path determinator 126 of both communication devices 100.

When encrypted communication is executed under a state in which such advance preparation is complete, and the first encrypted data is to be transmitted from the communication device 100 corresponding to the first communication device of the present application to the communication device 100 corresponding to the second communication device of the present application, the first path determinator 125 in the communication device 100 corresponding to the first communication device randomly determines, for example, one of, for example, three communication lines (for example, an Internet line, an SMS line, and an MMS line) which can be used by both of the two communication devices 100 as the communication line on which the first path is to be created, and generates first path information for enabling the first path to be generated on the determined communication line. The first path information is transmitted from the first path determinator 125 to the transmission and reception mechanism via the output module 127 and the interface 114. The transmission and reception mechanism transmits, in accordance with the first path information, the first encrypted data to the communication device 100 corresponding to the second communication device of the present application via the Internet line, which is a part of the network 400. Here, it is assumed that an Internet line is selected as the network 400 on which the first path is to be formed, but the selected line is not limited to this.

Further, when the second/first encrypted data is transmitted from the communication device 100 corresponding to the second communication device of the present application to the communication device 100 corresponding to the first communication device of the present application, the second path determinator 126 in the communication device 100 corresponding to the second communication device determines that the second path and the third path are both paths which used the Internet line, and generates second path information and third path information, which are pieces of data that determine at least a part of those paths. It is permitted that one of the second path and the third path overlaps the first path over the entire length of the path, for example.

The second path information and the third path information both can be generated by using a technology in which a device on the transmission side determines the communication paths. Examples of such a technology include source routing, segment routing, which is an applied example of source routing, and MANET (or DSR, which is a specific applied example of MANET).

The second path information in this example is one set of data in which information (for example, IP addresses) for specifying all the communication components 401 through which the second/first encrypted data transmitted from the communication device 100 corresponding to the second communication device of the present application to the communication device 100 corresponding to the first communication device of the present application passes is arranged in the order in which the second/first encrypted data passes. However, the second path information is not limited to this. Further, the third path information in this example is one set of data in which information (for example, IP addresses) for specifying all the communication components 401 through which the second encrypted data transmitted from the communication device 100 corresponding to the first communication device of the present application to the communication device 100 corresponding to the second communication device of the present application passes is arranged in the order in which the second encrypted data passes. However, the third path information is not limited to this. As a matter of course, it is possible to determine the second path information and the third path information by designating the communication components 401 constituting the second path and the third path so that the condition that the second path and the third path do not overlap except at the start point and the end point of the two paths is satisfied by the communication device 100 as the second communication device alone.

The second path information and the third path information are transmitted from the second path determinator 126 to the transmission and reception mechanism via the output module 127 and the interface 114. The transmission and reception mechanism transmits, in accordance with the second path information, the second/first encrypted data to the communication device 100 corresponding to the first communication device of the present application via an Internet line, which is a part of the network 400. The third path information is transmitted together with the second/first encrypted data to the communication device 100 corresponding to the first communication device of the present application.

When the second encrypted data is transmitted from the communication device 100 corresponding to the first communication device of the present application to the communication device 100 corresponding to the second communication device of the present application, the third path is used. In this case, the first path determinator 125 in the communication device 100 corresponding to the first communication device determines the third path as follows.

In the communication device 100 corresponding to the first communication device of the present application that has received the second/first encrypted data, as described above, the second/first encrypted data is transmitted from the transmission and reception mechanism to the controller 122 in the data processing module 120 via the interface 114 and the input module 121. At that time, the controller 122 extracts the third path information attached to the second/first encrypted data, and transmits the extracted third path information to the first path determinator 125. The first path determinator 125 determines the path indicated by the third path information as the third path. The third path information is, as described above, one set of data in which information (for example, IP addresses) for specifying all the communication components 401 through which the second encrypted data passes is arranged in the order in which the second encrypted data passes. The first path determinator 125, for example, directly transmits the third path information to the transmission and reception mechanism via the output module 127 and the interface 114. The transmission and reception mechanism transmits the second encrypted data to the communication device 100 corresponding to the second communication device of the present application along the third path.

As a result, the third path does not overlap the second path except at the start point and the end point of the two paths. In this example, the first path and the second path, as well as the first path and the third path, do not overlap except at the start point and the end point of the two paths.

The first path, the second path, and the third path in this second case are conceptually the same as the paths illustrated in FIG. 7(B).

<<Second Embodiment>>

A communication system of the second embodiment is basically the same as the communication system of the first embodiment.

As in the case of the first embodiment, the communication system of the second embodiment also includes a large number of communication devices 100 as illustrated in FIG. 1.

Each communication device 100 of the second embodiment is connected to a network 400, and as in the case of the first embodiment, any two devices among the large number of communication devices 100 can communicate to and from each other via the network 400. The network 400 in the second embodiment includes, as in the case of the first embodiment, at least the Internet, and in this embodiment, the network 400 includes a plurality of types of lines including the Internet. In addition to the Internet, examples of a line other than the Internet include, similarly to the first embodiment, a communication carrier line, a global IP-assigned IP-VPN, a private network, a short message services (SMS), and a multimedia message service (MMS). Moreover, like in the first embodiment, the communication devices 100 are not required to be capable of communication over all of the above-mentioned types of lines, and the types of lines that can be used for communication may differ for each communication device 100.

Similarly to the first embodiment, the large number of communication devices 100 are not required to be constantly connected to the network 400.

Further, in the second embodiment as well, as in the case of the first embodiment, each of the communication devices 100-1 to 100-N may function as the first communication device of the present invention or as the second communication device of the present invention, but the communication devices 100-1 to 100-N are not limited to this.

The configuration of the communication device 100 of the second embodiment is basically the same as the configuration of the communication device 100 of the first embodiment. Regarding the hardware configuration in particular, the communication device 100 of the second embodiment is the same as the communication device 100 of the first embodiment.

The communication device 100 is, for example, a smartphone, but like in the first embodiment, the communication device 100 may be a device other than a smartphone.

The communication device 100 of the second embodiment includes the same hardware as in the first embodiment which is illustrated in FIG. 3 referred to in the first embodiment. The functions of the CPU 111, the ROM 112, the RAM 113, the interface 114, the bus 116, and the large-capacity recording device when present are the same in the second embodiment as in the first embodiment.

The only difference between the second embodiment and the first embodiment is the point that the data sent from the transmission and reception mechanism to the interface 114 and transmitted to the CPU 111 and the like connected via the bus 116, and the data sent from the CPU 111 and the like and transmitted from the interface 114 to the transmission and reception mechanism may include data that is not present in the first embodiment. The kind of data which passes through the interface 114 in the communication device 100 of the second embodiment but is not present in the first embodiment is additionally described later.

When the CPU 111 in the second embodiment executes a computer program recorded in the ROM 112, the RAM 113, or the large-capacity recording device, function blocks as described below are generated in the computer.

As used herein, like the computer program described in the first embodiment, the computer program includes at least a computer program for causing the communication device 100 to function as both of the first communication device and the second communication device of the present invention. Also in the second embodiment, the computer program may be pre-installed in the communication device 100 or may be post-installed therein. Further, also in the second embodiment, the computer program may be installed in the communication device 100 via a predetermined recording medium such as a memory card, or may be installed via a network such as a local area network (LAN) or the Internet.

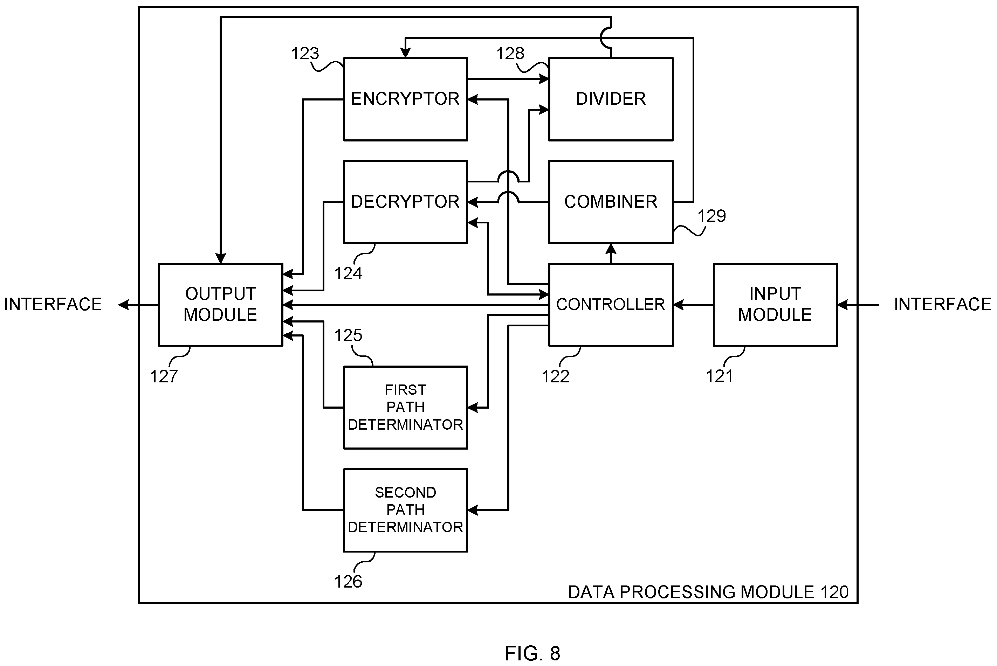

Function blocks like those illustrated in FIG. 8 are generated in the communication device 100 by the CPU 111 executing a computer program. The function blocks described below may be generated by the function of the above-mentioned computer program which by itself causes the communication device 100 to function as the communication device of the present invention, or may be generated based on collaboration between the above-mentioned computer program and an OS or another computer program installed in the communication device 100.

In the second embodiment, in terms of a relation with the functions of the present invention, a data processing module 120 is generated in the communication device 100. As illustrated in FIG. 8, at least an input module 121, a controller 122, an encryptor 123, a decryptor 124, a first path determinator 125, a second path determinator 126, an output module 127, a divider 128, and a combiner 129 are generated in the data processing module 120.

Of those, the input module 121 and the output module 127 correspond to the interface 114 when viewed as hardware, or are each implemented by a function of the interface 114. More specifically, the input module 121 and the output module 127 conceptually correspond to a connecting portion between the interface 114 and the bus 116.

Further, the controller 122, the encryptor 123, the decryptor 124, the first path determinator 125, and the second path determinator 126 correspond to, when viewed as hardware, the CPU 111 which is a calculation device, or are each implemented by a function of the CPU 111 and, when the CPU 111 requires some sort of data to perform a certain type of processing, the storage device (ROM 112, RAM 113, or large-capacity storage device) in which the data is recorded.

Among the function blocks described above, the function blocks other than the divider 128 and the combiner 129 are also generated in the data processing module 120 of the communication device 100 of the first embodiment.

The respective functions of the input module 121, the controller 122, the encryptor 123, the decryptor 124, and the output module 127, which are generated in common in the data processing module 120 in the communication device 100 of the second embodiment and the data processing module 120 in the communication device 100 of the first embodiment, are basically the same in the first embodiment and the second embodiment, but there are some differences in the input and output destinations of the data, for example.

The functions of the respective function blocks in the second embodiment are now described.

The input module 121 receives inputs from the interface 114.

In addition to the various types of data described in the first embodiment, the inputs from the interface 114 include data created by dividing the first encrypted data, the second/first encrypted data, and the second encrypted data into two in the manner described later. The two pieces of data have different data amounts. The larger piece of those two pieces of data may hereinafter be referred to as "large divided data," the smaller piece may be referred to as "small divided data," and the two pieces may be collectively referred to as "divided data."

The input module 121 transmits all of the various types of received data to the controller 122.

The controller 122 performs, as in the case of the first embodiment, overall control of each of the function blocks generated in the data processing module 120 in the communication device 100.

The controller 122 has the following functions in addition to the functions described in the first embodiment. In the second embodiment, the controller 122 may receive divided data. The controller 122 transmits the received divided data to the combiner 129.

The encryptor 123 in the second embodiment executes, as in the case of the first embodiment, processing of encrypting the received shared data and first encrypted data. However, in the first embodiment, the encryptor 123 receives the shared data and the first encrypted data from the controller 122, but in the second embodiment, the encryptor 123 may receive the first encrypted data not from the controller 122 but from the combiner 129. Further, in the first embodiment, the encryptor 123 transmits the first encrypted data obtained by encrypting the shared data, and the second/first encrypted data obtained by encrypting the first encrypted data, to the output module 127, but in the second embodiment, those pieces of data may be transmitted directly to the output module 127, or may be indirectly transmitted to the output module 127 via the divider 128.

The decryptor 124 in the second embodiment executes, as in the case of the first embodiment, a reverse calculation of the calculation executed by the encryptor 123 in the same communication device 100. The decryptor 124 executes processing of decrypting the received second/first encrypted data and second encrypted data. However, in the first embodiment, the decryptor 124 receives the second/first encrypted data and the second encrypted data from the controller 122, but in the second embodiment, the decryptor 124 may receive those pieces of data from the combiner 129. Further, in the first embodiment, the decryptor 124 transmits the second encrypted data obtained by decrypting the second/first encrypted data, and the shared data obtained by decrypting the second encrypted data, to the output module 127, but in the second embodiment, the decryptor 124 may transmit the second encrypted data directly to the output module 127, or indirectly to the output module 127 via the divider 128.

The processing executed by the encryptor 123 and the decryptor 124 is the same in the second embodiment as in the first embodiment, and are calculations in which the commutative law and the associative law are satisfied.

The first path determinator 125 may receive from the controller 122 an instruction to determine the path A or to determine both of the path A and the path B. When any one of those instructions is received, the first path determinator 125 determines the instructed path.

The timing at which and the method by which the first path determinator 125 determines the path A or determines the path A and the path B are described later.

The second path determinator 126 may receive from the controller 122 an instruction to determine the path A and the path B. When such an instruction is received, the second path determinator 126 determines the path A and the path B. However, before the second path determinator 126 executes this determination, in most cases the communication device 100 corresponding to the first communication device of the present application has determined the path A, and is executing communication by using the path A from the communication device 100 corresponding to the first communication device of the present application to the communication device 100 corresponding to the second communication device of the present application. Therefore, there are not many cases in which the second path determinator 126 determines the path A by itself. The timing at which and the method by which the second path determinator 126 determines the path A and the path B are described later.

When the first path determinator 125 has determined the path A or determined the path A and the path B, the first path determinator 125 generates path A information, or path A information and path B information, which are pieces of information for specifying (at least a part of) the path A, or (at least a part of) the path A and (at a least part of) the path B, and transmits the generated information to the output module 127. When the second path determinator 126 has determined the path B, the second path determinator 126 generates path B information, which is information for specifying (at least a part of) the path B, and transmits the generated information to the output module 127.

The path A information and the path B information are both transmitted from the output module 127 to the transmission and reception mechanism via the interface 114.

The output module 127 has the same functions as in the first embodiment.

The difference is that, in the second embodiment, in some cases, the output module 127 does not output the first path information, the second path information, and the third path information to the interface 114, which in the first embodiment may be output by the output module 127, but outputs the path A information and the path B information to the interface 114, which in the first embodiment are not output by the output module 127.

As described above, in the second embodiment, the divider 128 and the combiner 129, which are not generated in the first embodiment, are generated in the data processing module 120.

The divider 128 has a function of dividing the first encrypted data, the second/first encrypted data, and the second encrypted data into two pieces of data as described below. The first encrypted data, the second/first encrypted data, and the second encrypted data to be divided are sent to the divider 128 from the encryptor 123 or the decryptor 124 under the control of the controller 122. Details of this are described later. The data division executed by the divider 128 is an example of a "predetermined reversible transformation" in the present application which is executed on any one of the first encrypted data, the second/first encrypted data, and the second encrypted data. Other examples of the "predetermined reversible transformation" are described later. The divider 128 outputs the generated divided data to the output module 127.

The above-mentioned two pieces of data generated by dividing any one of the first encrypted data, the second/first encrypted data, and the second encrypted data by using the divider 128 of the communication device 100 of the opposite party, that is, the divided data, may be input to the combiner 129 from the controller 122. Those two pieces of data are transmitted from the communication device 100 of the opposite party to the communication device 100 in which the combiner 129 is included via the network 400. The combiner 129 uses the large divided data and the small divided data constituting the divided data to restore the original data, that is, the any one of the first encrypted data, the second/first encrypted data, and the second encrypted data. The combiner 129 transmits the generated any one of the first encrypted data, the second/first encrypted data, and the second encrypted data to the encryptor 123 or the decryptor 124.

In the second embodiment as well, it is not required that all communication devices 100 be capable of fulfilling the roles of both of the first communication device and the second communication device of the present invention. This point is the same as in the first embodiment.

A method of using the communication system of the second embodiment and operation of the communication system of the second embodiment are now described.

As already described, in the communication system of the first embodiment, any two communication devices 100 forming the communication system communicate to and from each other. As a matter of course, the two communication devices 100 may execute other communication, but in this embodiment, communication for sharing shared data between the two communication devices 100 is described.

First, the method of using and operation of the communication system of the second embodiment are briefly described.

In the first embodiment, three types of encrypted data, namely, first encrypted data, second/first encrypted data, and second encrypted data, make one and a half round trips between the two communication devices 100. In addition, in the first embodiment, in order to prevent a malicious third party from obtaining all three of the first encrypted data, the second/first encrypted data, and the second encrypted data, at least one of the first path, which is the transmission path of the first encrypted data, and the second path, which is the transmission path of the second/first encrypted data, or the second path, which is the transmission path of the second/first encrypted data, and the third path, which is the transmission path of the second encrypted data, do not overlap except at the start point and the end point of the two paths.

In contrast, in the second embodiment, the first path, the second path, and the third path as referred to in the first embodiment are basically all a common path A. However, in the second embodiment, a predetermined reversible transformation is executed on any one of the first encrypted data, the second/first encrypted data, and the second encrypted data to generate two pieces of data from one of those three pieces of data. One of the two pieces of generated data is transmitted by a path A, and another one of the two pieces of generated data is transmitted by a path B, which is a predetermined path on the network that does not overlap the path A except at the start point and the end point of the two paths.

That is, in the second embodiment, one of the first path, the second path, and the third path in the first embodiment includes two paths, which are referred to as "path A" and "path B," and the remaining two of those paths are the path A.

In other words, the second embodiment can be broken down into three cases, namely, "3. When first path includes path A and path B," "4. When second path includes path A and path B," and "5. When third path includes path A and path B."

The method of using and operation of the communication system of the second embodiment for "3. When first path includes path A and path B," "4. When second path includes path A and path B," and "5. When third path includes path A and path B" are now described in order.

<3. When first path includes path A and path B>

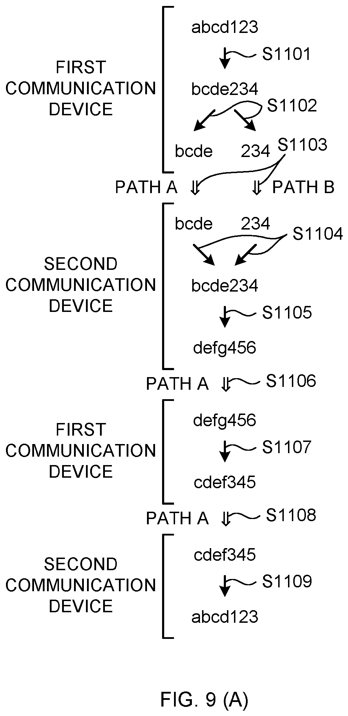

The processing executed in "3. When first path includes path A and path B" is now described with reference to FIG. 9(A) as follows.

First, the user of a certain communication device 100 starts operating the communication device 100 that the user has so that the relevant two communication devices 100 communicate to and from each other. The communication device 100 that the user has started operating becomes the "first communication device" of the present invention. As described in the first embodiment, the user inputs specification information by using the input device 102. When input of the specification information is complete, the controller 122 transmits, to the encryptor 123, the shared data and an instruction to encrypt the shared data. The encryptor 123 executes, based on the above-mentioned instruction, a transformation for encrypting the shared data (Step S1101).

In the second embodiment, it is assumed that data having the character string "abcd123" written at the top of FIG. 9(A) is the shared data, but the shared data is not limited to this. The encryptor 123 encrypts "abcd123" by a barrel shift, which is, as a matter of course, an example. As described above, a barrel shift is an encryption method which satisfies the commutative law and the associative law. In this embodiment, it is assumed that the encryption method executed by the encryptor 123 of the communication device 100 corresponding to the first communication device of the present application executes a transformation by shifting each alphabetic character and numeric character backward by one.

As a result, the character string "abcd123" is transformed into the character string "bcde234."

The encryptor 123 transmits the first encrypted data to the divider 128. As described above, the encryptor 123 may transmit the first encrypted data to the output module 127, or may transmit the first encrypted data to the divider 128. The controller 122 controls to determine whether the encryptor 123 transmits the first encrypted data to the output module 127 or to the divider 128. For example, it is clear that when the controller 122 transmits an instruction to encrypt the shared data to the encryptor 123, the controller 122 can send an instruction to transmit the first encrypted data to the divider 128, and cause the encryptor 123 to select the transmission destination of the first encrypted data based on the instruction of the controller 122.

The divider 128 receives the first encrypted data. The divider 128 obtains two pieces of data by executing a predetermined reversible transformation on the received first encrypted data (Step S1102). In this embodiment, the predetermined reversible transformation executed by the divider 128 is a data division which divides the first encrypted data into the alphabetic characters of a first half portion and the numeric characters of a second half portion. As a result, the first encrypted data "bcde234" is divided into two pieces of data (divided data), namely, the data "bcde" and the data "234." Of those two pieces of data, "bcde" has more characters and a larger amount of data, and hence becomes the large divided data. Meanwhile, "234" becomes the small divided data.

The divider 128 transmits the two pieces of divided data to the output module 127. The divided data is transmitted from the output module 127 to the transmission and reception mechanism via the interface 114.

Further, the controller 122 transmits, before or after the encryptor 123 transmits the first encrypted data to the divider 128, the specification information to the first path determinator 125, and transmits an instruction to determine the path A and the path B to the first path determinator 125.

The first path determinator 125 receives this instruction, and determines the path A, which is a path for transmitting the large divided data from the communication device 100 which is the first communication device of the present application to the communication device 100 which is the second communication device of the present application, and the path B, which is a path for transmitting the small divided data from the communication device 100 which is the first communication device of the present application to the communication device 100 which is the second communication device of the present application, and generates path A information and path B information, which are pieces of information for specifying (at least a part of) both paths. The path A information and the path B information are transmitted from the first path determinator 125 to the output module 127, and transmitted to the transmission and reception mechanism via the interface 114. The path A and the path B may be determined in advance.

The first path determinator 125 sets the path A and the path B so that the path A and the path B do not overlap except at the start point and the end point of the two paths. The meaning of "do not overlap except at the start point and the end point of the two paths" is as already described in the first embodiment. For example, the path A and the path B may both be paths on an Internet line, one of the path A and the path B may be a path on an Internet line and another one thereof may be a path on a line other than the Internet, or the path A and the path B may both be paths on a line other than the Internet. Examples of a line other than the Internet include a communication carrier line, a global IP-assigned IP-VPN, a private network, a short message service (SMS), and a multimedia message service (MMS).

Regardless of which of the above-mentioned combination examples of the path A and the path B is selected, when the communication device 100 which is the first communication device of the present application determines both of the path A and the path B by itself, it is obvious that the first path determinator 125 can easily set both of the path A and the path B so as to satisfy the condition that the path A and the path B "do not overlap except at the start point and the end point of the two paths."

It is preferred that the path A have a higher communication quality than that of the path B, which is the case in this embodiment, but the present invention is not limited to this. As used herein, "high communication quality" means at least one of a fast communication speed, a high communication stability, or no restrictions on the total amount of data that can be transmitted or the restricted total amount is large. For example, when the path A and the path B are selected from the Internet and an SMS (the paths on the two lines do not overlap, as a matter of course), the Internet generally has a faster communication speed, and the SMS has a limit on the number of characters that can be transmitted, that is, there is a limit on the total amount of data that can be transmitted. Therefore, the path A is set as the path on the Internet line and the path B is set as the path on the SMS line.

As described above, the transmission and reception mechanism receives the large divided data and the small divided data generated by the divider 128, and receives the path A information and the path B information from the first path determinator 125, as described above.

The transmission and reception mechanism transmits, based on the received divided data and path information, the large divided data via the path A and the small divided data via the path B to the communication device 100 specified by the specification information indicated as the end point in the path A information and the path B information (second communication device of the present application) (Step S1103).

The communication device 100 of the opposite party for communication, which corresponds to the second communication device of the present invention, receives the large divided data that has been transmitted via the path A and the small divided data that has been transmitted via the path B by using the transmission and reception mechanism in the communication device 100. The large divided data and the small divided data are transmitted from the transmission and reception mechanism to the input module 121 in the data processing module 120 via the interface 114. The large divided data and the small divided data are transmitted from the input module 121 to the controller 122, and further transmitted from the controller 122 to the combiner 129.

The combiner 129 restores the original first encrypted data by using the large divided data and the small divided data (Step S1104). In this case, the large divided data and the small divided data are obtained by simply dividing into the alphabetic characters of the first half portion and the numeric characters of the second half portion, and thus the combiner 129 restores the first encrypted data "bcde234" by executing an inverse transformation in which "bcde" which is the large divided data and "234" which is the small divided data are combined.

The combiner 129 transmits the first encrypted data to the encryptor 123.

Meanwhile, the controller 122 transmits to the encryptor 123 an instruction to execute encryption processing on the first encrypted data received from the combiner 129. The encryptor 123 executes, based on this instruction, a transformation for encrypting the first encrypted data (Step S1105). The first encrypted data changes into second/first encrypted data through further encryption executed by the encryptor 123 on the first encrypted data.

As described above, the encryption processing executed by the encryptor 123 is required to satisfy the commutative law and the associative law. In this embodiment, the encryption processing is assumed to be a barrel shift, but the encryption processing is not limited to this.

The barrel shift executed by the encryptor 123 of the communication device 100 which is the first communication device of the present application is a transformation in which each alphabetic character and numeric character is shifted backward by one, but the barrel shift executed by the encryptor 123 of the communication device 100 which is the second communication device of the present application is a transformation in which each alphabetic character and numeric character is shifted back by two. As a result, the character string "bcde234" in the first encrypted data changes to the character string "defg456" in the second/first encrypted data.

The generated second/first encrypted data is transmitted from the encryptor 123 to the output module 127. The second/first encrypted data is transmitted from the output module 127 to the transmission and reception mechanism via the interface 114.

When the controller 122 receives the first encrypted data, the controller 122 transmits to the second path determinator 126 an instruction to determine the path A, which is the path for returning the second/first encrypted data to the communication device 100 corresponding to the first communication device of the present application.

The second path determinator 126 receives this instruction, and determines the path A. As described above, the path A is the transmission path used when the communication device 100 corresponding to the first communication device of the present application transmits the large divided data to the communication device 100 corresponding to the second communication device of the present application. Examples of the technology which the second path determinator 126 can use to specify the path include the MPLS or MANET (or dynamic source routing (DSR), which is a lower-level technology of MANET) described in the first embodiment. When the path A is a path on a line other than the Internet, it may be possible to specify the communication line used to communicate via the path A by grasping only the type of software and hardware used when the communication via the path A is executed. It is also possible to transmit the path A information for specifying the path A from the communication device 100 corresponding to the first communication device of the present application to the communication device 100 corresponding to the second communication device of the present application, and receive the transmitted path A information by the second path determinator 126 in the communication device 100 corresponding to the second communication device of the present application. In that case, the second path determinator 126 may output path A information newly generated based on the received path A information, or the received path A information as it is, to the output module 127.

In any case, the second path determinator 126 which has received the instruction to determine the path A determines the path A, and generates path A information. The path A information is transmitted from the second path determinator 126 to the output module 127, and transmitted to the transmission and reception mechanism via the interface 114.

The transmission and reception mechanism receives the second/first encrypted data from the encryptor 123 and the path A information from the second path determinator 126.

The transmission and reception mechanism transmits (returns) the second/first encrypted data to the communication device 100 corresponding to the first communication device of the present application, which is specified as the end point of the path A information, via the network 400 (Step S1106).

At this time, the second/first encrypted data is transmitted to the communication device 100 of the opposite party along the path A on the network 400.

The communication device 100 corresponding to the first communication device of the present invention receives the second/first encrypted data by using the transmission and reception mechanism which this communication device 100 has. The second/first encrypted data is transmitted from the transmission and reception mechanism to the input module 121 in the data processing module 120 via the interface 114. The second/first encrypted data is transmitted from the input module 121 to the controller 122.

When the controller 122 receives the second/first encrypted data, the controller 122 transmits, to the decryptor 124, the second/first encrypted data and an instruction to execute an inverse transformation of the transformation executed by the encryptor 123 on the second/first encrypted data. The decryptor 124 executes, on the second/first encrypted data, based on this instruction, a transformation that is the inverse of the transformation executed when the encryptor 123 in the relevant communication device 100 transformed the shared data into the first encrypted data (Step S1107). The data that is generated as a result of the decryption processing executed on the second/first encrypted data by the decryptor 124 is second encrypted data. As described above, this data is the same as the data obtained when the plaintext shared data is encrypted by the encryptor 123 in the communication device 100 corresponding to the second communication device of the present invention.

As described above, in this example, the encryption method executed by the encryptor 123 of the communication device 100 corresponding to the first communication device of the present application executes a transformation by shifting each alphabetic character and numeric character backward by one. Therefore, in the decryption processing, the inverse of such transformation is executed, that is, processing in which each alphabetic character and numeric character is shifted forward by one is executed. As a result, the character string "defg456" in the second/first encrypted data changes to the character string "cdef345." This is the second encrypted data.

The generated second encrypted data is transmitted from the decryptor 124 to the output module 127. The second encrypted data is transmitted from the output module 127 to the transmission and reception mechanism via the interface 114.

The transmission and reception mechanism has already obtained the path A information from the first path determinator before transmitting the first encrypted data to the communication device 100 of the opposite party.

The transmission and reception mechanism transmits, based on the path A information, the second encrypted data to the communication device 100 of the opposite party as in the case when transmitting the first encrypted data (Step S1108). The communication path at this time is the path A.

The communication device 100 of the opposite party for communication, which corresponds to the second communication device of the present invention, receives the second encrypted data by using the transmission and reception mechanism which this communication device 100 has. The second encrypted data is transmitted from the transmission and reception mechanism to the input module 121 in the data processing module 120 via the interface 114. The second encrypted data is transmitted from the input module 121 to the controller 122.

When the controller 122 receives the second encrypted data, the controller 122 transmits, to the decryptor 124, the second encrypted data and an instruction to execute an inverse transformation of the transformation executed by the encryptor 123 on the second encrypted data. The decryptor 124 executes, on the second encrypted data, based on this instruction, an inverse transformation to that executed by the encryptor 123 (Step S1109). The data that is generated as a result of the decryption of the second encrypted data by the decryptor 124 is plaintext shared data. As a result, the communication device 100 which is the second communication device of the present invention now holds, in an unencrypted plaintext state, the shared data that the communication device 100 which is the first communication device of the present invention originally held. The communication device 100 corresponding to the second communication device cannot grasp the content of the original shared data from any one of the first encrypted data, the second/first encrypted data, or the second encrypted data until the sharing of the shared data is complete. However, when the transformation for decryption by the decryptor 124 is complete, the plaintext shared data can be obtained.

In this way, the two communication devices 100 corresponding to the first communication device and the second communication device of the present invention share the shared data.

In this embodiment, the processing from the transformation of the shared data into encrypted data (Step S1101) to the transformation of the second encrypted data into the shared data (Step S1109) is automatically executed by the communication device 100 corresponding to the first communication device of the present application and the communication device 100 corresponding to the second communication device of the present application, but this embodiment is not limited thereto.

As already described, the data division executed by the divider 128 of the communication device 100 corresponding to the first communication device of the present application is merely one example of the predetermined reversible transformation.

To generalize, when the first encrypted data is represented by X, the first divided data is represented by x1, and the second divided data is represented by x2, then by finding x1 and x2 through use of a function "f" which satisfies X=f(x1, x2), two pieces of divided data can be found. The values x1 and x2 may be found by using the function "f" for determining which of x1 and x2 is the larger divided data from the beginning, or x1 and x2 may be found and then one of those having the larger amount of data may be set as the large divided data.

Description is now given of several specific examples of determining the two pieces of data from the first encrypted data by using the predetermined reversible transformation. The first encrypted data is assumed to be "bcde234," as illustrated in FIG. 9(A).

1) Divide the first encrypted data into a front portion and a rear portion, for example, divide into a portion containing the first five characters and a portion from the sixth character onwards to obtain large divided data "bcde2" and small divided data "34."

2) Divide the first encrypted data into a front portion and a rear portion, for example, divide into a portion containing the first three characters and a portion from the fourth character onwards, then repeat the front three characters three times to create large divided data "bcdbcdbcd," and obtain the portion from the fourth character onwards as it is as small divided data "e234."

3) Divide the first encrypted data into a portion containing the first three characters and a portion from the fourth character onwards, then to those first three characters add three characters (in this example, "Z") which are unrelated to the first encrypted data and to the divided data to create large divided data "bcdZZZ," and obtain the portion from the fourth character onwards as it is as small divided data "e234."

4) Obtain x1 by obtaining a contraction mapping by using x2 on the first encrypted data, or by performing encoding.

In all of those examples, when the divider 128 of the communication device 100 as the first communication device of the present application and the combiner 129 of the communication device 100 as the second communication device of the present application share the above-mentioned rule, it is obvious that the combiner 129 can restore the original first encrypted data by using the large divided data (x1) and the small divided data (x2). In the above-mentioned examples 2) and 3), the large divided data is duplicated by repeating the original data or by adding data unrelated to the original data or divided data. In predetermined reversible transformations, such duplication processing is permitted. As a matter of course, duplication processing can also be executed for the small divided data.

It should be understood that the above-mentioned sharing of the rule between the divider 128 of the communication device 100 as the first communication device of the present application and the combiner 129 of the communication device 100 as the second communication device of the present application can be implemented by, for example, causing such a function to be executed by a computer program for causing this communication device 100 to function as both of the first communication device and the second communication device of the present invention.

Further, when the divider 128 of the communication device 100 as the second communication device of the present application and the combiner 129 of the communication device 100 as the first communication device of the present application share the above-mentioned rule, it is obvious that the combiner 129 of the communication device 100 which is the first communication device of the present application can restore the original first encrypted data by using the large divided data and the small divided data generated by the divider 128 of the communication device 100 which is the second communication device of the present application.

The circumstances described in this paragraph similarly apply in "4. When second path includes path A and path B" and "5. When third path includes path A and path B."

<4. When second path includes path A and path B>

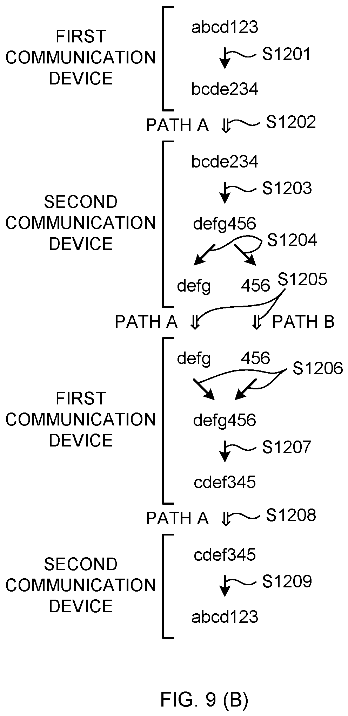

The processing executed in "4. When second path includes path A and path B" is now described with reference to FIG. 9(B) as follows.

In this case as well, the user of a certain communication device 100 starts operating the communication device 100 that the user has, that is, the first communication device of the present application, so that the relevant two communication devices 100 communicate to and from each other. The user inputs specification information by using the input device 102. When input of the specification information is complete, the controller 122 transmits, to the encryptor 123, the shared data and an instruction to encrypt the shared data. The encryptor 123 executes, based on the above-mentioned instruction, a transformation for encrypting the shared data (Step S1201).

Data having the character string "abcd123" written at the top of FIG. 9(B) is the shared data, but the shared data is not limited to this. The encryptor 123 encrypts "abcd123" by a barrel shift, which is, as a matter of course, an example. Also in this case, the encryption method executed by the encryptor 123 of the communication device 100 corresponding to the first communication device of the present application executes a transformation by shifting each alphabetic character and numeric character backward by one.

As a result, the character string "abcd123" is transformed into the character string "bcde234."

The encryptor 123 transmits the first encrypted data to the output module 127. As described above, the encryptor 123 may transmit the first encrypted data to the output module 127, or may transmit the first encrypted data to the divider 128. The encryptor 123 transmits the first encrypted data to the output module 127 under the control of the controller 122.

Further, the controller 122 transmits, before or after the encryptor 123 transmits the first encrypted data to the output module 127, the specification information to the first path determinator 125, and transmits an instruction to determine the path A and the path B to the first path determinator 125.

The first path determinator 125 receives this instruction, and determines the path A, which is a path for transmitting the first encrypted data from the communication device 100 which is the first communication device of the present application to the communication device 100 which is the second communication device of the present application, and the path B, which is a path for subsequently transmitting the large divided data which is created from the second/first encrypted data from the communication device 100 which is the second communication device of the present application to the communication device 100 which is the first communication device of the present application, and generates path A information and path B information, which are pieces of information for specifying (at least a part of) both paths. The path A information and the path B information are transmitted from the first path determinator 125 to the output module 127, and transmitted to the transmission and reception mechanism via the interface 114. The path A and the path B may be determined in advance.

The first path determinator 125 sets the path A and the path B so that the path A and the path B do not overlap except at the start point and the end point of the two paths. This point is as already described in "3. When first path includes path A and path B."

As described above, the transmission and reception mechanism has received the first encrypted data from the encryptor 123, and as also described above, has received the path A information and the path B information from the first path determinator 125.

The transmission and reception mechanism transmits, based on the received first encrypted data and path information, the first encrypted data and the path B information via the path A to the communication device 100 specified by the specification information indicated as the end point in the path A information (second communication device of the present application) (Step S1202).

The communication device 100 of the opposite party for communication, which corresponds to the second communication device of the present invention, receives the first encrypted data that has been transmitted via the path A and the path B information by using the transmission and reception mechanism in the communication device 100. The first encrypted data and the path B information are transmitted from the transmission and reception mechanism to the input module 121 in the data processing module 120 via the interface 114.

The controller 122 receives the first encrypted data, and transmits, to the encryptor 123, the first encrypted data and an instruction to execute encryption processing on the first encrypted data. The encryptor 123 executes, based on this instruction, a transformation for encrypting the first encrypted data (Step S1203). The first encrypted data changes into second/first encrypted data through further encryption executed by the encryptor 123 on the first encrypted data.

As described above, the encryption processing executed by the encryptor 123 is required to satisfy the commutative law and the associative law. In this embodiment, the encryption processing is assumed to be a barrel shift, which is the same as in "3. When first path includes path A and path B," but the encryption processing is not limited to this.

As a result, the character string "bcde234" of the first encrypted data changes to the character string "defg456" of the second/first encrypted data.

The generated second/first encrypted data is transmitted from the encryptor 123 to the divider 128. The transmission destination of the second/first encrypted data generated by encryptor 123 may be the output module 127 or the divider 128, but as described in **"3. When first path includes path A and path B,"** the encryptor 123 transmits the second/first encrypted data to the divider 128 under the control of the controller 122.

The divider 128 receives the second/first encrypted data. The divider 128 obtains two pieces of data by executing a predetermined reversible transformation on the received second/first encrypted data (Step S1204). In this embodiment, the predetermined reversible transformation executed by the divider 128 is, as described in "3. When first path includes path A and path B," a data division which divides the second/first encrypted data into the alphabetic characters of a first half portion and the numeric characters of a second half portion, but the predetermined reversible transformation is not limited to this. As a result, the second/first encrypted data "defg456" is divided into two pieces of data (divided data), namely, data "defg" and data "456." Of those two pieces of data, "defg" is the large divided data, and "456" is the small divided data.

The divider 128 transmits the two pieces of divided data to the output module 127. The divided data is transmitted from the output module 127 to the transmission and reception mechanism via the interface 114.

When the controller 122 receives the first encrypted data, the controller 122 transmits to the second path determinator 126 an instruction to determine the path A, which is the path for returning the large divided data, and the path B, which is the path for returning the small divided data, to the communication device 100 corresponding to the first communication device of the present application. In addition, the controller 122 transmits the previously received path B information to the second path determinator 126.

The second path determinator 126 receives this instruction, and determines the path A and the path B. As described above, the path A is the transmission path used when the communication device 100 corresponding to the first communication device of the present application transmits the large divided data to the communication device 100 corresponding to the second communication device of the present application. Examples of the technology which can be used to specify the path include, as described above, the MPLS or MANET (or dynamic source routing (DSR), which is a lower-level technology of MANET). When the path A is a path on a line other than the Internet, it may be possible to specify the communication line used to communicate via the path A by grasping only the type of software and hardware used when the communication via the path A is executed. It is also possible to transmit the path A information for specifying the path A from the communication device 100 corresponding to the first communication device of the present application to the communication device 100 corresponding to the second communication device of the present application, and receive the transmitted path A information by the second path determinator 126 in the communication device 100 corresponding to the second communication device of the present application. In that case, the second path determinator 126 may output path A information newly generated based on the received path A information, or the received path A information as it is, to the output module 127.

Meanwhile, the second path determinator 126 determines the path B based on the path B information received from the controller 122. In that case, the second path determinator 126 may output path B information newly generated based on the received path B information, or may output the received path B information as it is, to the output module 127.

In this example, the second path determinator 126 in the communication device 100 corresponding to the second communication device of the present application generates the path B information based on the path B information generated by the communication device 100 corresponding to the first communication device of the present application. However, the present invention is not limited to this. As described above, for example, the second path determinator 126 of the communication device 100 corresponding to the second communication device of the present application can specify the path A.

Meanwhile, in "3. When first path includes path A and path B," it has been described that when the communication device 100 which is the first communication device of the present application determines both of the path A and the path B by itself, it is obvious that the first path determinator 125 can easily set both of the path A and the path B so as to satisfy the condition that the path A and the path B "do not overlap except at the start point and the end point of the two paths."

Similarly, the second path determinator 126 in the communication device 100 corresponding to the second communication device of the present application can specify path A, and thus can determine, without using the path B information, a path B satisfying the condition that the path B does not overlap the path A except at the start point and the end point. In this way, when the path B is determined by the second path determinator 126, the path B can be determined without receiving the path B information from the communication device 100 corresponding to the first communication device of the present application. In that case, it suffices that the first path determinator 125 of the communication device 100 corresponding to the first communication device of the present application generates only the path A information, and transmission of the path B information from the communication device 100 corresponding to the first communication device of the present application to the communication device 100 corresponding to the second communication device of the present application can also be omitted.

The type of path to be determined as the path B when the path A is determined is as described in "3. When first path includes path A and path B."

In any case, the second path determinator 126 which has received the instruction to determine the path A and the path B determines the path A and the path B, and generates path A information which is information for specifying the path A and path B information which is information for specifying the path B. The path A information and the path B information are transmitted from the second path determinator 126 to the output module 127, and transmitted to the transmission and reception mechanism via the interface 114.

The transmission and reception mechanism receives the large divided data and the small divided data generated from the second/first encrypted data from the divider 128, and the path A information and the path B information from the second path determinator 126.

The transmission and reception mechanism transmits the large divided data to the communication device 100 corresponding to the first communication device of the present application, which is specified as the end point of the path A information, via the path A, and transmits the small divided data to the communication device 100 corresponding to the first communication device of the present application, which is specified as the end point of the path B information, via the path B (Step S1205).

The communication device 100 corresponding to the first communication device of the present invention

receives the large divided data that has been transmitted via the path A and the small divided data that has been transmitted via the path B by using the transmission and reception mechanism in the communication device 100. The large divided data and the small divided data are transmitted from the transmission and reception mechanism to the input module 121 in the data processing module 120 via the interface 114. The large divided data and the small divided data are transmitted from the input module 121 to the controller 122, and further transmitted from the controller 122 to the combiner 129.

The combiner 129 restores the original second/-first encrypted data by using the large divided data and the small divided data (Step S1206). In this case, the large divided data and the small divided data are obtained by simply dividing into the alphabetic characters of the first half portion and the numeric characters of the second half portion, and thus the combiner 129 restores the second/first encrypted data "defg456" by executing an inverse transformation in which "defg" which is the large divided data and "456" which is the small divided data are combined.

The combiner 129 transmits the second/first encrypted data to the decryptor 124.

Meanwhile, the controller 122 transmits to the decryptor 124 an instruction to execute an inverse transformation of the transformation executed by the encryptor 123 on the second/first encrypted data received from the combiner 129. The decryptor 124 executes, on the second/first encrypted data, based on this instruction, a transformation that is the inverse of the transformation executed when the encryptor 123 in the relevant communication device 100 transformed the shared data into the first encrypted data (Step S1207). The data that is generated as a result of the decryption processing executed on the second/first encrypted data by the decryptor 124 is second encrypted data.

As described above, in this example, the encryption method executed by the encryptor 123 of the communication device 100 corresponding to the first communication device of the present application executes a transformation by shifting each alphabetic character and numeric character backward by one. Therefore, in the decryption processing, the inverse of such transformation is executed, that is, processing in which each alphabetic character and numeric character is shifted forward by one is executed. As a result, the character string "defg456" in the second/first encrypted data changes to the character string "cdef345." This is the second encrypted data.

The generated second encrypted data is transmitted from the decryptor 124 to the output module 127. The second encrypted data is transmitted from the output module 127 to the transmission and reception mechanism via the interface 114.

The transmission and reception mechanism has already obtained the path A information from the first path determinator before transmitting the first encrypted data to the communication device 100 of the opposite party.

The transmission and reception mechanism transmits, based on the path A information, the second encrypted data to the communication device 100 of the opposite party as in the case when transmitting the first encrypted data (Step S1208). The communication path at this time is the path A.

The communication device 100 of the opposite party for communication, which corresponds to the second communication device of the present invention, receives the second encrypted data by using the transmission and reception mechanism which this communication device 100 has. The second encrypted data is transmitted from the transmission and reception mechanism to the input module 121 in the data processing module 120 via the interface 114. The second encrypted data is transmitted from the input module 121 to the controller 122.

When the controller 122 receives the second encrypted data, the controller 122 transmits, to the decryptor 124, the second encrypted data and an instruction to execute an inverse transformation of the transformation executed by the encryptor 123 on the second encrypted data. The decryptor 124 executes, on the second encrypted data, based on this instruction, an inverse transformation to that executed by the encryptor 123 (Step S1209). The data that is generated as a result of the decryption of the second encrypted data by the decryptor 124 is plaintext shared data. As a result, the communication device 100 which is the second communication device of the present invention now holds, in an unencrypted plaintext state, the shared data that the communication device 100 which is the first communication device of the present invention originally held.

In this way, the two communication devices 100 corresponding to the first communication device and the second communication device of the present invention share the shared data.

In this embodiment, the processing from the transformation of the shared data into encrypted data (Step S1201) to the transformation of the second encrypted data into the shared data (Step S1209) is automatically executed by the communication device 100 corresponding to the first communication device of the present application and the communication device 100 corresponding to the second communication device of the present application, but this embodiment is not limited thereto.

<5. When third path includes path A and path B>

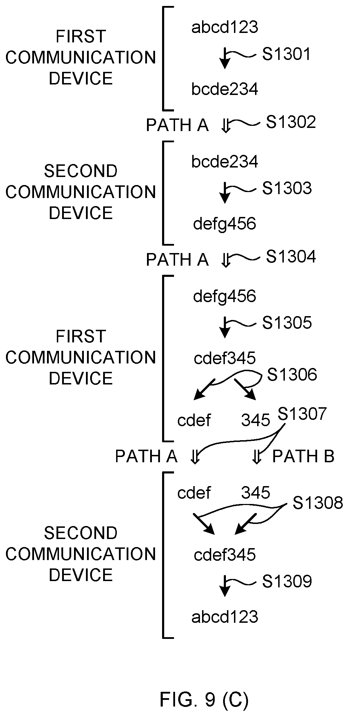

The processing executed in "5. When third path includes path A and path B" is now described with reference to FIG. 9(C) as follows.

In this case as well, the user of a certain communication device 100 starts operating the communication device 100 that the user has, that is, the first communication device of the present application, so that the relevant two communication devices 100 communicate to and from each other. The user inputs specification information by using the input device 102. When input of the specification information is complete, the controller 122 transmits, to the encryptor 123, the shared data and an instruction to encrypt the shared data. The encryptor 123 executes, based on the above-mentioned instruction, a transformation for encrypting the shared data (Step S1301).

Data having the character string "abcd123" written at the top of FIG. 9(C) is the shared data, but the shared data is not limited to this. The encryptor 123 encrypts "abcd123" by a barrel shift, which is, as a matter of course, an example, and which is the same as in "3. When first path includes path A and path **B."** Also in this case, the encryption method executed by the encryptor 123 of the communication device 100 corresponding to the first communication device of the present application executes a transformation by shifting each alphabetic character and numeric character backward by one.

As a result, the character string "abcd123" is transformed into the character string "bcde234."

The encryptor 123 transmits the first encrypted data to the output module 127. As described above, the encryptor 123 may transmit the first encrypted data to the output module 127, or may transmit the first encrypted data to the divider 128. The encryptor 123 transmits the first encrypted data to the output module 127 under the control of the controller 122.

Further, the controller 122 transmits, before or after the encryptor 123 transmits the first encrypted data to the output module 127, the specification information to the first path determinator 125, and transmits an instruction to determine the path A and the path B to the first path determinator 125.

The first path determinator 125 receives this instruction, and determines the path A, which is a path for transmitting the first encrypted data from the communication device 100 which is the first communication device of the present application to the communication device 100 which is the second communication device of the present application, and the path B, which is a path for subsequently transmitting the small divided data created from the second/first encrypted data from the communication device 100 which is the second communication device of the present application to the communication device 100 which is the first communication device of the present application, and generates path A information and path B information, which are pieces of information for specifying (at least a part of) both paths. The path A information and the path B information are transmitted from the first path determinator 125 to the output module 127, and transmitted to the transmission and reception mechanism via the interface 114. The path A and the path B may be determined in advance.

In this case, the first path determinator 125 sets the path A and the path B so that the path A and the path do not overlap except at the start point and the end point of the two paths. This point is as already described in "3. When first path includes path A and path B."

The determination of the path B and the generation of the path B information by the first path determinator 125 may be executed before transmission of small divided data by the path B, which is described later.

As described above, the transmission and reception mechanism has received the first encrypted data from the encryptor 123, and as also described above, has received the path A information and the path B information from the first path determinator 125. Here, the path B information is not used yet.

The transmission and reception mechanism transmits, based on the received first encrypted data and path information, the first encrypted data via the path A to the communication device 100 specified by the specification information indicated as the end point in the path A information (second communication device of the present application) (Step S1302).

The communication device 100 of the opposite party for communication, which corresponds to the second communication device of the present invention, receives the first encrypted data that has been transmitted via the path A by using the transmission and reception mechanism in the communication device 100. The first encrypted data is transmitted from the transmission and reception mechanism to the input module 121 in the data processing module 120 via the interface 114. The first encrypted data is transmitted from the input module 121 to the controller 122.

The controller 122 transmits, to the encryptor 123, the first encrypted data and an instruction to execute encryption processing on the first encrypted data. The encryptor 123 executes, based on this instruction, a transformation for encrypting the first encrypted data (Step S1303). The first encrypted data changes into second/first encrypted data through further encryption executed by the encryptor 123 on the first encrypted data.

As described above, the encryption processing executed by the encryptor 123 is required to satisfy the commutative law and the associative law. The encryption processing is assumed to be a barrel shift, as described in "3. When first path includes path A and path B," but the encryption processing is not limited to this. The barrel shift executed by the encryptor 123 of the communication device 100 which is the second communication device of the present application is a transformation in which each alphabetic character and numeric character is shifted back by two. As a result, the character string "bcde234" in the first encrypted data changes to the character string "defg456" in the second/first encrypted data.

The generated second/first encrypted data is transmitted from the encryptor 123 to the output module 127. The second/first encrypted data is transmitted from the output module 127 to the transmission and reception mechanism via the interface 114.

When the controller 122 receives the first encrypted data, the controller 122 transmits to the second path determinator 126 an instruction to determine the path A, which is the path for returning the second/first encrypted data to the communication device 100 corresponding to the first communication device of the present application.

The second path determinator 126 receives this instruction, and determines the path A. As described above, the path A is the transmission path used when the communication device 100 corresponding to the first communication device of the present application transmits the first encrypted data to the communication device 100 corresponding to the second communication device of the present application. Examples of the technology which can be used to specify the path include, as described in "3. When first path includes path A and path B," the MPLS or MANET (or dynamic source routing (DSR), which is a lower-level technology of MANET). When the path A is a path on a line other than the Internet, it may be possible to specify the communication line used to communicate via the path A by grasping only the type of software and hardware used when the communication via the path A is executed. It is also possible to transmit the path A information for specifying the path A from the communication device 100 corresponding to the first communication device of the present application to the communication device 100 corresponding to the second communication device of the present application, and receive the transmitted path A information by the second path determinator 126 in the communication device 100 corresponding to the second communication device of the present application. In that case, the second path determinator 126 may output path A information newly generated based on the received path A information, or the received path A information as it is, to the output module 127.

In any case, the second path determinator 126 which has received the instruction to determine the path A determines the path A, and generates path A information. The path A information is transmitted from the second path determinator 126 to the output module 127, and transmitted to the transmission and reception mechanism via the interface 114.

The transmission and reception mechanism receives the second/first encrypted data from the encryptor 123 and the path A information from the second path determinator 126.

The transmission and reception mechanism transmits (returns) the second/first encrypted data to the communication device 100 corresponding to the first communication device of the present application, which is specified as the end point of the path A information, via the network 400 (Step S1304).

At this time, the second/first encrypted data is transmitted to the communication device 100 of the opposite party along the path A on the network 400.

The communication device 100 corresponding to the first communication device of the present invention receives the second/first encrypted data by using the transmission and reception mechanism which this communication device 100 has. The second/first encrypted data is transmitted from the transmission and reception mechanism to the input module 121 in the data processing module 120 via the interface 114. The second/first encrypted data is transmitted from the input module 121 to the controller 122.

When the controller 122 receives the second/first encrypted data, the controller 122 transmits, to the decryptor 124, the second/first encrypted data and an instruction to execute an inverse transformation of the transformation executed by the encryptor 123 on the second/first encrypted data. The decryptor 124 executes, on the second/first encrypted data, based on this instruction, a transformation that is the inverse of the transformation executed when the encryptor 123 in the relevant communication device 100 transformed the shared data into the first encrypted data (Step S1305). The data that is generated as a result of the decryption processing executed on the second/first encrypted data by the decryptor 124 is second encrypted data.

As described above, in this example, the encryption method executed by the encryptor 123 of the communication device 100 corresponding to the first communication device of the present application executes a transformation by shifting each alphabetic character and numeric character backward by one. Therefore, in the decryption processing, the inverse of such transformation is executed, that is, processing in which each alphabetic character and numeric character is shifted forward by one is executed. As a result, the character string "defg456" in the second/first encrypted data changes to the character string "cdef345." This is the second encrypted data.

The decryptor 124 transmits the generated second encrypted data to the divider 128. As described above, the decryptor 124 may transmit the second encrypted data to the output module 127 or to the divider 128. The controller 122 determines which of the output module 127 and the divider 128 the decryptor 124 is to transmit the second encrypted data to.

The divider 128 receives the second encrypted data. The divider 128 obtains two pieces of data by executing a predetermined reversible transformation on the received second encrypted data (Step S1306). In this embodiment, the predetermined reversible transformation executed by the divider 128 is a data division which divides the second encrypted data into the alphabetic characters of a first half portion and the numeric characters of a second half portion. As a result, the second encrypted data "cdef345" is divided into two pieces of data (divided data), namely, the data "cdef" and the data "345." Of those two pieces of data, "cdef" has more characters and a larger amount of data, and hence becomes the large divided data. Meanwhile, "345" becomes the small divided data.

The divider 128 transmits the two pieces of divided data to the output module 127. The divided data is transmitted from the output module 127 to the transmission and reception mechanism via the interface 114.

The transmission and reception mechanism which receives the large divided data and the small divided data has already received the path A information and the path B information.

The transmission and reception mechanism transmits the large divided data via the path A and the small divided data via the path B to the communication device 100 specified by the specification information indicated as the end point in the path A information and the path B information (second communication device of the present application) (Step S1307).

The communication device 100 of the opposite party for communication, which corresponds to the second communication device of the present invention, receives the large divided data that has been transmitted via the path A and the small divided data that has been transmitted via the path B by using the transmission and reception mechanism in the communication device 100. The large divided data and the small divided data are transmitted from the transmission and reception mechanism to the input module 121 in the data processing module 120 via the interface 114. The large divided data and the small divided data are transmitted from the input module 121 to the controller 122, and further transmitted from the controller 122 to the combiner 129.

The combiner 129 restores the original second encrypted data by using the large divided data and the small divided data (Step S1308). In this case, the large divided data and the small divided data are obtained by simply dividing into the alphabetic characters of the first half portion and the numeric characters of the second half portion, and thus the combiner 129 restores the second encrypted data "cdef345" by executing an inverse transformation in which "cdef" which is the large divided data and "345" which is the small divided data are combined.

The combiner 129 transmits the second encrypted data to the decryptor 124.

The controller 122 transmits to the decryptor 124 an instruction to execute an inverse transformation of the transformation executed by the encryptor 123 on the second encrypted data received from the combiner 129. The decryptor 124 executes, on the second encrypted data, based on this instruction, an inverse transformation to that executed by the encryptor 123 (Step S1309). The data that is generated as a result of the decryption of the second encrypted data by the decryptor 124 is plaintext shared data. As a result, the communication device 100 which is the second communication device of the present invention now holds, in an unencrypted plaintext state, the shared data that the communication device 100 which is the first communication device of the present invention originally held.

In this way, the two communication devices 100 corresponding to the first communication device and the second communication device of the present invention share the shared data.

In this embodiment, the processing from the transformation of the shared data into encrypted data (Step S1301) to the transformation of the second encrypted data into the shared data (Step S1309) is automatically executed by the communication device 100 corresponding to the first communication device of the present application and the communication device 100 corresponding to the second communication device of the present application, but this embodiment is not limited thereto.

**Reference Signs List**

| | |
|---|---|
| 100 | communication device |
| 101 | display |
| 102 | input device |
| 120 | data processing module |
| 121 | input module |
| 122 | controller |
| 123 | encryptor |
| 124 | decryptor |
| 125 | first path determinator |
| 126 | second path determinator |
| 127 | output module |
| 128 | divider |
| 129 | combiner |

**Claims**

1. A communication system, comprising:

a first communication device being one of two communication devices configured to communicate to and from each other; and
a second communication device being another one of the two communication devices,
wherein the first communication device includes:

a first encryptor configured to execute a transformation for encryption which satisfies the commutative law and the associative law;
a first decryptor configured to execute an inverse transformation of the encryption executed by the first encryptor; and
a first communicator configured to communicate to and from the second communication device via a predetermined network,

wherein the second communication device includes:

a second encryptor configured to execute a transformation for encryption which satisfies the commutative law and the associative law;

a second decryptor configured to execute an inverse transformation of the encryption executed by the second encryptor; and

a second communicator configured to communicate to and from the first communication device via the predetermined network,

wherein the first communication device is configured to execute, by the first encryptor, a transformation for encryption of plaintext shared data which is data to be shared with the second communication device into first encrypted data, and to transmit, by the first communicator, the first encrypted data to the second communication device via the predetermined network,

wherein the second communication device is configured to execute, by the second encryptor, when the first encrypted data is received by the second communicator from the first communication device, a transformation for encryption of the first encrypted data into second/first encrypted data, and to transmit, by the second communicator, the second/first encrypted data to the first communication device via the predetermined network,

wherein the first communication device is configured to execute, by the first decryptor, when the second/first encrypted data is received by the first communicator from the second communication device, an inverse transformation of the transformation for encryption executed by the first encryptor on the second/first encrypted data to transform the second/first encrypted data into second encrypted data, and to transmit, by the first communicator, the second encrypted data to the second communication device via the predetermined network,

wherein the second communication device is configured to execute, by the second decryptor, when the second encrypted data is received by the second communicator from the first communication device, an inverse transformation of the transformation for encryption executed by the second encryptor on the second encrypted data to transform the second encrypted data into the plaintext shared data, and

wherein the first communication device and the second communication device are configured to set a first path which is a path on the predetermined network when the first communication device transmits the first encrypted data to the second communication device, a second path which is a path on the predetermined network when the second communication device transmits the second/first encrypted data to the first communication device, and a third path which is a path on the predetermined network when the first communication device transmits the second encrypted data to the second communication device, so that the second path and at least one of the first path or the third path do not overlap except at a start point and an end point of two paths to be compared among the first path, the second path, and the third path.

2. The communication system according to claim **1**, wherein the first communication device and the second communication device are configured to set the first path, the second path, and the third path so that the first path and the second path do not overlap except at the start point and the end point of the two paths.

3. The communication system according to claim **2**,

wherein the first communication device includes a first path determinator configured to determine the first path, and the second communication device includes a second path determinator configured to determine the second path, and wherein the first path determinator is set in advance so as to determine a predetermined path on the predetermined network as the first path, and the second path determinator is set in advance so as to determine, as the second path, a path which does not overlap the first path on the predetermined network except at the start point and the end point of the two paths.

4. The communication system according to claim **3**, wherein one of the first path and the second path is a path on an Internet line, and another one of the first path and the second path is a path on a line other than the Internet.

5. The communication system according to claim **4**, wherein the path on a line other than the Internet is any one of a communication carrier line, a global IP-assigned IP-VPN, a private network, a short message service (SMS), and a multimedia message service (MMS).

6. The communication system according to claim **2**,

wherein the first communication device includes a first path determinator configured to determine the first path, and the second communication device includes a second path determinator configured to determine the second path, wherein the first path determinator is configured to determine a predetermined path on the predetermined network as the first path, wherein the second path determinator is configured to specify, when the second communication device receives the first encrypted data by the second communicator from the first communication device, the first path and to determine the second path so that the second path does not overlap the specified first path except at the start point and the end point of the two paths, and wherein the second communicator is configured to transmit the second/first encrypted data to the first communication device via the second path determined by the second path determinator.

7. The communication system according to claim **6,** wherein the second path determinator is configured to specify, when the first path is the Internet, from data attached to the first encrypted data received by the second communication device, the first path by detecting an IP address of each component through which the first encrypted data has passed from the first communication device to the second communication device, and to determine, as the second path, a path on the Internet from the second communication device to the first communication device which passes only through components which are not included in the first path.

8. The communication system according to claim **6,** wherein the second path determinator is configured to specify that a line on which the first encrypted data has been transmitted when the second communication device receives the first encrypted data is any one of the Internet, a communication carrier line, a global IP-assigned IP-VPN, a private network, a short message service, and a multimedia message service, and to determine, as the second path, a path on a line different from the line on which the first encrypted data has been transmitted.

9. The communication system according to claim 2,

> wherein the first communication device includes a first path determinator configured to determine the first path, and the second communication device includes a second path determinator configured to determine the second path, wherein the first path determinator is configured to determine a predetermined path on the predetermined network as the first path and to generate second path information which is data specifying the second path and is attached to the first encrypted data, wherein the second path determinator is configured to determine, when the second communication device receives the first encrypted data to which the second path information is attached by the second communicator from the first communication device, the second path as a path specified by the second path information attached to the received first encrypted data, and

> wherein the second communicator is configured to transmit the second/first encrypted data to the first communication device via the second path determined by the second path determinator.

10. The communication system according to claim 9, wherein the first path determinator is configured to specify both of the first path and the second path as paths on the Internet.

11. The communication system according to claim 9, wherein the first path determinator is configured to specify a path on any one of the Internet, a communication carrier line, a global IP-assigned IP-VPN, a private network, a short message service, and a multimedia message service as one of the first path and the second path, and to specify a path on another one of the Internet, a communication carrier line, a global IP-assigned IP-VPN, a private network, a short message service, and a multimedia message service as another one of the first path and the second path.

12. The communication system according to claim 1, wherein the first communication device and the second communication device are configured to set the second path and the third path so that the second path and the third path do not overlap except at the start point and the end point of the two paths.

13. The communication system according to claim 12,

> wherein the first communication device includes a first path determinator configured to determine the first path and the third path, and the second communication device includes a second path determinator configured to determine the second path, and
> wherein the first path determinator is set in advance so as to determine a predetermined path on the predetermined network as the third path, and the second path determinator is set in advance so as to determine, as the second path, a path which does not overlap the third path on the predetermined network except at the start point and the end point of the two paths.

14. The communication system according to claim 13, wherein one of the second path and the third path is a path on an Internet line, and another one of the second path and the third path is a path on a line other than the Internet.

15. The communication system according to claim 14, wherein the path on a line other than the Internet is any one of a communication carrier line, a global IP-assigned IP-VPN, a private network, a short message service (SMS), and a multimedia message service (MMS).

16. The communication system according to claim 12,

wherein the first communication device includes a first path determinator configured to determine the first path and the third path, and the second communication device includes a second path determinator configured to determine the second path,
wherein the second path determinator is configured to determine a predetermined path on the predetermined network as the second path,
wherein the first path determinator is configured to specify, when the first communication device receives the second/first encrypted data by the first communicator from the second communication device, the second path and to determine the third path so that the third path does not overlap the specified second path except at the start point and the end point of the two paths, and
wherein the first communicator is configured to transmit the second encrypted data to the second communication device via the third path determined by the first path determinator.

17. The communication system according to claim 16, wherein the first path determinator is configured to specify, when the second path is the Internet, from data attached to the second/first encrypted data received by the first communication device, the second path by detecting an IP address of each component through which the second/first encrypted data has passed from the second communication device to the first communication device, and to determine, as the third path, a path on the Internet from the first communication device to the second communication device which passes only through components which are not included in the second path.

18. The communication system according to claim 16, wherein the first path determinator is configured to specify that a line on which the second/first encrypted data has been transmitted when the first communication device receives the second/first encrypted data is any one of the Internet, a communication carrier line, a global IP-assigned IP-VPN, a private network, a short message service, and a multimedia message service, and to determine, as the third path, a path on a line different from the line on which the second/first encrypted data has been transmitted.

19. The communication system according to claim 12,

wherein the first communication device includes a first path determinator configured to determine the first path and the third path, and the second communication device includes a second path determinator configured to determine the second path,
wherein the second path determinator is configured to determine a predetermined path on the predetermined network as the second path and to generate third path information which is data specifying the third path and is attached to the second/first encrypted data,
wherein the first path determinator is configured to determine, when the first communication device receives the second/first encrypted data to which the third path information is attached by the first communicator from the second communication device, the third path as a path specified by the third path information attached to the received second/first encrypted data, and
wherein the first communicator is configured to transmit the second encrypted data to the second communication device via the third path determined by the first path determinator.

20. The communication system according to claim 19, wherein the second path determinator is configured to specify both of the second path and the third path as paths on the Internet.

21. The communication system according to claim 19, wherein the second path determinator is configured to specify a path on any one of the Internet, a communication carrier line, a global IP-assigned IP-VPN, a private network, a short message service, and a multimedia message service as one of the second path and the third path, and to specify a path on another one of the Internet, a communication carrier line, a global IP-assigned IP-VPN, a private network, a short message service, and a multimedia message service as another one of the second path and the third path.

22. A communication system, comprising:

a first communication device being one of two communication devices configured to communicate to and from each other; and
a second communication device being another of the two communication devices,
wherein the first communication device includes:

a first encryptor configured to execute a transformation for encryption which satisfies the commutative law and the associative law;
a first decryptor configured to execute an inverse transformation of the encryption executed by the first encryptor; and
a first communicator configured to communicate to and from the second communication device via a predetermined network,

wherein the second communication device includes:

a second encryptor configured to execute a transformation for encryption which satisfies the commutative law and the associative law;
a second decryptor configured to execute an inverse transformation of the encryption executed by the second encryptor; and
a second communicator configured to communicate to and from the first communication device via the predetermined network,

wherein the first communication device is configured to execute, by the first encryptor, a transformation for encryption of plaintext shared data which is data to be shared with the second communication device into first encrypted data, and to transmit, by the first communicator, the first encrypted data to the second communication device via the predetermined network,
wherein the second communication device is configured to execute, by the second encryptor, when the first encrypted data is received by the second communicator from the first communication device, a transformation for encryption of the first encrypted data into second/first encrypted data, and to transmit, by the second communicator, the second/first encrypted data to the first communication device via the predetermined network,
wherein the first communication device is configured to execute, by the first decryptor, when the second/first encrypted data is received by the first communicator from the second communication device, an inverse transformation of the transformation for encryption executed by the first encryptor on the second/first encrypted data to transform the second/first encrypted data into second encrypted data, and to transmit, by the first communicator, the second encrypted data to the second communication device via the predetermined network,
wherein the second communication device is configured to execute, by the second decryptor, when the second encrypted data is received by the second communicator from the first communication device, an inverse transformation of the transformation for encryption executed by the second encryptor on the second encrypted data to transform the second encrypted data into the plaintext shared data, and

wherein the first communication device and the second communication device are configured such that:

the first communication device transmits, when transmitting the first encrypted data to the second communication device, one of two pieces of data obtained by executing a predetermined reversible transformation on the first encrypted data by a path A which is a path on the predetermined network and another one of the two pieces of data by a path B which is a path on the predetermined network, the second communication device transmits the second/first encrypted data to the first communication device by the path A, and the first communication device transmits the second encrypted data to the second communication device by the path A; and
the first communication device and the second communication device set the path A and the path B so that the path A and the path B do not overlap except at a start point and an end point of two paths of the path A and the path B.

23. A communication system, comprising:

a first communication device being one of two communication devices configured to communicate to and from each other; and
a second communication device being another one of the two communication devices,
wherein the first communication device includes:

a first encryptor configured to execute a transformation for encryption which satisfies the commutative law and the associative law;
a first decryptor configured to execute an inverse transformation of the encryption executed by the first encryptor; and
a first communicator configured to communicate to and from the second communication device via a predetermined network,

wherein the second communication device includes:

a second encryptor configured to execute a transformation for encryption which satisfies the commutative law and the associative law;
a second decryptor configured to execute an inverse transformation of the encryption executed by the second encryptor; and

a second communicator configured to communicate to and from the first communication device via the predetermined network,

wherein the first communication device is configured to execute, by the first encryptor, a transformation for encryption of plaintext shared data which is data to be shared with the second communication device into first encrypted data, and to transmit, by the first communicator, the first encrypted data to the second communication device via the predetermined network,

wherein the second communication device is configured to execute, by the second encryptor, when the first encrypted data is received by the second communicator from the first communication device, a transformation for encryption of the first encrypted data into second/first encrypted data, and to transmit, by the second communicator, the second/first encrypted data to the first communication device via the predetermined network,

wherein the first communication device is configured to execute, by the first decryptor, when the second/first encrypted data is received by the first communicator from the second communication device, an inverse transformation of the transformation for encryption executed by the first encryptor on the second/first encrypted data to transform the second/first encrypted data into second encrypted data, and to transmit, by the first communicator, the second encrypted data to the second communication device via the predetermined network,

wherein the second communication device is configured to execute, by the second decryptor, when the second encrypted data is received by the second communicator from the first communication device, an inverse transformation of the transformation for encryption executed by the second encryptor on the second encrypted data to transform the second encrypted data into the plaintext shared data, and

wherein the first communication device and the second communication device are configured such that:

the first communication device transmits the first encrypted data to the second communication device by a path A which is a path on the predetermined network, the second communication device transmits, when transmitting the second/first encrypted data to the first communication device, one of two pieces of data obtained by executing a predetermined reversible transformation on the second/first encrypted data by the path A and another one of the two pieces of data by a path B which is a path on the predetermined network, and the first communication device transmits the second encrypted data to the second communication device by the path A; and
the first communication device and the second communication device set the path A and the path B so that the path A and the path B do not overlap except at a start point and an end point of two paths of the path A and the path B.

24. A communication system, comprising:

a first communication device being one of two communication devices configured to communicate to and from each other; and
a second communication device being another one of the two communication devices,
wherein the first communication device includes:

a first encryptor configured to execute a transformation for encryption which satisfies the commutative law and the associative law;
a first decryptor configured to execute an inverse transformation of the encryption executed by the first encryptor; and
a first communicator configured to communicate to and from the second communication device via a predetermined network,

wherein the second communication device includes:

a second encryptor configured to execute a transformation for encryption which satisfies the commutative law and the associative law;
a second decryptor configured to execute an inverse transformation of the encryption executed by the second encryptor; and
a second communicator configured to communicate to and from the first communication device via the predetermined network,

wherein the first communication device is configured to execute, by the first encryptor, a transformation for encryption of plaintext shared data which is data to be shared with the second communication device into first encrypted data, and to transmit, by the first communicator, the first encrypted data to the second communication device via the predetermined network,
wherein the second communication device is configured to execute, by the second encryptor, when the first encrypted data is received by the second communicator from the first communication device, a transformation for encryption of the first encrypted data into second/first encrypted data, and to transmit, by the second communicator, the second/first encrypted data to the first communication device via the predetermined network,

wherein the first communication device is configured to execute, by the first decryptor, when the second/first encrypted data is received by the first communicator from the second communication device, an inverse transformation of the transformation for encryption executed by the first encryptor on the second/first encrypted data to transform the second/first encrypted data into second encrypted data, and to transmit, by the first communicator, the second encrypted data to the second communication device via the predetermined network,

wherein the second communication device is configured to execute, by the second decryptor, when the second encrypted data is received by the second communicator from the first communication device, an inverse transformation of the transformation for encryption executed by the second encryptor on the second encrypted data to transform the second encrypted data into the plaintext shared data, and

wherein the first communication device and the second communication device are configured such that:

the first communication device transmits the first encrypted data to the second communication device by a path A which is a path on the predetermined network, the second communication device transmits the second/first encrypted data to the first communication device by the path A, and the first communication device transmits, when transmitting the second encrypted data to the second communication device, one of two pieces of data obtained by executing a predetermined reversible transformation on the second encrypted data by the path A and another one of the two pieces of data by a path B which is a path on the predetermined network; and the first communication device and the second communication device set the path A and the path B so that the path A and the path B do not overlap except at a start point and an end point of two paths of the path A and the path B.

25. The communication system according to claim 22 or 24, wherein the first communication device includes a first path determinator configured to determine the path A and the path B.

26. The communication system according to claim 23, wherein the second communication device includes a second path determinator configured to determine the path B.

27. The communication system according to any one of claims 22 to 24, wherein one of the path A and the path B is a path on an Internet line, and another one of the path A and the path B is a path on a line other than the Internet.

28. The communication system according to claim 27, wherein the path on a line other than the Internet is any one of a communication carrier line, a global IP-assigned IP-VPN, a private network, a short message service (SMS), and a multimedia message service (MMS).

29. The communication system according to claim 23,

wherein the first communication device includes a first path determinator configured to determine the path A, and the second communication device includes a second path determinator configured to determine the path B,

wherein the first path determinator is configured to determine a predetermined path on the predetermined network as the path A,

wherein the second path determinator is configured to specify, when the second communication device receives the first encrypted data from the first communication device by the second communicator, the path A, and to determine the path B so that the path B does not overlap the specified path A except at the start point and the end point of the two paths, and

wherein the second communicator is configured to transmit the one and the another one of the two pieces of data obtained from the second/first encrypted data to the first communication device via the path A determined by the first path determinator and the path B determined by the second path determinator.

30. The communication system according to claim 29, wherein the second path determinator is configured to specify, when the path A is the Internet, from data attached to the first encrypted data received by the second communication device, the path A by detecting an IP address of each component through which the first encrypted data has passed from the first communication device to the second communication device, and to determine, as the path B, a path on the Internet from the second communication device to the first communication device which passes only through components which are not included in the path **A.**

31. The communication system according to claim 29, wherein the second path determinator is configured to specify that a line on which the first encrypted data has been transmitted when the second communication device receives the first encrypted data is any one of the Internet, a communication carrier line, a global IP-assigned IP-VPN, a private network, a short message service, and a multimedia message service, and to determine, as the path B, a path on a line different from the line on which the first encrypted data has been transmitted.

32. The communication system according to claim 23,

> wherein the first communication device includes a first path determinator configured to determine the path A, and the second communication device includes a second path determinator configured to determine the path B,
> wherein the first path determinator is configured to determine a predetermined path on the predetermined network as the path A, and to generate path B information to be attached to the first encrypted data, the path B information being data for specifying the path B,
> wherein the second path determinator is configured to determine, when the second communication device receives the first encrypted data to which the path B information is attached by the second communicator from the first communication device, the path B as a path specified by the path B information attached to the received first encrypted data, and
> wherein the second communicator is configured to transmit the one and the another one of the two pieces of data obtained from the second/first encrypted data to the first communication device via the path A determined by the first path determinator and the path B determined by the second path determinator.

33. The communication system according to claim 32, wherein the first path determinator is configured to specify both of the path A and the path B as paths on the Internet.

34. The communication system according to claim 32, wherein the first path determinator is configured to specify a path on any one of the Internet, a communication carrier line, a global IP-assigned IP-VPN, a private network, a short message service, and a multimedia message service as one of the path A and the path B, and to specify a path on another one of the Internet, a communication carrier line, a global IP-assigned IP-VPN, a private network, a short message service, and a multimedia message service as another one of the path A and the path B.

35. The communication system according to any one of claims 22 to 24, wherein the path A has a higher communication quality than a communication quality of the path B.

36. The communication system according to any one of claims 22 to 24, wherein the another one of the two pieces of data transmitted by using the path B has a smaller amount of data than an amount of data of the one of the two pieces of data transmitted by using the path A.

37. The communication system according to claim 22, wherein the predetermined reversible transformation executed on the first encrypted data is executed as processing of dividing the first encrypted data into the one of the two pieces of data and the another one of the two pieces of data in accordance with a predetermined rule.

38. The communication system according to claim 23, wherein the predetermined reversible transformation executed on the second/first encrypted data is executed as processing of dividing the second/first encrypted data into the one of the two pieces of data and the another one of the two pieces of data in accordance with a predetermined rule.

39. The communication system according to claim 24, wherein the predetermined reversible transformation executed on the second encrypted data is executed as processing of dividing the second encrypted data into the one of the two pieces of data and the another one of the two pieces of data in accordance with a predetermined rule.

40. The communication system according to any one of claims 1 and 22 to 24, wherein the first encryptor, the first decryptor, the second encryptor, and the second decryptor are each configured to execute an exclusive OR operation.

41. A first communication device, which is included in the communication system of any one of claims 1 and 22 to 24.

42. A second communication device, which is included in the communication system of any one of claims 1 and 22 to 24.

43. A communication method, which is executed by a communication system,

> the communication system including:
>
> > a first communication device being one of two communication devices configured to communicate to and from each other; and a second communication device being another of the two communication devices,

the first communication device including:

a first encryptor configured to execute a transformation for encryption which satisfies the commutative law and the associative law;
a first decryptor configured to execute an inverse transformation of the encryption executed by the first encryptor; and
a first communicator configured to communicate to and from the second communication device via a predetermined network,

the second communication device including:

a second encryptor configured to execute a transformation for encryption which satisfies the commutative law and the associative law;
a second decryptor configured to execute an inverse transformation of the encryption executed by the second encryptor; and
a second communicator configured to communicate to and from the first communication device via the predetermined network,

the communication method comprising:

a first step in which the first communication device executes, by the first encryptor, a transformation for encryption of plaintext shared data which is data to be shared with the second communication device into first encrypted data, and transmits, by the first communicator, the first encrypted data to the second communication device via the predetermined network;
a second step in which the second communication device receives, by the second communicator, the first encrypted data from the first communication device, executes, by the second encryptor, a transformation for encryption of the first encrypted data into second/first encrypted data, and transmits, by the second communicator, the second/first encrypted data to the first communication device via the predetermined network;
a third step in which the first communication device receives, by the first communicator, the second/first encrypted data from the second communication device, executes, by the first decryptor, an inverse transformation of the transformation for encryption executed by the first encryptor on the second/first encrypted data to transform the second/first encrypted data into second encrypted data, and transmits, by the first communicator, the second encrypted data to the second communication device via the predetermined network; and
a fourth step in which the second communication device receives, by the second communicator, the second encrypted data from the first communication device, and executes, by the second decryptor, an inverse transformation of the transformation for encryption executed by the second encryptor on the second encrypted data to transform the second encrypted data into the plaintext shared data,
wherein the first communication device and the second communication device are configured to set a first path in the first step which is a path on the predetermined network when the first communication device transmits the first encrypted data to the second communication device, a second path in the second step which is a path on the predetermined network when the second communication device transmits the second/first encrypted data to the first communication device, and a third path in the third step which is a path on the predetermined network when the first communication device transmits the second encrypted data to the second communication device, so that the second path and at least one of the first path or the third path do not overlap except at a start point and an end point of two paths to be compared among the first path, the second path, and the third path.

44. A communication method, which is executed by a communication system,

the communication system including:

a first communication device being one of two communication devices configured to communicate to and from each other; and
a second communication device being another of the two communication devices,

the first communication device including:

a first encryptor configured to execute a transformation for encryption which satisfies the commutative law and the associative law;
a first decryptor configured to execute an inverse transformation of the encryption executed by the first encryptor; and

a first communicator configured to communicate to and from the second communication device via a predetermined network,

the second communication device including:

a second encryptor configured to execute a transformation for encryption which satisfies the commutative law and the associative law;
a second decryptor configured to execute an inverse transformation of the encryption executed by the second encryptor; and
a second communicator configured to communicate to and from the first communication device via the predetermined network,

the communication method comprising:

a first step in which the first communication device executes, by the first encryptor, a transformation for encryption of plaintext shared data which is data to be shared with the second communication device into first encrypted data, and transmits, by the first communicator, the first encrypted data to the second communication device via the predetermined network;
a second step in which the second communication device receives, by the second communicator, the first encrypted data from the first communication device, executes, by the second encryptor, a transformation for encryption of the first encrypted data into second/first encrypted data, and transmits, by the second communicator, the second/first encrypted data to the first communication device via the predetermined network;
a third step in which the first communication device receives, by the first communicator, the second/first encrypted data from the second communication device, executes, by the first decryptor, an inverse transformation of the transformation for encryption executed by the first encryptor on the second/first encrypted data to transform the second/first encrypted data into second encrypted data, and transmits, by the first communicator, the second encrypted data to the second communication device via the predetermined network; and
a fourth step in which the second communication device receives, by the second communicator, the second encrypted data from the first communication device, and executes, by the second decryptor, an inverse transformation of the transformation for encryption executed by the second encryptor on the second encrypted data to transform the second encrypted data into the plaintext shared data,

wherein in the first step, the first communication device transmits, when transmitting the first encrypted data to the second communication device, one of two pieces of data obtained by executing a predetermined reversible transformation on the first encrypted data by a path A which is a path on the predetermined network and another one of the two pieces of data by a path B which is a path on the predetermined network,

wherein in the second step, the second communication device executes processing of obtaining the second/first encrypted data by executing the transformation on the first encrypted data obtained by executing an inverse transformation on the one of the two pieces of data received via the path A and the another one of the two pieces of data received via the path B, and transmits the second/first encrypted data to the first communication device by the path A,

wherein in the third step, the first communication device transmits the second encrypted data to the second communication device by the path A, and

wherein the first communication device and the second communication device set, in the first step to the third step, the path A and the path B so that the path A and the path B do not overlap except at a start point and an end point of two paths of the path A and the path B.

45. A communication method, which is executed by a communication system,

the communication system including:

a first communication device being one of two communication devices configured to communicate to and from each other; and
a second communication device being another of the two communication devices,

the first communication device including:

a first encryptor configured to execute a transformation for encryption which satisfies the commutative law and the associative law;
a first decryptor configured to execute an inverse transformation of the encryption executed by the first encryptor; and
a first communicator configured to communicate to and from the second communication device via a predetermined network,

the second communication device including:

a second encryptor configured to execute a transformation for encryption which satisfies the commutative law and the associative law;

a second decryptor configured to execute an inverse transformation of the encryption executed by the second encryptor; and

a second communicator configured to communicate to and from the first communication device via the predetermined network,

the communication method comprising:

a first step in which the first communication device executes, by the first encryptor, a transformation for encryption of plaintext shared data which is data to be shared with the second communication device into first encrypted data, and transmits, by the first communicator, the first encrypted data to the second communication device via the predetermined network;

a second step in which the second communication device receives, by the second communicator, the first encrypted data from the first communication device, executes, by the second encryptor, a transformation for encryption of the first encrypted data into second/first encrypted data, and transmits, by the second communicator, the second/first encrypted data to the first communication device via the predetermined network;

a third step in which the first communication device receives, by the first communicator, the second/first encrypted data from the second communication device, executes, by the first decryptor, an inverse transformation of the transformation for encryption executed by the first encryptor on the second/first encrypted data to transform the second/first encrypted data into second encrypted data, and transmits, by the first communicator, the second encrypted data to the second communication device via the predetermined network; and

a fourth step in which the second communication device receives, by the second communicator, the second encrypted data from the first communication device, and executes, by the second decryptor, an inverse transformation of the transformation for encryption executed by the second encryptor on the second encrypted data to transform the second encrypted data into the plaintext shared data,

wherein in the first step, the first communication device transmits the first encrypted data to the second communication device by a path A which is a path on the predetermined network,

wherein in the second step, the second communication device transmits, when transmitting the second/first encrypted data to the first communication device, one of two pieces of data obtained by executing a predetermined reversible transformation on the second/first encrypted data by the path A and another one of the two pieces of data by a path B which is a path on the predetermined network,

wherein in the third step, the first communication device executes processing of obtaining the second encrypted data by executing the transformation on the second/first encrypted data obtained by executing an inverse transformation on the one of the two pieces of data received via the path A and the another one of the two pieces of data received via the path B, and transmits the second encrypted data to the second communication device by the path A, and

wherein the first communication device and the second communication device set, in the first step to the third step, the path A and the path B so that the path A and the path B do not overlap except at a start point and an end point of two paths of the path A and the path B.

46. A communication method, which is executed by a communication system,

the communication system including:

a first communication device being one of two communication devices configured to communicate to and from each other; and a second communication device being another of the two communication devices,

the first communication device including:

a first encryptor configured to execute a transformation for encryption which satisfies the commutative law and the associative law;
a first decryptor configured to execute an inverse transformation of the encryption executed by the first encryptor; and
a first communicator configured to communicate to and from the second communication device via a predetermined network,

the second communication device including:

a second encryptor configured to execute a transformation for encryption which satisfies the commutative law and the associative law;
a second decryptor configured to execute an inverse transformation of the encryption executed by the second encryptor; and
a second communicator configured to communicate to and from the first communication device via the predetermined network,

the communication method comprising:

a first step in which the first communication device executes, by the first encryptor, a transformation for encryption of plaintext shared data which is data to be shared with the second communication device into first encrypted data, and transmits, by the first communicator, the first encrypted data to the second communication device via the predetermined network;

a second step in which the second communication device receives, by the second communicator, the first encrypted data from the first communication device, executes, by the second encryptor, a transformation for encryption of the first encrypted data into second/first encrypted data, and transmits, by the second communicator, the second/first encrypted data to the first communication device via the predetermined network;

a third step in which the first communication device receives, by the first communicator, the second/first encrypted data from the second communication device, executes, by the first decryptor, an inverse transformation of the transformation for encryption executed by the first encryptor on the second/first encrypted data to transform the second/first encrypted data into second encrypted data, and transmits, by the first communicator, the second encrypted data to the second communication device via the predetermined network; and

a fourth step in which the second communication device receives, by the second communicator, the second encrypted data from the first communication device, and executes, by the second decryptor, an inverse transformation of the transformation for encryption executed by the second encryptor on the second encrypted data to transform the second encrypted data into the plaintext shared data,

wherein in the first step, the first communication device transmits the first encrypted data to the second communication device by a path A which is a path on the predetermined network,

wherein in the second step, the second communication device transmits the second/first encrypted data to the first communication device by the path A,

wherein in the third step, the first communication device transmits, when transmitting the second encrypted data to the second communication device, one of two pieces of data obtained by executing a predetermined reversible transformation on the second encrypted data by the path A and another one of the two pieces of data by a path B which is a path on the predetermined network,

wherein in the fourth step, the second communication device executes processing of obtaining the plaintext shared data by executing the transformation on the second encrypted data obtained by executing an inverse transformation on the one of the two pieces of data received via the path A and the another one of the two pieces of data received via the path B, and

wherein the first communication device and the second communication device set, in the first step to the third step, the path A and the path B so that the path A and the path B do not overlap except at a start point and an end point of two paths of the path A and the path B.

**47.** The communication method according to any one of claims 43 to 46, wherein the first step to the fourth step are continuously and automatically executed by the first communication device and the second communication device.

FIG. 1

100

101

102

FIG. 2

111    112    113

| CPU | ROM | RAM |

116

INTERFACE

114

FIG. 3

FIG. 4

FIRST COMMUNICATION DEVICE                                    SECOND COMMUNICATION DEVICE

START

START OPERATION FOR COMMUNICATION (S501)

INPUT SPECIFICATION INFORMATION (S502)

TRANSFORM SHARED DATA [PPP] INTO
FIRST ENCRYPTED DATA [PPP], AND
DETERMINE FIRST PATH (S503)

TRANSMIT FIRST ENCRYPTED DATA TO
SECOND COMMUNICATION DEVICE (S504)

FIRST PATH

RECEIVE FIRST ENCRYPTED DATA (S601)

TRANSFORM FIRST ENCRYPTED DATA [PPP] INTO
SECOND/FIRST ENCRYPTED DATA [PPP], AND
DETERMINE SECOND PATH (S602)

RECEIVE SECOND/FIRST ENCRYPTED DATA (S505)

SECOND PATH

TRANSMIT SECOND/FIRST ENCRYPTED DATA TO
FIRST COMMUNICATION DEVICE (S603)

TRANSFORM SECOND/FIRST ENCRYPTED DATA [PPP]
INTO SECOND ENCRYPTED DATA [PPP] (S506)

TRANSMIT SECOND ENCRYPTED DATA TO
SECOND COMMUNICATION DEVICE (S507)

THIRD PATH
(FIRST PATH)

RECEIVE SECOND ENCRYPTED DATA (S604)

TRANSFORM SECOND ENCRYPTED DATA [PPP] INTO
SHARED DATA [PPP] (S605)

END

FIG. 5

EP 4 597 921 A1

FIRST COMMUNICATION DEVICE

FIRST ENCRYPTED DATA
FIRST PATH

SECOND ENCRYPTED DATA
THIRD PATH
(FIRST PATH)

INTERNET LINE

SECOND/FIRST ENCRYPTED DATA
SECOND PATH

SMS LINE

SECOND COMMUNICATION DEVICE

100

NETWORK 400

100

FIG. 6 (A)

FIRST COMMUNICATION DEVICE

FIRST ENCRYPTED DATA
FIRST PATH

SECOND ENCRYPTED DATA
THIRD PATH
(FIRST PATH)

MMS LINE

SECOND/FIRST ENCRYPTED DATA
SECOND PATH

PRIVATE NETWORK LINE

SECOND COMMUNICATION DEVICE

100

NETWORK 400

100

FIG. 6 (B)

FIRST ENCRYPTED DATA   FIRST PATH   SECOND ENCRYPTED DATA   THIRD PATH (FIRST PATH)

FIRST COMMUNICATION DEVICE

SECOND COMMUNICATION DEVICE

401

401X

401

401

401

401

401

INTERNET LINE

100

NETWORK 400

SECOND/FIRST ENCRYPTED DATA   SECOND PATH   100

FIG. 6 (C)

EP 4 597 921 A1

FIG. 7 (A)

FIRST ENCRYPTED DATA  FIRST PATH     SECOND ENCRYPTED DATA  THIRD PATH

FIRST
COMMUNICATION
DEVICE

401

401X

SECOND
COMMUNICATION
DEVICE

401

401

401

401

401

401

INTERNET LINE

100

NETWORK 400

SECOND/FIRST ENCRYPTED DATA  SECOND PATH

100

FIG. 7 (B)

FIG. 8

FIRST
COMMUNICATION
DEVICE

abcd123

↓ ～ S1101

bcde234

～ S1102

bcde    234 S1103

PATH A ⇓    ⇓ PATH B

SECOND
COMMUNICATION
DEVICE

bcde    234 ～ S1104

bcde234

↓ ～ S1105

defg456

PATH A ⇓～ S1106

FIRST
COMMUNICATION
DEVICE

defg456

↓ ～ S1107

cdef345

PATH A ⇓～ S1108

SECOND
COMMUNICATION
DEVICE

cdef345

↓ ～ S1109

abcd123

FIG. 9 (A)

FIRST
COMMUNICATION
DEVICE

abcd123

↓ S1201

bcde234

PATH A ⇓ S1202

SECOND
COMMUNICATION
DEVICE

bcde234

↓ S1203

defg456

S1204

defg     456 S1205

PATH A ⇓     ⇓ PATH B

FIRST
COMMUNICATION
DEVICE

defg     456 S1206

defg456

↓ S1207

cdef345

PATH A ⇓ S1208

SECOND
COMMUNICATION
DEVICE

cdef345

↓ S1209

abcd123

FIG. 9 (B)

FIRST COMMUNICATION DEVICE

abcd123

↓ S1301

bcde234

PATH A ⇓ S1302

SECOND COMMUNICATION DEVICE

bcde234

↓ S1303

defg456

PATH A ⇓ S1304

FIRST COMMUNICATION DEVICE

defg456

↓ S1305

cdef345

S1306

cdef      345 S1307

PATH A ⇓        ⇓ PATH B

SECOND COMMUNICATION DEVICE

cdef      345 S1308

cdef345

↓ S1309

abcd123

FIG. 9 (C)

## INTERNATIONAL SEARCH REPORT

| International application No. |
|---|
| **PCT/JP2023/031253** |

| **A.** | **CLASSIFICATION OF SUBJECT MATTER** |
|---|---|

*H04L 9/14*(2006.01)i; *G06F 21/60*(2013.01)i
FI:    H04L9/14; G06F21/60 320

According to International Patent Classification (IPC) or to both national classification and IPC

| **B.** | **FIELDS SEARCHED** |
|---|---|

Minimum documentation searched (classification system followed by classification symbols)

H04L9/14; G06F21/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | US 2011/0211701 A1 (GRALL, E. et al.) 01 September 2011 (2011-09-01)<br>paragraphs [0090]-[0109] | 1-47 |
| Y | JP 2006-094105 A (NIPPON TELEGRAPH AND TELEPHONE CORPORATION) 06 April 2006 (2006-04-06)<br>paragraph [0028], fig. 7 | 1-47 |
| Y | JP 2013-537769 A (NEC CORPORATION) 03 October 2013 (2013-10-03)<br>paragraphs [0036]-[0042], fig. 4 | 1-47 |
| A | JP 58-181350 A (MATTHEY, JAMES LEE) 24 October 1983 (1983-10-24)<br>p. 6, upper left column, line 10 to p. 8, lower left column, line 1 | 1-47 |
| A | KANAMORI, Y. et al., A quantum no-key protocol for secure data communication,<br>Proceedings of the 43rd annual Southeast regional conference, 2005, pp. 92-93<br>in particular, p. 92, lines 13-28 | 1-47 |
| A | US 2016/0182228 A1 (INTEL CORPORATION) 23 June 2016 (2016-06-23)<br>paragraphs [0012]-[0013] | 1-47 |

☐ Further documents are listed in the continuation of Box C.      ☑ See patent family annex.

| * | Special categories of cited documents: | | "T" | later document published after the international filing date or priority date and not in conflict with the application but cited to understand the principle or theory underlying the invention |
|---|---|---|---|---|
| "A" | document defining the general state of the art which is not considered to be of particular relevance | | | |
| "E" | earlier application or patent but published on or after the international filing date | | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
|---|---|
| **08 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2023/031253**

**Box No. III    Observations where unity of invention is lacking (Continuation of item 3 of first sheet)**

This International Searching Authority found multiple inventions in this international application, as follows:

Document 1: US 2011/0211701 A1 (GRALL, E. et al.) 01 September 2011 (2011-09-01)
   paragraphs [0090]-[0109]
& WO 2009/077598 A1
& EP 2243247 A1
& FR 2925244 A1

The claims are classified into the following four inventions.

(Invention 1) Claims 1-21, the sections of claims 40-42 citing claim 1, claim 43, and the sections of claim 47 citing claim 43

Claim 1 is classified as invention 1 due to having the special technical feature in which "the first communication device and the second communication device set a first path, which is a path on the network when the first communication device transmits the first encrypted data to the second communication device, a second path, which is a path on the network when the second communication device transmits the second first encrypted data to the first communication device, and a third path, which is a path on the network when the first communication device transmits the second encrypted data to the second communication device, such that the second path and at least one among the first path and the third path do not overlap, excluding the start point and end point of two paths serving as a comparison".

Furthermore, the sections of claims 2-21 and claims 40-42 citing claim 1 have the same or corresponding special technical feature as claim 1, and thus are classified as invention 1.

Additionally, claim 43 is substantially identical to or similarly closely related to claim 1, and thus is classified as invention 1.

Moreover, the sections of claim 47 citing claim 43 have the same or corresponding special technical feature as claim 43, and thus are classified as invention 1.

(Invention 2) Claim 22, the sections of claims 25, 27-28, 35-37, and 40-42 citing claim 22, claim 44, and the sections of claim 47 citing claim 44

Claim 22 shares, with claim 1 classified as invention 1, the technical feature of "a communication system comprising a first communication device, which is one of two communication devices that perform communication with each other, and a second communication device, which is the other communication device, wherein ... (omitted) ... the second communication device, upon receiving the second encrypted data with the second communication unit from the first communication device, performs an inverse transform of the transform for encryption performed by the second encryption unit on the second encrypted data with the second decoding unit, thereby configuring the second encrypted data to be the shared data". However, this technical feature does not make a contribution over the prior art in the light of the content disclosed in document 1 (paragraphs [0090]-[0109]), and thus cannot be said to be a special technical feature. Furthermore, there are no other identical or corresponding special technical features between claim 22 and claim 1. Additionally, claim 22 is also not a dependent claim of claim 1. Moreover, claim 22 is not substantially identical to or similarly closely related to any of the claims classified as invention 1. Therefore, claim 22 cannot be classified as invention 1.

Claim 22 is classified as invention 2 due to having the special technical feature in which "the first communication device and the second communication device are configured such that,

when the first communication device transmits the first encrypted data to the second communication device, one among two items of data obtained by performing a prescribed inversible transform on the first encrypted data is transmitted by an A path, which is a path on the network, and the other among the two items of data is transmitted by a B path, which is a path on the network, the second communication device transmits the second first encrypted data to the first communication device by the A path, the first communication device transmits the second encrypted data to the second communication path by the A path, and

the A path and the B path are set so as not to overlap, except for the starting point and ending point of the two paths".

Furthermore, the sections of claims 25, 27-28, 35-37, and 40-42 citing claim 22 have the same or corresponding special technical feature as claim 22, and thus are classified as invention 2.

Additionally, claim 44 is substantially identical to or similarly closely related to claim 22, and thus is classified as invention 2.

Form PCT/ISA/210 (continuation of first sheet) (January 2015)

**INTERNATIONAL SEARCH REPORT**

International application No.

**PCT/JP2023/031253**

| Box No. III | Observations where unity of invention is lacking (Continuation of item 3 of first sheet) |
|---|---|

Moreover, the sections of claim 47 citing claim 44 have the same or corresponding special technical feature as claim 44, and thus are classified as invention 2.

(Invention 3) Claim 23, the sections of claims 26-36, 38, and 40-42 citing claim 23, claim 45, and the sections of claim 47 citing claim 45

Claim 23 shares, with claim 1 classified as invention 1 and claim 22 classified as invention 22, the technical feature of "a communication system comprising a first communication device, which is one of two communication devices that perform communication with each other, and a second communication device, which is the other communication device, wherein ... (omitted) ... the second communication device, upon receiving the second encrypted data with the second communication unit from the first communication device, performs an inverse transform of the transform for encryption performed by the second encryption unit on the second encrypted data with the second decoding unit, thereby configuring the second encrypted data to be the shared data". However, this technical feature does not make a contribution over the prior art in the light of the content disclosed in document 1 (paragraphs [0090]-[0109]), and thus cannot be said to be a special technical feature. Furthermore, there are no other identical or corresponding special technical features between claim 23 and claim 1 or 22. Additionally, claim 22 is also not a dependent claim of claim 1 or 22. Moreover, claim 23 is not substantially identical to or similarly closely related to any of the claims classified as invention 1 or 2. Therefore, claim 23 cannot be classified as either invention 1 or 2.

Claim 23 is classified as invention 3 due to having the special technical feature in which "the first communication device and the second communication device are configured such that

the first communication device transmits the first encrypted data to the second communication device by an A path, and when the second communication device transmits the second first encrypted data to the first communication device, one among two items of data obtained by performing a prescribed inversible transform on the second first encrypted data is transmitted by the A path, and the other among the two items of data is transmitted by a B path, which is a path on the network, the first communication device transmits the second encrypted data to the second communication device by the A path, and

the A path and the B path are set so as not to overlap, except for the starting point and ending point of the two paths".

Furthermore, the sections of claims 26-36, 38, and 40-42 citing claim 23 have the same or corresponding special technical feature as claim 23, and thus are classified as invention 3.

Additionally, claim 45 is substantially identical to or similarly closely related to claim 23, and thus is classified as invention 3.

Moreover, the sections of claim 47 citing claim 45 have the same or corresponding special technical feature as claim 45, and thus are classified as invention 3.

(Invention 4) Claim 24, the sections of claims 25, 27-28, 35-36, and 40-42 citing claim 24, claim 46, and the sections of claim 47 citing claim 46

Claim 24 shares, with claim 1 classified as invention 1, claim 22 classified as invention 22, and claim 23 classified as invention 3, the technical feature of "a communication system comprising a first communication device, which is one of two communication devices that perform communication with each other, and a second communication device, which is the other communication device, wherein ... (omitted) ... the second communication device, upon receiving the second encrypted data with the second communication unit from the first communication device, performs an inverse transform of the transform for encryption performed by the second encryption unit on the second encrypted data with the second decoding unit, thereby configuring the second encrypted data to be the shared data". However, this technical feature does not make a contribution over the prior art in the light of the content disclosed in document 1 (paragraphs [0090]-[0109]), and thus cannot be said to be a special technical feature. Furthermore, there are no other identical or corresponding special technical features between claim 24 and claims 1 and 22-23. Additionally, claim 24 is also not a dependent claim of any of claims 1 and 22-23. Moreover, claim 24 is not substantially identical to or similarly closely related to any of the claims classified as inventions 1-3. Therefore, claim 24 cannot be classified as any of inventions 1-3.

Claim 24 is classified as invention 4 due to having the special technical feature in which "the first communication device and the second communication device are configured such that

the first communication device transmits the first encrypted data to the second communication device by an A path, which is a path on the network, the second communication device transmits the second first encrypted data to the first communication device by the A path, and when the first communication device transmits the second encrypted data to the second communication device, one among two items of data obtained by performing a

## INTERNATIONAL SEARCH REPORT

International application No.

**PCT/JP2023/031253**

| Box No. III | Observations where unity of invention is lacking (Continuation of item 3 of first sheet) |
|---|---|

prescribed inversible transform on the second encrypted data is transmitted by the A path, and the other among the two items of data is transmitted by a B path, which is a path on the network, and

the A path and the B path are set so as not to overlap, except for the starting point and ending point of the two paths".

Furthermore, the sections of claims 25, 27-28, 35-36, and 40-42 citing claim 24 have the same or corresponding special technical feature as claim 24, and thus are classified as invention 4.

Additionally, claim 46 is substantially identical to or similarly closely related to claim 24, and thus is classified as invention 3.

Moreover, the sections of claims 47 citing claim 46 have the same or corresponding special technical feature as claim 46, and thus are classified as invention 4.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
Information on patent family members

International application No.

**PCT/JP2023/031253**

| Patent document cited in search report | | | Publication date (day/month/year) | Patent family member(s) | | | Publication date (day/month/year) |
|---|---|---|---|---|---|---|---|
| US | 2011/0211701 | A1 | 01 September 2011 | WO | 2009/077598 | A1 | |
| | | | | EP | 2243247 | A1 | |
| | | | | FR | 2925244 | A1 | |
| JP | 2006-094105 | A | 06 April 2006 | (Family: none) | | | |
| JP | 2013-537769 | A | 03 October 2013 | US | 2013/0148666 | A1 | |
| | | | | paragraphs [0057]-[0063], fig. 4 | | | |
| | | | | WO | 2012/023292 | A1 | |
| | | | | EP | 2606614 | A1 | |
| | | | | CN | 103069756 | A | |
| JP | 58-181350 | A | 24 October 1983 | US | 4567600 | A | |
| | | | | column 5, line 8 to column 6, line 37 | | | |
| | | | | EP | 85130 | A1 | |
| US | 2016/0182228 | A1 | 23 June 2016 | (Family: none) | | | |

Form PCT/ISA/210 (patent family annex) (January 2015)

**EP 4 597 921 A1**

**Patent documents cited in the description**

- JP 2018174485 A